# EUROPEAN PATENT SPECIFICATION

(11) **EP 3 443 050 B1**
(45) Date of publication and mention of the grant of the patent: **29.01.2020**
(21) Application number: 17719198.8
(22) Date of filing: 10.04.2017
(51) Int. Cl.: C09K 19/52, C09K 19/04

(54) **COMPOSITION FOR NANOENCAPSULATION AND NANOCAPSULES COMPRISING A LIQUID-CRYSTALLINE MEDIUM**
ZUSAMMENSETZUNG ZUR NANOVERKAPSELUNG UND NANOKAPSELN MIT EINEM FLÜSSIGKRISTALLINEN MEDIUM
COMPOSITION POUR NANOENCAPSULATION ET NANOCAPSULES COMPRENANT UN MILIEU CRISTALLIN LIQUIDE

(30) Priority: 13.04.2016 EP 16165174; 20.07.2016 EP 16180292
(43) Date of publication of application: 20.02.2019
(73) Proprietor: Merck Patent GmbH, 64293 Darmstadt (DE)
(72) Inventor: ADLEM, Kevin, Bournemouth BH8 9LS (GB); SAXTON, Patricia, Salisbury SP5 2BE (GB); TUFFIN, Rachel, Chandlersford SO53 4SY (GB); SNOW, Benjamin, Southampton SO16 3NW (GB); NAMUTEBI, Mariam, Southampton SO15 5RU (GB); ALLEN, James, Southampton SO17 2LJ (GB); COOK, Vicki, Southampton SO31 8AT (GB); ARASI, Hassan, Eastleigh SO50 9LG (GB); GOEBEL, Mark, Winchester SO23 8GJ (GB)
(86) International application number: PCT/EP2017/058533
(87) International publication number: WO 2017/178419

(56) References cited:
- EP-A2- 0 204 537
- WO-A1-2004/063309
- WO-A1-2013/110564
- WO-A1-2015/120950
- WO-A1-2016/148431
- US-A- 4 435 047
- US-A1- 2012 113 363
- US-A1- 2014 184 984

## Description

The present invention relates to compositions for nanoencapsulation which comprise a mesogenic medium as in claim 1 and set forth hereinafter, one or more polymerizable compounds and one or more surfactants, to nanocapsules containing the mesogenic medium, to methods of their preparation and to their use in electro-optical devices.

Liquid-crystalline (LC) media are widely used in liquid crystal displays (LCDs), in particular in electro-optical displays having active-matrix or passive-matrix addressing, to display information. In the case of active-matrix displays, individual pixels are usually addressed by integrated, nonlinear active elements, such as transistors, for example thin-film transistors (TFTs), while in the case of passive-matrix displays, individual pixels are usually addressed by the multiplex method, as known from the prior art.

Still commonly used are LCDs of the TN ("twisted nematic") type, which however have the disadvantage of a strong viewing-angle dependence of the contrast. In addition, so-called VA ("vertically aligned") displays are known which have a broader viewing angle. Furthermore, OCB ("optically compensated bend") displays are known which are based on a birefringence effect and have an LC layer with a so-called "bend" alignment. Also known are so-called IPS ("in-plane switching") displays, which contain an LC layer between two substrates, where the two electrodes are arranged on only one of the two substrates and preferably have intermeshed, comb-shaped structures. Furthermore, so-called FFS ("fringe-field switching") displays have been provided, which contain two electrodes on the same substrate, wherein one electrode is structured in a comb-shaped manner and the other is unstructured. A strong, so-called "fringe field" is thereby generated, i.e. a strong electric field close to the edge of the electrodes, and, throughout the cell, an electric field which has both a strong vertical component and also a strong horizontal component.

A further development are displays of the so-called PS ("polymer sustained") or PSA ("polymer sustained alignment") type, for which the term "polymer stabilized" is also occasionally used. In these, a small amount, for example 0.3% by weight, typically < 1% by weight, of one or more polymerizable compounds, preferably polymerizable monomeric compound(s), is added to the LC medium and, after filling the LC medium into the display, is polymerized or crosslinked in situ, usually by UV photopolymerization, optionally while a voltage is applied to the electrodes of the display. The polymerization is carried out at a temperature where the LC medium exhibits a liquid crystal phase, usually at room temperature. The addition of polymerizable mesogenic or liquid-crystalline compounds, also known as reactive mesogens or "RMs", to the LC mixture has proven particularly suitable.

In addition, displays based on polymer dispersed liquid crystal (PDLC) films have been described, see e.g. US 4,688,900. In such PDLC films usually micrometer-sized droplets (microdroplets) of LC medium are randomly distributed in a polymer matrix. The LC domains in these phase-separated systems have a size which can result in strong scattering of light. PDLC films are usually prepared using methods of polymerization-induced phase separation (PIPS), wherein phase separation is reaction-induced. Alternatively, PDLC films may be prepared based on temperature-induced phase separation (TIPS) or solvent-induced phase separation (SIPS). Besides PDLC films, so-called polymer network liquid crystal (PNLC) systems are known, wherein a polymer network is formed in a continuous LC phase.

Furthermore, micrometer-sized encapsulated LC materials (microcapsules) for use in displays have been described, wherein the microcapsules are prepared by forming an aqueous emulsion of LC material with an immiscible binder such as polyvinyl alcohol (PVA) which serves as the encapsulating medium, see e.g. US 4,435,047.

A method for microencapsulation of electro-optical fluid using polymerization of at least partly solubilized polymer precursors and crosslinking is described in WO 2013/110564 A1.

A further method for encapsulation of liquid crystals with a narrow capsule size range is described in WO 2004/063309 A1, for instance.

In addition to the above display types, recently LCDs have been proposed which include a layer comprising nanocapsules, wherein the nanocapsules contain liquid crystal molecules. For example, a configuration of an LCD device arranged with a layer which contains such nanocapsules in a so-called buffer material is described in US 2014/0184984 A1.

Another LCD device having nanocapsules arranged therein is described in US 2012/0113363 A1.

Kang and Kim in Optics Express, 2013, Vol. 21, pp. 15719-15727 describe optically isotropic nanoencapsulated LCs for use in displays based on the Kerr effect and in-plane switching. Nanocapsules having a mean diameter of approximately 110 nm are prepared by adding a nematic LC to a mixture of nonionic polymeric surfactant and PVA, which serves as shell-forming polymer and water-soluble emulsifier, dissolved in aqueous solution, forming a nanoemulsion, heating up of the nanoemulsion to a cloud point and stirring to phase separate PVA around the LC nanodroplets, and crosslinking of the polymeric shell with crosslinking agents such as dialdehydes. Furthermore, a coating solution containing the prepared LC nanocapsules, hydrophilic PVA as a binder and ethylene glycol as a plasticizer is described.

In WO 2009/085082 A1 porous nanoparticles made of crosslinked polymer are described which can act like a sponge to imbibe LC substances, having a possible application as phase retardation films in an LCD.

There is a need in the art for nanocapsules with improved, and optionally tunable, electro-optical and physical properties, in particular for use in electro-optical devices. Moreover, there exists a need for an improved, facile process which provides ease of fabrication of such nanocapsules. In addition, there is a need for a composition which is useful in the process.

An object of the present invention is therefore to provide improved compositions which allow favourable performance during encapsulation, while further providing favourable characteristics in the resultant nanocapsules, as well as to provide improved nanocapsules comprising mesogenic media. It is a further object to provide an improved method for preparing nanocapsules comprising mesogenic media. In particular, it is an object to provide the compositions and the nanocapsules such that the mesogenic media contained in the nanocapsules have suitably high Δε and high electrical resistance as well as suitably high Δn and favourable values of the electro-optical parameters, while furthermore particularly providing relatively low rotational viscosity and favourable reliability. Moreover, it is an object that the mesogenic media comprised in the nanocapsules exhibit broad and stable LC, in particular nematic, phase ranges, low melting points and a relatively high clearing point, and a suitably high voltage holding ratio. It is a further object to provide stable and reliable nanocapsules and composite systems comprising the nanocapsules and binder which are useful in light-modulation elements and electro-optical devices, in particular having a suitably low threshold voltage, favourably fast response times, improved low-temperature behaviour and an improvement in the operating properties at low temperatures, a minimal temperature dependence of the electro-optical parameters such as, for example, the threshold voltage, and a high contrast. It is furthermore an object to provide nanocapsules and composite systems in light-modulation elements and electro-optical devices which have a favourably wide viewing angle range and which are substantially insensitive to external forces such as from touching. Further objects of the present invention are immediately evident to the person skilled in the art from the following detailed description.

The objects are solved by the subject-matter defined in the independent claims, while preferred embodiments are set forth in the respective dependent claims and are further described below.

The present invention in particular provides the following items including main aspects, preferred embodiments and particular features, which respectively alone and in combination contribute to solving the above object and eventually provide additional advantages.

A first aspect of the present invention provides a composition for nanoencapsulation, wherein the composition comprises
(i) a mesogenic medium which comprises one or more compounds of formula I

   R-A-Y-A'-R' I

   wherein
   - R and R': denote, independently of one another, a group selected from F, CF₃, OCF₃, CN, and straight-chain or branched alkyl or alkoxy having 1 to 15 carbon atoms or straight-chain or branched alkenyl having 2 to 15 carbon atoms which is unsubstituted, monosubstituted by CN or CF₃ or mono- or polysubstituted by halogen, preferably F, and wherein one or more CH₂ groups may be, in each case independently of one another, replaced by -O-, -S-, -CO-, -COO-, -OCO-, -OCOO- or -C=C- in such a manner that oxygen atoms are not linked directly to one another,
   - A and A': denote, independently of one another, a group selected from -Cyc-, -Phe-, -Cyc-Cyc-, -Cyc-Phe-, -Phe-Phe-, -Cyc-Cyc-Cyc-, -Cyc-Cyc-Phe-, -Cyc-Phe-Cyc-, -Cyc-Phe-Phe-, -Phe-Cyc-Phe-, -Phe-Phe-Phe- and the respective mirror images thereof, wherein Cyc is trans-1,4-cyclohexylene, in which one or two non-adjacent CH₂ groups may be replaced by O, and wherein Phe is 1,4-phenylene, in which one or two non-adjacent CH groups may be replaced by N and which may be substituted by one or two F, and
   - Y: denotes single bond, -COO-, -CH₂CH₂-, -CF₂CF₂-, -CH₂O-, -CF₂O-, -CH=CH-, -CF=CF- or -C=C-,
(ii) one or more polymerizable compounds, and
(iii) one or more surfactants,
characterised in that one or more compounds of formula I are selected from the compounds of formulae la, Ib and Ic as in claim 1 and defined below.

It has surprisingly been found that by providing compositions according to the invention which comprise a combination of the components (i), (ii) and (iii) as set forth above it is possible to prepare nanocapsules containing a mesogenic medium in an improved and surprisingly facile process, wherein the compositions exhibit a favourable performance in the process. In addition, these compositions allow to obtain nanocapsules which provide significant benefits in terms of their physical and chemical attributes, in particular with respect to their electro-optical properties and their suitability in light-modulation elements and electro-optical devices.

Another aspect of the invention relates to nanocapsules which respectively comprise a polymeric shell, and a core containing a mesogenic medium which comprises one or more compounds of formula I as set forth above.

It has surprisingly been found that stable and reliable nanocapsules can be provided which contain a mesogenic medium with favourable electro-optical properties as well as suitable reliability. It was recognized that the nanocapsules according to the invention can be obtained by or respectively are obtainable from a process based on in situ polymerization, and in particular based on PIPS in a nanoemulsion. Thus, unexpectedly a light modulating material which comprises nano-sized droplets (nanodroplets) of LC as a core encapsulated by a polymeric shell can be provided, wherein the nanocapsules as a whole and also the mesogenic medium contained therein have suitable and even improved properties.

It is thus possible to confine discrete amounts of LC material in nanovolumes, which are stably contained and individually addressable and which can be mounted or dispersed in different environments. The LC material nanoencapsulated by a polymeric shell can be easily applied to and supported from a single substrate, which may be flexible and wherein the layer or film thickness can be variable or respectively varied. The LC medium which is surrounded, i.e. enclosed by a polymeric wall is operable in at least two states.

However, the nanodroplets each provide only a comparatively small volume of LC. It was thus presently realized to preferably and favourably provide the LC component having a suitably large Δn, while furthermore exhibiting good transmission and good reliability, including in particular a suitable voltage holding ratio (VHR) and thermal and UV stability as well as relatively small rotational viscosity. Furthermore, the LC component can favourably be provided with suitable and reasonably high values for the dielectric anisotropy Δε to obtain relatively small threshold voltages in electro-optical device applications.

It was furthermore advantageously recognized that in the nanocapsules the interface area between the LC core and the polymeric shell is relatively large compared to the provided nanovolume and that therefore the respective properties of the polymeric shell component and the LC core component and their interrelations need to be particularly taken into consideration. In the nanocapsules according to the invention the interactions between the polymer and the LC component can favourably and suitably be set and adjusted, which is primarily obtainable on account of the provided composition for nanoencapsulation according to the invention as well as the control and adaptability of the provided process of preparation.

For example, the interface interactions can favour or discourage the formation of any alignment or orientation in the LC nanodroplets.

Considering the small size of the nanocapsules, which can be subwavelength of visible light and even smaller than λ/4 of visible light, the capsules may advantageously be only very weak scatterers of visible light.

Furthermore, in the absence of an electric field and depending on the interface interactions, the LC medium may in one case form a disordered phase with little or no orientation in the nanosized volumes, in particular an isotropic phase, which can for example provide excellent viewing angle behaviour. Moreover, having intrinsically an isotropic phase in the unpowered or non-addressed state can be advantageous in device applications in that a very good dark state may be realized, in particular when using polarizers.

As opposed to an occurence of for example a radial or bipolar orientation, it is believed that in one case such orientation may not happen, or at least be limited, on account of the small volume provided in the nanocapsules.

Alternatively, and as preferred in a particular embodiment, arrangement may occur, wherein in particular the interface interaction(s) can be used to induce or influence alignment and orientation in the LC medium, for example by setting or adjusting anchoring strengths with the capsule wall. In such a case uniform, planar, radial or bipolar alignment may occur. When such nanocapsules having respectively and individually LC orientation or alignment are randomly dispersed, overall an optical isotropy may be observed.

The spherical or spheroidal geometry along with curvature set a constraint or boundary condition for the nematic configuration as well as the alignment of the liquid crystal molecules, which can further depend on the anchoring of the LC at the capsule surface, the elastic properties and the bulk and surface energetics as well as the size of the capsules. The electro-optical response in turn is dependent on the LC ordering and orientation in the nanocapsules.

Furthermore, any possible absence or presence of alignment and orientation of the encapsulated LC medium is independent of the substrate such that there is no need to provide an alignment layer on the substrate.

In particular, when the LC in the capsules has a radial configuration and the particle size is below the wavelength of light, the nanocapsules are substantially optically isotropic. This allows to realize an excellent dark state when two crossed polarizers are used. Upon switching with an electric field, in particular in-plane switching, an axial configuration which is optically anisotropic can be obtained, where the induced birefringence causes transmission of light.

In a further aspect according to the invention there is provided a method for preparing nanocapsules which comprises the steps of
(a) providing an aqueous mixture which comprises the composition according to the invention,
(b) agitating, preferably mechanically agitating, the provided aqueous mixture to obtain nanodroplets comprising the composition, and in particular the mesogenic medium, according to the invention dispersed in an aqueous phase, and
(c) subsequent to step (b) polymerizing the one or more polymerizable compounds according to the invention to obtain nanocapsules each comprising a polymeric shell and a core which contains the mesogenic medium as set forth above and below.

Optionally, after obtaining the nanocapsules the aqueous phase can be depleted, removed or exchanged, wherein for example a centrifugation or filtration method can be used.

While the preparation of the nanocapsules according to the invention is not limited thereto and which may also be prepared by other methods, e.g. by encapsulation with a preformed polymer or by a solute co-diffusion method, in the present invention it was advantageously recognized that nanocapsules comprising LC medium can be favourably prepared by a process using in situ polymerization, and which in particular is based on polymerization induced phase separation.

Furthermore, it was recognized that, instead of providing a ready-made polymer to encapsulate LC medium, encapsulation of the mesogenic medium on the nanoscale can favourably be performed starting in situ from polymer precursors. Thus the use of a preformed polymer, and also an emulsifier specifically provided therewith, can favourably be avoided. In this respect the use of a premade polymer as given may make formation and stabilization of a nanoemulsion difficult while it furthermore may limit the adjustability of the overall process.

In the process according to the invention the polymerizable compound(s) is (are) at least partially soluble or respectively at least partially solubilized in the phase comprising the mesogenic medium, preferably the one or more polymerizable compounds and the mesogenic medium are intimately mixed, in particular homogeneously mixed, wherein this mixture is in a later stage nanophase-separated through PIPS, i.e. polymerization-induced phase separation. The temperature can be set and adjusted to favourably influence the solubility.

For setting and influencing the solubility, solubilization and/or mixing optionally and preferably an organic solvent may be added to the composition, which can furthermore favourably influence phase separation during polymerization.

It is advantageously observed that the provided LC medium as set forth above and below is suitably stable with respect to the encapsulation process, in particular the polymerization, and the conditions associated therewith, such as exposure to heat or UV light, e.g. from a UV lamp in the wavelength range from 300 nm to 380 nm. Considering that there is no need to carry out the polymerization between glass substrates, the choice of wavelength is favourably not limited by the UV cutoff of glass, but can be rather set e.g. in view of the material properties and stability of the composition. It is also possible to use light including both the UV and the visible spectrum, e.g. by using a lamp in the wavelength range from 300 nm to 600 nm

The present process is based on a combination of nanodispersion and PIPS, and it provides significant advantages in terms of providing a controlled and adaptable preparation method. The nanocapsules obtained by or respectively obtainable from this process show suitable and tunable particle size, while at the same time giving favourably high particle size uniformity, i.e. favourably low polydispersity, and in turn advantageously homogeneous product properties. It was surprisingly found that the setting of a suitable capsule nanosize while furthermore observing and achieving a low polydispersity can have a favourable influence on the operating voltage. Considering the controllability and adaptability of the process, the electro-optical parameters of the obtained nanocapsules and in particular of the LC medium contained therein can be favourably set and tuned.

It was recognized that the respective miscibilities, solubilities and compatibilities of the various constituents, or a possible lack thereof, in particular of the LC material, the one or more polymerizable compounds as well as the dispersion medium and the forming and formed polymer play an important role, in particular the mixing free energies with the mixing interaction energies and mixing entropies.

Furthermore, it was noted that the encapsulation process is based on polymerization reaction, i.e. that a specific dynamic process is underlying the capsule formation. In particular, it is presently generally observed that the polymerizable compound(s) used for the encapsulation has (have) a suitable miscibility with the LC medium, while the formed capsule shell polymer exhibits a suitably low solubility with the LC material.

In the process according to the invention polymerization conversion or completion can be surprisingly high and the amount of residual unreacted polymerizable compound favourably low. This can ensure that the properties and performance of the LC medium in the formed capsules are not or only minimally affected by residual reactive monomers.

It was furthermore found that before polymerization the provision of surfactant can favourably promote formation and subsequently stabilization, in particular ionic and/or steric stabilization, of discrete nanodroplets in the dispersion medium, in particular the aqueous dispersion medium, wherein the nanodroplets comprise the LC medium and the polymerizable compound(s). Mechanical agitation, in particular high-shear mixing, can suitably yield or further effect dispersion, in particular emulsion, and homogenization, and likewise promote nanodroplet formation.

Both mechanical agitation and the provision of surfactant thus can play advantageous roles in obtaining nanodroplets and in turn nano-sized capsules, in particular nanocapsules with a substantially uniform size distribution or respectively low polydispersity.

The small and uniform size of the nanocapsules can be beneficial in terms of obtaining fast and uniform switching in response to an applied electric field, preferably giving low millisecond or even sub-millisecond response times.

Furthermore, phase separation and the properties of the formed polymeric shell, in particular stability and immiscibility with LC component, can be advantageously influenced by optionally and preferably crosslinking the forming or respectively formed polymer chains. However, also without such crosslinking the capsule properties can already be sufficiently good.

Another aspect of the invention relates to a composite system which comprises the nanocapsules according to the invention and one or more binders.

It was found that the combination of the nanocapsules with binder material(s) can suitably influence and increase the processibility and applicability of the light modulating material, in particular in view of coating or printing on substrates and film formation. The one or more binders can act as both dispersant and adhesion or binding agent, and furthermore provide suitable physical and mechanical stability while maintaining or even promoting flexibility. Furthermore, density or concentration of the capsules can advantageously be adjusted by varying the amount of binder provided.

By having the possibility to concentrate the nanoparticles or capsules as prepared, for example by centrifugation, filtration or drying, and to redisperse them, it is possible to set or adjust the density or proportion of the particles in a film or layer independently of the concentration as obtained from the original production process.

A further aspect of the invention provides an electro-optical device which comprises the nanocapsules according to the invention or the composite system according to the invention.

By providing the nanoencapsulated LC medium according to the invention, optionally combined with a binder material, in an electro-optical device several significant advantages are obtainable. These include, for example, good mechanical stability, flexibility and insensitivity to external applied forces or respectively pressure such as from touch as well as further favourable properties regarding switching speed, transmittance, dark state, viewing angle behaviour and threshold voltage. Further advantages rest in the possible use of flexible substrates and the possibility to vary film or layer thickness and the tolerability of film thickness deviations or variance. In this respect simple dropping, coating or printing methods can be used to apply the light-modulating material to the substrate.

Furthermore, there is no need to provide an alignment layer, such as conventionally used polyimide (PI) alignment layers, on the substrate and/or to rub the substrate surface.

When the two electrodes in the device are provided on the same substrate such as in the case of IPS or FFS a single substrate can be sufficient to provide functionality and stability or respectively support, making the provision of an opposing substrate merely optional. However such opposing substrate may still be beneficial, for example in terms of providing further optical elements or physical or chemical protection.

Without limiting the present invention thereby, in the following the invention is illustrated by the detailed description of the aspects, embodiments and particular features, and particular embodiments are described in more detail.

The term "liquid crystal" (LC) relates to materials or media having liquid-crystalline mesophases in some temperature ranges (thermotropic LCs) or in some concentration ranges in solutions (lyotropic LCs). They contain mesogenic compounds.

The terms "mesogenic compound" and "liquid crystal compound" mean a compound comprising one or more calamitic (rod- or board/lath-shaped) or discotic (disc-shaped) mesogenic groups, i.e. groups with the ability to induce liquid-crystalline phase or mesophase behaviour.

The LC compounds or materials and the mesogenic compounds or materials comprising mesogenic groups do not necessarily have to exhibit a liquid-crystalline phase themselves. It is also possible that they show liquid-crystalline phase behaviour only in mixtures with other compounds. This includes low-molecular-weight non-reactive liquid-crystalline compounds, reactive or polymerizable liquid-crystalline compounds, and liquid-crystalline polymers.

A calamitic mesogenic compound is usually comprising a mesogenic core consisting of one or more aromatic or non-aromatic cyclic groups connected to each other directly or via linkage groups, optionally comprising terminal groups attached to the ends of the mesogenic core, and optionally comprising one or more lateral groups attached to the long side of the mesogenic core, wherein these terminal and lateral groups are usually selected e.g. from carbyl or hydrocarbyl groups, polar groups like halogen, nitro, hydroxy, etc., or polymerizable groups.

For the sake of simplicity, the term "liquid crystal" material or medium is used for both liquid crystal materials or media and mesogenic materials or media, and vice versa, and the term "mesogen" is used for the mesogenic groups of the material.

The term "non-mesogenic compound or material" means a compound or material that does not contain a mesogenic group as defined above.

As used herein, the term "polymer" will be understood to mean a molecule that encompasses a backbone of one or more distinct types of repeating units (the smallest constitutional unit of the molecule) and is inclusive of the commonly known terms "oligomer", "copolymer", "homopolymer" and the like. Further, it will be understood that the term polymer is inclusive of, in addition to the polymer itself, residues from initiators, catalysts, and other elements attendant to the synthesis of such a polymer, where such residues are understood as not being covalently incorporated thereto. Further, such residues and other elements, while normally removed during post-polymerization purification processes, are typically mixed or co-mingled with the polymer such that they generally remain with the polymer when it is transferred between vessels or between solvents or dispersion media.

The term "(meth)acrylic polymer" as used in the present invention includes a polymer obtained from acrylic monomers, a polymer obtainable from methacrylic monomers, and a corresponding co-polymer obtainable from mixtures of such monomers.

The term "polymerization" means the chemical process to form a polymer by bonding together multiple polymerizable groups or polymer precursors (polymerizable compounds) containing such polymerizable groups.

Polymerizable compounds with one polymerizable group are also referred to as "monoreactive" compounds, compounds with two polymerizable groups as "direactive" compounds, and compounds with more than two polymerizable groups as "multireactive" compounds. Compounds without a polymerizable group are also referred to as "non-reactive" or "non-polymerizable" compounds.

The terms "film" and "layer" include rigid or flexible, self-supporting or freestanding films or layers with more or less pronounced mechanical stability, as well as coatings or layers on a supporting substrate or between two substrates.

Visible light is electromagnetic radiation that has a wavelength in a range from about 400 nm to about 745 nm. Ultraviolet (UV) light is electromagnetic radiation with a wavelength in a range from about 200 nm to about 400 nm.

In a first aspect the invention relates to compositions for nanoencapsulation, i.e. for the formation of nanocapsules, wherein the formed capsule shell of each capsule contains the LC medium in a nano-sized volume. The compositions comprise the components (i), (ii) and (iii) as defined above. In particular, therein is provided *inter alia* a mesogenic medium which comprises one or more compounds of the formula I.

It was surprisingly found that the compositions as provided according to the invention allow to prepare advantageous nanocapsules containing a mesogenic medium in a favourable process, in particular a process using in situ polymerization, especially a process which is based on PIPS, wherein the compositions have a favourable performance in the process. Furthermore, these compositions allow to obtain nanocapsules which provide significant benefits in terms of their physical and chemical attributes, in particular with respect to their electro-optical properties and their suitability in electro-optical devices. The inventive compositions are thus useful in the preparation of nanocapsules.

The compositions can be provided by suitably mixing or blending the components.

In a preferred embodiment the composition according to the invention comprises the LC medium in an amount, based on the overall composition, from 5% by weight to 95% by weight, more preferably from 15% by weight to 75% by weight, in particular from 25% by weight to 65% by weight.

In a preferred embodiment the composition according to the invention further comprises one or more organic solvents. It was found that the provision of organic solvent can provide additional benefits in the process for preparing the inventive nanocapsules. In particular, the one or more organic solvents can contribute to setting or adapting the components solubilities or respectively miscibilities. The solvent may act as a suitable cosolvent, wherein the solvent power of other organic constituents may be enhanced or influenced. Furthermore, the organic solvent(s) can have a favourable influence during phase separation induced by the polymerization of the polymerizabe compound(s). The provision of the organic solvent(s) can contribute to obtaining improved separation of LC material and the prepared polymer component, and it may further influence, in particular reduce, the anchoring energy at the interface.

In this respect as organic solvent(s) standard organic solvents can be used. The solvent(s) can be selected, for example, from aliphatic hydrocarbons, halogenated aliphatic hydrocarbons, aromatic hydrocarbons, halogenated aromatic hydrocarbons, alcohols, including fluorinated alcohols, glycols or their esters, ethers, esters, lactones, ketones, and the like, more preferably from diols and n-alkanes. It is also possible to use binary, ternary or higher mixtures of the above solvents.

In a preferred embodiment the solvent is selected from one or more of cyclohexane, tetradecafluorohexane, dodecane, tridecane, tetradecane, pentadecane, hexadecane, perfluorohexadecane, 1,5-dimethyltetralin, 3-phenoxytoluene, heptadecane 2-isopropoxy ethanol, octyldodecanol, perfluorooctanol, pentafluorooctanol, pentadecafluorooctanol, 1,2-ethanediol, 1,2-propanediol, 1,3-butanediol, 1,4-butanediol, pentanediol, in particular 1,4-pentanediol, hexanediol, in particular 1,6-hexanediol, heptanediol, octanediol, hydroxyl-2-pentanone, triethanolamine, methyl octanoate, ethyl acetate, trimethylsilyl trifluoroacetate and butyl acetate. It is particularly preferable that the organic solvent used comprises hexadecane, methyl octanoate, ethyl acetate or 1,4-pentanediol, in particular is hexadecane, methyl octanoate, ethyl acetate or 1,4-pentanediol. In a further embodiment a combination comprising hexadecane and 1,4-pentanediol is used.

The organic solvent(s), in particular hexadecane, is (are) preferably added in an amount, based on the overall composition, from 0.1% by weight to 35% by weight, more preferably from 1% by weight to 25% by weight, in particular from 3% by weight to 17% by weight.

The organic solvent can enhance solubility or respectively solubilisation, or dilute other organic components and may contribute to tuning the viscosity.

In an embodiment the organic solvent acts as a hydrophobic agent. Its addition to the dispersed phase of the nano- or miniemulsion can influence, in particular increase, the osmotic pressure in the nanodroplets. This can contribute to stabilizing the "oil-in-water" emulsion by suppressing Ostwald ripening. Preferable organic solvents serving as hydrophobic agents have a solubility in water which is lower than the solubility of the liquid crystal in water, while they are soluble in the liquid crystal.

In the composition according to the invention one or more polymerizable compounds are provided as the precursors for the polymeric shell or wall containing or respectively surrounding the LC medium.

The polymerizable compounds have at least one polymerizable group. The polymerizable group is preferably selected from CH₂=CW¹-COO-, 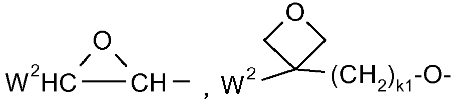 , CH₂=CW²-(O)ₖ₁-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, Phe-CH=CH-, HOOC-, OCN-, with W¹ being H, CI, CN, phenyl or alkyl with 1 to 5 C atoms, in particular H, CI or CH₃, W² and W³ being independently of each other H or alkyl with 1 to 5 C atoms, in particular H, methyl, ethyl or n-propyl, Phe being 1,4-phenylene and k₁ and k₂ being independently of each other 0 or 1.

The one or more polymerizable compounds are chosen such that they have a suitable and sufficient solubility in the LC component or phase. Moreover, they need to be susceptible to the polymerization conditions and environment. In particular, the polymerizable compound(s) can undergo a suitable polymerization with a high conversion rate, leading to a favourably low amount of residual unreacted polymerizable compound after the reaction. This can provide benefits in terms of stability and performance of the LC medium. Furthermore, the polymerizable component is chosen such that the polymer forming therefrom is suitably phase-separating or respectively that the polymer formed thereform is phase-separated to constitute the polymeric capsule shell. In particular, solubility of the LC component in the shell polymer and swelling or gelling of the formed polymer shell are favourably avoided or respectively minimized, wherein the amount and also the constitution of the LC medium remains substantially constant in the formed capsules. Thus favourably preferential solubility of any LC compound of the LC material in the wall is minimized or avoided.

Swelling or even bursting of the nanocapsules and undesirable leakage of LC material from the capsules are favourably minimized or even completetly avoided by providing a suitably tough polymer shell.

The polymerization or curing time depends, *inter alia,* on the reactivity and the amount of the polymerizable material, the thickness of the formed capsule shell and, if present, the type and amount of polymerization initiator as well as the reaction temperature and/or the power of the radiation, e.g. of the UV lamp. The polymerization or curing times and conditions may be chosen such as to e.g. obtain a fast process for polymerization, or alternatively to e.g. obtain a slower process wherein however the completeness of conversion and separation of the polymer may be beneficially influenced. It can thus be preferred to have short polymerization and curing times, for example below 5 minutes, while in an alternative embodiment longer polymerization times, such as more than one hour or even at least three hours, can be preferred.

In an embodiment non-mesogenic polymerizable compounds, i.e. compounds that do not contain a mesogenic group, are used. However, they exhibit sufficient and suitable solubility or respectively miscibility with the LC component. In a preferred embodiment an organic solvent is additionally provided.

In another aspect, polymerizable mesogenic or liquid-crystalline compounds, also known as reactive mesogens (RMs), are used. These compounds contain a mesogenic group and one or more polymerizable groups, i.e. functional groups which are suitable for polymerization.

Optionally, in an embodiment the polymerizabe compound(s) according to the invention comprise(s) only reactive mesogen(s), i.e. all the reactive monomers are mesogens. Alternatively, RMs can be provided in combination with one or more non-mesogenic polymerizable compounds. The RMs can be monoreactive or di- or multireactive. RMs can exhibit favourable solubility or respectively miscibility with the LC medium. However, it is further devised that the polymer forming or respectively formed therefrom shows suitable phase separation behaviour. Preferred polymerizable mesogenic compounds comprise at least one polymerizable group as a terminal group and a mesogenic group as a core group, further preferably comprising a spacer and/or a linking group between the polymerizable group and the mesogenic group. In an embodiment 2-methyl-1,4-phenylene-bis[4[3(acryloyloxy)propyloxy]benzoate (RM 257, Merck KGaA) is used. Alternatively or additionally, one or more lateral substituents of the mesogenic group may also be polymerizable groups.

In yet another embodiment, the use of mesogenic polymerizable compounds is avoided.

In a preferred embodiment the one or more polymerizable compounds are selected from vinylchloride, vinylidenechloride, acrylnitriles, methacrylnitriles, acrylamides, methacrylamides, methyl-, ethyl-, n- or tert.-butyl-, cyclohexyl-, 2-ethylhexyl-, phenyloxyethyl-, hydroxyethyl-, hydroxypropyl-, 2-5 C-alkoxyethyl-, tetrahydrofurfurylacrylates or methacrylates, vinylacetates, -propionates, -acrylates, -succinates, N-vinylpyrrolidones, N-vinylcarbazoles, styrenes, divinylbenzenes, ethylenediacrylates, 1,6-hexanediolacrylates, bisphenol-A-diacrylates and - dimethacrylates, trimethylylpropanediacrylates, trimethylolpropanetriacrylates, pentaerythrittriacrylates, triethyleneglycoldiacrylates, ethyleneglycoldimethacrylates, tripropyleneglycoltriacrylates, pentaerythritoltriacrylates, pentaerythritoltetraacrylates, ditrimethylpropanetetraacrylates or dipentaerythritolpenta- or hexaacrylates. Also thiol-enes are preferred such as, for example, the commercially available product Norland 65 (Norland Products). It is also possible to use silane-based or siloxane-based reactive monomers.

The polymerizable or reactive group is preferably selected from a vinyl group, an acrylate group, a methacrylate group, a fluoroacrylate group, an oxetane group or an epoxy group, especially preferably an acrylate group or a methacrylate group.

Preferably the one or more polymerizable compounds are selected from acrylates, methacrylates, fluoroacrylates and vinyl acetate, wherein the composition more preferably further comprises one or more direactive and/or trireactive polymerizable compounds, preferably selected from diacrylates, dimethacrylates, triacrylates and trimethacrylates. In a preferred embodiment one or more polymerizable compounds of the polymerizable compounds are fluorinated, wherein particularly preferably the acrylate compounds and the methacrylate compounds are fluorinated acrylates and fluorinated methacrylates.

In an embodiment the one or more polymerizable compounds (ii) as set forth above comprise polymerizable groups selected from one, two or more acrylate, methacrylate and vinyl acetate groups, wherein the compounds preferably are non-mesogenic compounds.

In a preferred embodiment the composition according to the invention comprises one or more monoacrylates, preferably added in an amount, based on the overall composition, from 0.1% by weight to 75% by weight, more preferably from 0.5% by weight to 50% by weight, in particular from 2.5% by weight to 25% by weight. Particularly preferred monoreactive compounds are selected from methyl acrylate, ethyl acrylate, propyl acrylate, isopropyl acrylate, butyl acrylate, t-butyl acrylate, pentyl acrylate, hexyl acrylate, nonyl acrylate, 2-ethyl-hexyl acrylate, 2-hydroxy-ethyl acrylate, 2-hydroxy-butyl acrylate, 2,3-dihydroxypropyl acrylate, hexafluoroisopropylacrylate, 1,1-dihydroperfluoropropyl acrylate, perfluorodecylacrylate, pentafluoropropylacrylate, heptafluorobutylacrylate, 1H,1H,2H,2H- perfluorodecylacrylate, 3-tris(trimethylsiloxy)silylpropyl acrylate, stearylacrylate and glycidyl acrylate.

Additionally or alternatively vinyl acetate may be added.

In another preferred embodiment the composition according to the invention comprises, optionally in addition to the above monoacrylates, one or more monomethacrylates, preferably added in an amount, based on the overall composition, from 0.1% by weight to 75% by weight, more preferably from 0.5% by weight to 50% by weight, in particular from 2.5% by weight to 25% by weight. Particularly preferred monoreactive compounds are selected from methyl methacrylate, ethyl methacrylate, propyl methacrylate, ispropyl methacrylate, butyl methacrylate, t-butyl methacrylate, pentyl methacrylate, hexyl methacrylate, nonyl methacrylate, 2-ethyl-hexyl methacrylate, 2-hydroxy-ethyl methacrylate, 2-hydroxy-butyl methacrylate, 2,3-dihydroxypropyl methacrylate, hexafluoroisopropylmethacrylate, 1,1-dihydroperfluoropropyl methacrylate, perfluorodecylmethacrylate, pentafluoropropylmethacrylate, heptafluorobutylmethacrylate, 1H,1H,2H,2H-perfluorodecylmethacrylate, 3-tris(trimethylsiloxy)silylpropyl methacrylate, stearylmethacrylate, glycidyl methacrylate, adamantyl methacrylate and isobornyl methacrylate.

It is particularly preferred that at least one crosslinking agent is added to the composition, i.e. a polymerizable compound containing two or more polymerizable groups. Crosslinking of the polymeric shell in the prepared particle can provide additional benefits, especially with respect to further improve stability and containment, and to tune or respectively reduce susceptibility to swelling, in particular swelling due to solvent. In this respect direactive and multireactive compounds can serve to form polymer networks of their own and/or to crosslink polymer chains formed substantially from polymerizing monoreactive compounds.

Conventional crosslinkers known in the art can be used. It is particularly preferred to additionally provide direactive or multireactive acrylates and/or methacrylates, preferably added in an amount, based on the overall composition, from 0.1% by weight to 75% by weight, more preferably from 0.5% by weight to 50% by weight, in particular from 2.5% by weight to 25% by weight. Particularly preferred compounds are selected from ethylene diacrylate, propylene diacrylate, butylene diacrylate, pentylene diacrylate, hexylene diacrylate, glycol diacrylate, glycerol diacrylate, pentaerythritol tetraacrylate, ethylene dimethacrylate, also known as ethyleneglycol dimethacrylate, propylene diamethcrylate, butylene dimethacrylate, pentylene dimethacrylate, hexylene dimethacrylate, tripropylene glycol diacrylate, glycol dimethacrylate, glycerol dimethacrylate, trimethylpropane trimethacrylate and pentaerythritol triacrylate.

The ratio of monoreactive monomers and di- or multireactive monomers can be favourably set and adjusted to influence the polymer make-up of the shell and its properties.

The composition according to the invention comprises one or more surfactants. In an embodiment, the surfactant(s) can be prepared or provided separately in an initial step, and then added to the other components. In particular, the surfactant(s) can be prepared or provided as an aqueous mixture or composition, which is then added to the other components comprising the mesogenic medium and the polymerizable compound(s) as set forth above and below. Particularly preferably, the one or more surfactants are provided as aqueous surfactant(s).

The surfactant(s) can be useful in lowering the surface or interfacial tension and in promoting emulsifying and dispersion.

Conventional surfactants known in the art can be used, including anionic surfactants, for example sulfate, e.g. sodium lauryl sulfate, sulfonate, phosphate and carboxylate surfactants, cationic surfactants, for example secondary or tertiary amine and quaternary ammonium salt surfactants, zwitterionic surfactants, for example betaine, sultaine and phospholipid surfactants, and nonionic surfactants, for example long chain alcohol and phenol, ether, ester or amide nonionic surfactants.

In a preferred embodiment according to the invention nonionic surfactant is used. The use of nonionic surfactant can provide benefits during the process of preparing the nanocapsules, in particular with respect to dispersion formation and stabilization as well as in PIPS. It was furthermore recognized that it can be advantageous to avoid charged surfactants in case surfactant, for example residual surfactant, is comprised in the formed nanocapsules. The use of nonionic surfactant and the avoidance of ionic surfactant can thus be beneficial in terms of stability, reliability and the electro-optical characteristics and performance of the nanocapsules, also in the composite system and electro-optical devices.

Particular preference is given to polyethoxylated nonionic surfactant. Preferable compounds are selected from the group of polyoxyethylene glycol alkyl ether surfactants, polyoxypropylene glycol alkyl ether surfactants, glucoside alkyl ether surfactants, polyoxyethylene glycol octylphenol ether surfactants such as Triton X-100, polyoxyethylene glycol alkylphenol ether surfactants, glycerol alkyl ester surfactants, polyoxyethylene glycol sorbitan alkyl ester surfactants such as polysorbate, sorbitan alkyl ester surfactants, cocamide monoethanolamine, cocamide diethanolamine and dodecyldimethylamine oxide.

In a particularly preferred embodiment the used surfactant(s) is (are) selected from polyoxyethylene glycol alkyl ether surfactants, which comprise commercially available Brij® agents. Particular preference is given to a surfactant which comprises, more preferably consists of, tricosaethylene glycol dodecyl ether. In a very particularly preferred embodiment the commercially available Brij® L23 (Sigma-Aldrich), also referred to as Brij 35 or polyoxyethylene (23) lauryl ether, is used.

Preferably, surfactant is provided in the composition in an amount, based on the overall composition, of less than 25% by weight, more preferably less than 20% by weight, and in particular less than 15% by weight.

When, in accordance with a preferred embodiment, the surfactant is provided as a prepared aqueous mixture, the amount of water is not considered to contribute to the overall composition in terms of weight, i.e. water is excepted in this respect.

Also in the process for preparing the nanocapsules according to the invention polymeric surfactants or surface active polymers or block copolymers can be used.

In a particular embodiment the use of such polymeric surfactants or surface active polymers is however avoided.

According to an aspect of the invention polymerizable surfactant, i.e. surfactant comprising one or more polymerizable groups, can be used.

Such polymerizable surfactant can be used alone, i.e. as the only surfactant provided, or in combination with non-polymerizable surfactant. In an embodiment, a polymerizable surfactant is provided in addition and in combination with a non-polymerizable surfactant. This optional provision of polymerizable surfactant can provide the combined benefits of contributing to suitable droplet formation and stabilization as well as to the formation of stable polymeric capsule shells. Therefore, these compounds act at the same time as surfactant and polymerizable compound. Particular preference is given to polymerizable nonionic surfactants, in particular to nonionic surfactants which additionally have one or more acrylate and/or methacrylate groups. This embodiment which includes the use of polymerizable surfactant can have an advantage in that the template properties at the amphiphilic interface may be particularly well preserved during polymerization. Furthermore, the polymerizable surfactant may not only take part in the polymerization reaction, but may be favourably incorporated as a building block into the polymer shell, and more preferably also at the shell surface such that it may advantageously influence the interface interactions. In a particularly preferred embodiment silicone polyether acrylate is used as polymerizable surfactant, more preferably cross-linkable silicone polyether acrylate. It is also possible to add poly(ethylene glycol) methyl ether methacrylate.

In a preferred embodiment, the composition according to the invention is provided as an aqueous mixture, wherein more preferably the composition comprising the components (i), (ii) and (iii) are dispersed in an aqueous phase. In this respect the provided surfactant(s) can favourably contribute to form and stabilize the dispersion, in particular emulsion, and to promote homogenization.

In case aqueous mixtures are provided, the amount of water is not considered to contribute to the overall composition in terms of weight, i.e. water is excepted in this respect.

Preferably water is provided as purified water, in particular deionized water.

In a particularly preferred embodiment the composition according to the invention is provided as nanodroplets dispersed in an aqueous phase.

The composition may contain additional compounds such as one or more pleochroic dyes, in particular dichroic dye(s), one or more chiral compounds and/or other customary and suitable additives.

Pleochroic dyes preferably are dichroic dyes and can be selected from for example azo dyes and thiadiazol dyes.

Suitable chiral compounds are for example standard chiral dopants like R- or S-811, R- or S-1011, R- or S-2011, R- or S-3011, R- or S-4011, R- or S-5011, or CB 15 (all available from Merck KGaA, Darmstadt, Germany), sorbitols as described in WO 98/00428, hydrobenzoins as described in GB 2,328,207, chiral binaphthols as described in WO 02/94805, chiral binaphthol acetals as described in WO 02/34739, chiral TADDOLs as described in WO 02/06265, or chiral compounds having fluorinated linkage groups as described in WO 02/06196 or WO 02/06195.

Furthermore, substances can be added to change the dielectric anisotropy, the optical anisotropy, the viscosity and/or the temperature dependence of electro-optical parameters of the LC material.

The mesogenic medium according to the invention comprises one or more compounds of the formula I as set forth above.

In a preferred embodiment the liquid-crystalline medium consists of 2 to 25, preferably 3 to 20 compounds, at least one of which is a compound of formula I. The medium preferably comprises one or more, more preferably two or more, and most preferably three or more compounds of the formula I according to the invention. The medium preferably comprises low molecular weight liquid-crystalline compounds selected from nematic or nematogenic substances, for example from the known classes of the azoxybenzenes, benzylidene-anilines, biphenyls, terphenyls, phenyl or cyclohexyl benzoates, phenyl or cyclohexyl esters of cyclohehexanecarboxylic acid, phenyl or cyclohexyl esters of cyclohexylbenzoic acid, phenyl or cyclohexyl esters of cyclohexylcyclohexanecarboxylic acid, cyclohexylphenyl esters of benzoic acid, of cyclohexanecarboxylic acid and of cyclohexylcyclohexanecarboxylic acid, phenylcyclohexanes, cyclohexylbiphenyls, phenylcyclohexylcyclohexanes, cyclohexylcyclohexanes, cyclohexylcyclohexenes, cyclohexylcyclohexylcyclohexenes, 1,4-bis-cyclohexylbenzenes, 4,4'-bis-cyclohexylbiphenyls, phenyl- or cyclohexylpyrimidines, phenyl- or cyclohexylpyridines, phenyl- or cyclo-hexylpyridazines, phenyl- or cyclohexyldioxanes, phenyl- or cyclo-hexyl-1,3-dithianes, 1,2-diphenyl-ethanes, 1,2-dicyclohexylethanes, 1-phenyl-2-cyclohexylethanes, 1-cyclohexyl-2-(4-phenylcyclohexyl)-ethanes, 1-cyclohexyl-2-biphenyl-ethanes, 1-phenyl2-cyclohexyl-phenylethanes, optionally halogenated stilbenes, benzyl phenyl ether, tolanes, substituted cinnamic acids and further classes of nematic or nematogenic substances. The 1,4-phenylene groups in these compounds may also be laterally mono- or difluorinated. The liquid-crystalline mixture is preferably based on achiral compounds of this type.

In a preferred embodiment the LC host mixture is a nematic LC mixture, which preferably does not have a chiral LC phase.

Suitable LC mixtures can have positive dielectric anisotropy. Such mixtures are described, for example, in JP 07-181 439 (A), EP 0 667 555, EP 0 673 986, DE 195 09 410, DE 195 28 106, DE 195 28 107, WO 96/23 851, WO 96/28 521 and WO2012/079676.

In another embodiment the LC medium has negative dielectric anisotropy. Such media are described in for example EP 1 378 557 A1.

According to the invention the one or more compounds of formula I are selected from one or more compounds of the formulae la, Ib and Ic, 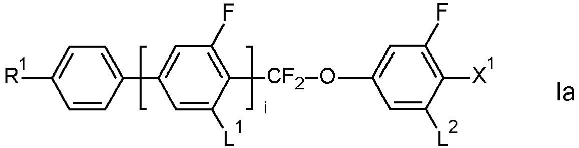 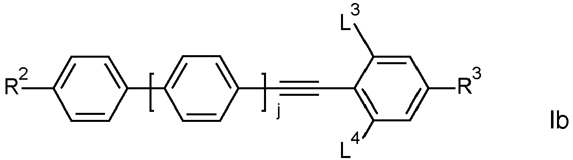 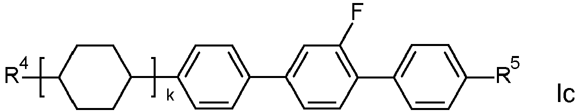 wherein
- R¹, R², R³, R⁴ and R⁵: denote, independently of one another, straight-chain or branched alkyl or alkoxy having 1 to 15 carbon atoms or straight-chain or branched alkenyl having 2 to 15 carbon atoms which is unsubstituted, monosubstituted by CN or CF₃ or mono- or polysubstituted by halogen, preferably F, and wherein one or more CH₂ groups may be, in each case independently of one another, replaced by -O-, -S-, -CO-, -COO-, -OCO-, -OCOO- or -C=C- in such a manner that oxygen atoms are not linked directly to one another,
- X¹: denotes F, CF₃, OCF₃ or CN,
- L¹, L², L³ and L⁴: are, independently of one another, H or F,
- i: is 1 or 2, and
- j and k: are, independently of one another, 0 or 1.

The compositions according to the invention as described above are useful in and provide particular advantages in the method to prepare nanocapsules according to the invention.

It was surprisingly found that according to the invention an efficient and controlled process can be carried out, ultimately on the nanoscale, to produce nanosized containers, which typically are spherical or spheroidal, enclosing LC material. The process makes use of dispersion, in particular nanoemulsion, which is also called miniemulsion, wherein nanosized phases comprising LC material and reactive, polymerizable compound(s) are dispersed in a suitable dispersion medium.

In particular, the dispersed phase exhibits poor solubility in the dispersion medium, that means it shows low solubility or is even practically insoluble in the dispersion medium which forms the continuous phase. Favourably, water, water-based or aqueous solutions or mixtures are used to form the continuous or external phase.

Through dispersion the individual nanodroplets are in such a way decoupled from one another that each droplet constitutes a separate nanosized reaction volume for the subsequent polymerization.

The process conveniently utilizes in situ polymerization. In particular, polymerization is combined with phase separation. In this respect the size given by the nanodroplets sets the length scale or volume of these transformations or respectively separations leading to polymerization induced nanophase separation.

Moreover, the droplet interface can serve as a template for the encapsulating polymeric shell. The polymer chains or networks forming or starting to form in the nanodroplets may segregate to or be driven to or accumulate at the interface with the aqueous phase, where polymerization may proceed and also terminate to form a closed encapsulation layer. In this respect the forming or respectively formed polymeric shell is substantially immiscible in both the aqueous phase as well as the LC medium.

Therefore, in an aspect of the invention the polymerization can ensue, be promoted and/or continue at the interface between the aqueous phase and the phase comprising the LC medium. In this respect the interface can act as a diffusion barrier and as a reaction site.

Furthermore, the characteristics, in particular the structure and the building blocks of the polymer, of the forming and formed interface of the capsules can influence the material properties, in particular LC alignment, e.g. through homeotropic anchoring, anchoring energy and switching behaviour in response to an electric field. In one embodiment the anchoring energy or strength is reduced to favourably influence electro-optical switching, wherein e.g. the polymer surface morphology and polarity can be suitably set and adjusted.

In particular, the combined elements of the process can favourably result in the preparation of a large multitude of individual, dispersed or respectively dispersible nanocapsules which each have a polymeric shell and a core comprising LC material.

In a first step of the process an aqueous mixture is prepared or provided which comprises the composition according to the invention. In an embodiment a surfactant solution or mixture, preferably in water, can be prepared and added to the other components of the composition. The provided aqueous mixture is then agitated, in particular mechanically agitated, to obtain nanodroplets comprising the polymerizable compound(s) and the LC medium according to the invention dispersed in an aqueous phase. Agitation or mixing can be carried out using high-shear mixing. For example, high-performance dispersing devices using the rotor-stator principle can be used, such as commercially available Turrax (IKA). Optionally such high-shear mixing may be replaced by sonication. It is also possible to combine sonication and high-shear mixing, wherein preferably sonication precedes high-shear mixing.

The combination of agitation as described above and the provision of surfactant can favourably result in the suitable formation and stabilization of the dispersion, in particular emulsion. The use of a high-pressure homogenizer, optionally and preferably used in addition to the above described mixing, can further favourably influence the preparation of the nanodispersion, in particular nanoemulsion, by setting or adjusting and respectively reducing droplet size and by also making the droplet size distribution narrower, i.e. improving uniformity of the particle size. It is particularly preferred when the high-pressure homogenization is repeated, especially for several times such as three, four or five times. For example, a commercially available Microfluidizer (Microfluidics) can be used.

The dispersed nanodroplets are then subjected to a polymerization step. In particular, the polymerizable compound(s) contained in, or respectively mixed with, the nanodroplets are polymerized. This polymerization leads to PIPS and the formation of the nanocapsules having a core-shell structure as described above and below. The obtained or respectively obtainable nanocapsule are typically spherical, substantially spherical or spheroidal. In this respect some shape asymmetry or small deformation may be beneficial, e.g. in terms of the operating voltage.

Polymerization in the emulsion droplets and at each droplet interface can be carried out using conventional methods. The polymerization can be carried out in one or more steps. In particular, polymerization of the polymerizable compound(s) in the nanodroplets is preferably achieved by exposure to heat or to actinic radiation, wherein exposure to actinic radiation means irradiation with light, like UV light, visible light or IR light, irradiation with X-rays or gamma rays, or irradiation with high-energy particles, such as ions or electrons. In a preferred embodiment free radical polymerization is carried out.

Polymerization can be carried out at a suitable temperature. In an embodiment polymerization is performed at a temperature below the clearing point of the mesogenic mixture. In an alternative embodiment it is however also possible to carry out the polymerization at or above the clearing point.

In an embodiment, polymerization is carried out by heating the emulsion, i.e. by thermal polymerization, for example by thermal polymerization of acrylate and/or methacrylate compound(s). Particularly preferred is a thermally initiated free radical polymerization of the reactive polymerizable precursors leading to the nanoencapsulation of the LC material.

In another embodiment, polymerization is carried out by photoirradiation, i.e. with light, preferably UV light. As a source for actinic radiation, for example a single UV lamp or a set of UV lamps can be used. When using a high lamp power the curing time can be reduced. Another possible source for photoradiation is a laser, like e.g. a UV laser, a visible laser or an IR laser.

Suitable and conventionally used thermal initiators or photoinitiators can be added to the composition to facilitate the reaction, for example azo compounds or organic peroxides such as Luperox type initiators. Moreover, suitable conditions for the polymerization and suitable types and amounts of initiators are known in the art and are described in the literature.

For example, when polymerizing by means of UV light, a photoinitiator can be used that decomposes under UV irradiation to produce free radicals or ions that start the polymerization reaction. For polymerizing acrylate or methacrylate groups preferably a radical photoinitiator is used. For polymerizing vinyl, epoxide or oxetane groups preferably a cationic photoinitiator is used. It is also possible to use a thermal polymerization initiator that decomposes when heated to produce free radicals or ions that start the polymerization. Typical radical photoinitiators are for example the commercially available Irgacure® or Darocure® (Ciba Geigy AG, Basel, Switzerland). A typical cationic photoinitiator is for example UVI 6974 (Union Carbide).

In an embodiment initiators are used that are well soluble in the nanodroplets but which are water insoluble, or at least substantially water insoluble. For example, in the process for preparing the nanocapsules azobisisobutyronitrile (AIBN) can be used, which in a particular embodiment is further comprised in the composition according to the invention.

Alternatively or also additionally, water soluble initiators may be provided, such as for example 2,2'-azobis(2-methylpropionamide) dihydrochloride (AIBA).

In an embodiment it is particularly preferred to use a non-ionic initiator, in particular a non-ionic photoinitiator.

Further additives may also be added. In particular, the polymerizable material can additionally comprise one or more additives, such as for example catalysts, sensitizers, stabilizers, inhibitors and chain transfer agents.

For example, the polymerizable material may also comprise one or more stabilizers or inhibitors to prevent undesired spontaneous polymerization, like for example the commercially available Irganox® (Ciba Geigy AG, Basel, Switzerland).

By adding one or more chain transfer agents to the polymerizable material the properties of the obtained or respectively obtainable polymer may be modified. By using chain transfer agents the length of the free polymer chains and/or the length of the polymer chains between two crosslinks in the polymer can be adjusted, wherein typically the polymer chain length in the polymer decreases when the amount of the chain transfer agent is increased.

Polymerization is preferably performed under an inert gas atmosphere, for example nitrogen or argon, more preferably in a heated nitrogen atmosphere. But also polymerization in air is possible.

It is furthermore preferred that polymerization is carried out in the presence of the organic solvent described above. The use of the organic solvent, for example hexadecane, can be favourable in terms of adjusting the solubility of the reactive compound(s) with the LC material and to stabilize the nanodroplets, and it can also be beneficial in influencing phase separation. It is however preferred that the amount of organic solvent, if used at all, is limited, typically to below 25% by weight, based on the overall composition, more preferably to less than 20% by weight, and in particular to less than 15% by weight.

The formed polymer shell suitably exhibits low solubility, i.e. is substantially insoluble, in respect of both the LC material as well as water. Furthermore, in the process coagulation or respectively aggregation of the produced nanocapsules can suitably and favourably be limited or even avoided.

It is also preferred that the forming polymer or respectively the formed polymer in the shell is crosslinked. Such crosslinking can provide benefits in forming a stable polymeric shell and in giving suitable containment and barrier functionality, while maintaining sufficient mechanical flexibility.

The process according to the invention thus provides encapsulation and confinement of the mesogenic medium, while maintaining the electro-optical performance and in particular electric responsiveness of the LC material. In particular, the composition as well as process conditions are provided such that stability of the LC material is maintained. The LC can therefore exhibit in the formed nanocapsules favourable characteristics, for example suitably high Δε, suitably high Δn, a high favourable clearing point and a low melting point. In particular, the LC material provided can show suitable and favourable stability in the polymerization, for example with respect to exposure to heat or UV light.

In the process water or aqueous solutions are favourably used as dispersing medium. In this respect it is however also furthermore observed that the provided composition as well as the produced nanocapsules show suitable stability and chemical resistance to the presence of water, for example with respect to hydrolysis. In an embodiment the amount of water may be reduced or even substantially minimized by providing or adding polar media, preferably non-aqueous polar media, containing for example formamide or ethylene glycol.

Therefore, in the process stable nanocapsules are produced which are suitably dispersed. In an optional and preferable subsequent step the aqueous phase can be removed, or respectively the amount of water can be reduced or depleted, or alternatively the aqueous phase can be exchanged for another dispersion medium.

In an embodiment the dispersed or respectively dispersible nanocapsules are substantially or fully separated from the aqueous phase, for example by filtration or centrifugation. Conventionally used filtration, e.g. membrane filtration, dialysis, cross-flow filtration and in particular cross-flow filtration in combination with dialysis, and/or centrifugation techniques can be used. Filtration and/or centrifugation can provide further benefits by, for example, removing excess or unwanted or even residual surfactant. It is thus possible to not only provide concentration of the nanocapsules but also purification, e.g. by removing contaminants, impurities or unwanted ions.

Preferably and favourably the amount of surface charge of the capsules is kept at a minimum. Based on the mechanical stability the nanocapsules can be subjected to the separation techniques with relative ease. It is also possible to dry the nanocapsules, wherein drying means removing the dispersion medium but leaving the contained LC material inside the capsules. Conventional techniques such as drying in air, critical point drying and freeze-drying, in particular freeze-drying can be used.

Favourably, the process according to the invention provides a large multitute of individual nanocapsules which are dispersible and even redispersible. They can thus be further used and applied to various environments with ease and flexibility. Due to their stability storing of the capsules, in particular with suitably long shelf life, before use in various applications also becomes possible. However, immediate further processing is also an option that is favourably provided. In this respect the capsules are suitably stable during processing, in particular for coating applications.

The process as described above provides a convenient method to produce the nanocapsules in a controlled and adaptable manner. In particular, capsule particle size can suitably be tuned while keeping polydispersity low, for example by adjusting the amount of surfactant in the composition. It was surprisingly found that a suitably set, uniform capsule size can be particularly advantageous in view of reducing the operating voltage in electro-optical applications.

In an embodiment the surfactant provided in the composition can be incorporated in the polymeric capsule shell, at least in part, and in particular at the interface with the LC in the interior of the capsule. Such incorporated surfactant molecules at the interface may favourably influence the electro-optical performance and reduce the operating voltage, in particular by setting or tuning the interfacial properties and interactions. In one case the surfactant may favourably influence alignment of the LC molecules, e.g. promoting a homeotropic alignment resulting in a radial configuration. Additionally or alternatively the surfactant molecules may influence the morphology and the physicochemical attributes of the interior polymer surface such that the anchoring strength is reduced. The surfactant provided in the composition thus not only contributes to the advantageous process according to the invention, but it may also provide benefits in the obtained nanocapsules.

In another aspect of the invention there are provided the favourable nanocapsules according to the invention. In particular, said nanocapsules constitute nanocontainers having a polymeric shell, which optionally and preferably is crosslinked, filled with the LC material. The capsules are individual and separate, i.e. discrete and dispersible particles having a core-shell structure. The capsules can act individually but also collectively as light modulating material. They can be applied to various environments and, depending on the dispersion medium, be redispersed in different media. For example, they may be dispersed in water or an aqueous phase, dried, and dispersed in a binder, preferably a polymer binder. The nanocapsules can also be referred to as nanoparticles. In particular, the nanoparticles comprise nanoscale LC material surrounded by a polymer shell. These nanoencapsulated liquid crystals may optionally additionally be embedded in a polymeric binder.

In an alternative case where phase separation is less pronounced or less complete it can be possible that a polymer network is forming in the droplet interior such that capsules are obtained that exhibit a sponge-like or porous interior, wherein the LC material fills the voids. In this case the LC material is filling the pores in the sponge-like structure or network, while a shell encloses the LC material.

In a further alternative case the separation between the LC material and the polymer may be at an intermediate level wherein the interface or boundary between the LC interior and the wall is only less pronounced and shows a gradient behaviour.

However, an efficient and complete separation of the shell polymer and the LC material is preferably obtained, in particular giving a shell with a smooth interior surface.

Optionally, the comprised mesogenic medium can further contain one or more chiral dopants and/or one or more pleochroic dyes and/or other customary additives.

Favourably, the nanocapsules according to the invention are obtained by or obtainable from polymerization of the inventive composition, and in particular from the efficient and controlled process described herein. Surprisingly, in the nanocapsules a shell polymer can be provided, in particular by polymerizing the precursor compound(s) described above, which is well matched with respect to the LC component and which is compatible with the LC performance. It is preferred that the electrical impedance of the capsule polymer is at least equal to and more preferably larger than that of the LC material.

In addition, the shell polymer can be advantageous in terms of dispersibility and avoidance of unwanted aggregation. Furthermore, the shell polymer can be combined and function well with a binder, for example in a film-forming composite system and in particular in electro-optical applications.

The capsules according to the invention, wherein a liquid crystal is encapsulated by a shell material component, are characterized in that they are nano-sized. Preference is given to nanocapsules having an average size of not greater than 400 nm.

Preferably, the nanocapsules have an average size, as determined by dynamic light scattering analysis, of not greater than 400 nm, more preferably of not greater than 250 nm. Dynamic light scattering (DLS) is a commonly known technique which is useful for determining the size as well as the size distribution of particles in the submicron region. For example, a commercially available Zetasizer (Malvern) may be used for the DLS analysis.

Even more preferably, the average size of the nanocapsules is below 200 nm, in particular is not greater than 150 nm, as is preferably determined by DLS. In a particularly preferred embodiment the average nanocapsule size is below the wavelength of visible light, in particular smaller than λ/4 of visible light. It is advantageously found that the nanocapsules according to the invention in at least one state, in particular with appropriate LC alignment or configuration, can be very weak scatterers of visible light, i.e. that they do not, or substantially not, scatter visible light. In this case the capsules can be useful in modulating the phase shift between the two polarization components of light, i.e. the phase retardation, while not showing or substantially not showing unwanted scattering of light in any state.

For electro-optical applications the polymer-encapsulated mesogenic medium preferably exhibits a confinement size from 15 nm to 400 nm, more preferably from 50 nm to 250 nm and in particular from 75 nm to 150 nm.

If the capsule size becomes very small, in particular approaching the molecular size of the LC molecules, the functionality of the capsules may become less efficient, considering that the amount of enclosed LC material decreases and also the mobility of the LC molecules becomes more limited.

The thickness of the polymeric shell or respectively wall, which forms a discrete individual structure, is chosen such that it effectively contains and stably confines the contained LC medium, while at the same time allowing for relative flexibility and still enabling excellent electric responsiveness of the LC material. In view of capacitance and electro-optical performance, the shell should preferably be as thin as possible while still providing adequate strength for containment. Therefore, the typical capsule shell or wall thickness is below 100 nm. Preferably, the polymeric shell has a thickness of less than 50 nm, more preferably below 25 nm, and in particular below 15 nm. In a preferred embodiment, the polymeric shell has a thickness from 1 nm to 15 nm , more preferably form 3 nm to 10 nm, and in particular from 5 nm to 8 nm.

Microscopy techniques, in particular SEM and TEM can be used to observe the nanocapsule size, structure and morphology. Wall thickness can e.g. be determined by TEM on freeze-fractured samples. Alternatively, neutron scattering techniques may be used. Moreover, for example AFM, NMR, ellipsometric and sum-frequency generation techniques can be useful to study the nanocapsule structure. The nanocapsules according to the invention typically have spherical or spheroidal shape, wherein the hollow spherical or spheroidal shells are filled with or respectively contain the LC medium according to the invention.

It is preferred that the nanocapsules are substantially free of surfactant, such that preferably even residual surfactant is kept at a minimum or is even entirely avoided.

Therefore, in an aspect nanocapsules are provided which are substantially free of surfactant.

The present invention thus provides a plurality of discrete spherical or spheroidal bodies or particles of LC which are each nanoencapsulated by a polymeric shell and which each individually but also collectively are operable in electro-optical devices in at least two states.

The LC component provides the beneficial chemical, physical and electro-optical characteristics as described above, such as good reliability and stability and low rotational viscosity. In a preferred embodiment the LC medium according to the invention has a birefringence of Δn ≥ 0.15, more preferably ≥ 0.20 and most preferably ≥ 0.25. It is even more preferred when the LC medium according to the invention additionally has a dielectric anisotropy of Δε ≥ 10.

Surprisingly, by suitably providing and setting the birefringence as well as the dielectric anisotropy according to the invention, even the small nanovolume of LC is sufficient to effectively and efficiently modulate light, wherein only moderate electric fields or respectively only moderate driving voltages can be used to effect or respectively change alignment of the LC molecules in the nanocapsules.

Furthermore, another advantage of the invention rests in the possibility to obtain substantially uniform capsule sizes, i.e. to achieve low polydispersity. This uniformity can favourably provide a uniform electro-optical performance of the capsules in device applications.

Moreover, the capsules obtained by or respectively obtainable from the controlled and adaptable process according to the invention can be adjusted and tuned in terms of capsule size, which in turn allows to tune the electro-optical performance as desired, in particular based on the Kerr effect.

In a further aspect of the invention a composite system is provided which comprises the nanocapsules according to the invention and one or more binders.

It was found that the discrete nanocapsules can be mixed with a binder material, wherein the mixed nanocapsules substantially maintain, preferably fully maintain, their integrity in the composite while however being bound, held or mounted in the binder. In this respect, the binder material can be the same material as the polymeric shell material or a different material. Therefore, according to the invention the nanocapsules can be dispersed in a binder made from the same material as or a different material from that of the nanocapsule shell. Preferably, the binder is a different or at least modified material.

The binder can be useful in that it can disperse the nanocapsules, wherein the amount or concentration of the capsules can be set and adjusted. Surprisingly, by independently providing the capsules and a suitable binder the amount of the capsules in the combined composite cannot only be tuned, but especially a very high content, and alternatively also a very low content, of the capsules is obtainable if desired. Typically, the nanocapsules are contained in the composite in a proportion from about 2% by weight to about 95% by weight. Preferably, the composite contains the nanocapsules in a range from 10% by weight to 85% by weight, more preferably from 30% by weight to 70% by weight. In a preferred embodiment the amounts of binder and nanocapsules used are approximately the same.

The binder material can furthermore improve or influence the coatabilty or printability of the capsules and the film forming ability and performance. Preferably, the binder can provide mechanical support while maintaining a suitable degree of flexibility, and it can serve as a matrix. The binder furthermore exhibits suitable and adequate transparency.

In an embodiment, the binder can be selected from, for example, inorganic glass monoliths, as described e.g. in US 4,814,211, or other inorganic materials.

It is however preferred that the binder is a polymeric material. Suitable materials may be synthetic resins such as, for example, epoxy resins and polyurethanes which, for example, are thermally curable. Furthermore, vinyl compounds and acrylates, in particular polyvinyl acrylates and polyvinyl acetates may be used. Furthermore, polymethyl methacrylate, polyurea, polyurethane, urea formaldehyde, melamine formaldehyde, melamine urea formaldehyde can be used or added. It is also possible to use thiol-ene based systems, for example, the commercially available product Norland Optical Adhesive 65 (Norland Products).

Particularly preferably water-soluble polymers are used, such as, for example, polyvinyl alcohol (PVA), starch, carboxyl methyl cellulose, methyl cellulose, ethyl cellulose, polyvinyl pyrrolidine, gelatin, alginate, casein, gum arabic, or latex-like emulsions. The binder can for example be chosen in view of setting the respective hydrophobicity or hydrophilicity.

In a preferred embodiment the binder, in particular the dried binder, absorbs little or no water.

In a particularly preferred embodiment the one or more binders comprise polyvinyl alcohol, which includes partially and fully hydrolyzed PVA. Favourably, water solubility and hydrophilicity can be adjusted by varying the degree of hydrolysis. Thus water uptake may be controlled or reduced. The properties, such as mechanical strength or viscosity, of the PVA may be favourably set by e.g. adjusting the molecular weight, the degree of hydrolysis or by chemical modification of the PVA.

The binder properties can also be favourably influenced by cross-linking the binder. Therefore, in particular when PVA is provided as the binder, in an embodiment the binder is cross-linked, preferably by cross-linking agents such as dialdehydes, e.g. glutaraldehyde, formaldehyde and glyoxal. Such cross-linking may e.g. favourably reduce any tendency for undesirable crack-formation.

The composite may further comprise customary additives such as stabilizers, antioxidants, free radical scavengers and/or plasticizers.

For the binder, in particular PVA, ethylene glycol can be used as a preferable plasticizer. It is also possible to add glycerol to the binder, in particular PVA-based binder. These additives added to the binder, in particular to PVA, may also be useful to favourably influence or adjust further material properties, e.g. the operating voltage or the dielectric permittivity.

Furthermore, to favourably influence film forming properties film-forming agents, for example polyacrylic acid, and anti-foaming agents may be added.

Such agents may be used to improve film formation and substrate wettability. Optionally, degassing and/or filtration of the coating composition can be carried out to further improve film properties. Likewise, setting and adjusting binder viscosity can have a favourable influence on the forming or respectively formed film.

The binder can be provided as a liquid or paste, wherein a carrier medium or solvent, such as water, aqueous solvent or organic solvent, can be removed from the composite mixture, for example during or after film formation, in particular by evaporation at an elevated temperature.

The binder preferably mixes and combines well with the nanocapsules, while further avoiding aggregation of capsules, such that e.g. light leakage can be avoided or minimized, which in turn can make a very good dark state possible. Moreover, the binder can be chosen such that a high density of nanocapsules can be provided in the composite, for example in a film formed of the composite. Furthermore, in the composite the structural and mechanical advantages of the binder can be combined with the favourable electro-optical properties of the LC capsules.

The nanocapsules according to the invention can be applied to a large variety of different environments, in particular by (re)dispersing them. They can be favourably dispersed in or respectively mixed with the binder. The binder cannot only improve film forming behviour but also film properties, wherein in particular the binder can hold the capsules relative to a substrate. Typically, the capsules are randomly distributed or respectively randomly oriented in the binder.

The composite comprising the binder material, but also the nanocapsules on their own, may be suitably applied or laminated to a substrate. For example, the composite or just the nanocapsules can be applied onto the substrate by conventional coating techniques such as spin coating, blade coating or drop coating. Alternatively they can also be applied to the substrate by conventional and known printing methods, like for example ink-jet printing. It is also possible to dissolve the capsules or the composite in a suitable solvent. This solution is then coated or printed onto the substrate, for example by spin-coating or printing or other known techniques, and the solvent is evaporated off. In many cases it is suitable to heat the mixture in order to facilitate the evaporation of the solvent. As solvents for example water, aqueous mixtures or standard organic solvents can be used.

It is preferred that the material applied to the substrate is the composite, i.e. that it also contains binder. Typically films are formed having a thickness of below 25 µm, preferably below 15 µm. In a preferred embodiment a film made of the composite has a thicknes of from 0.5 µm to 10 µm, very preferably from 1 µm to 7 µm, in particular from 2 µm to 5 µm.

As substrate for example glass, silicon, quartz sheets or plastic films can be used. It is also possible to put a second substrate on top of the applied, preferably coated or printed, material. Isotropic or birefringent substrates can be used. It is also possible to apply an optical coating, in particular with optical adhesive.

In a preferred embodiment the substrate can be a flexible material. Given the flexibility as provided by the composite, overall a flexible system or device is thus obtainable.

Suitable and preferred plastic substrates are for example films of polyester such as polyethyleneterephthalate (PET) or polyethylenenaphthalate (PEN), polyvinylalcohol (PVA), polycarbonate (PC) or triacetylcellulose (TAC), more preferably PET or TAC films. As birefringent substrates for example uniaxially stretched plastics film can be used. PET films are commercially available for example from DuPont Teijin Films under the trade name Melinex®.

The substrates can be transparent and transmissive or reflective. For electro-optical addressability the substrates can exhibit electrode(s). In a typical embodiment a glass substrate with ITO electrodes is provided.

The electrical and optical properties of the LC material, the polymeric capsule shell and the binder are favourably and preferably matched or aligned in terms of compatibility and in view of the respective applications. The composite according to the invention can provide suitable and advantageous electro-optical behaviour and performance.

Furthermore, excellent physical and chemical stability is obtainable, for example by preferably and favourably reducing water uptake. In particular, good stability and resistance to heat or mechanical stress can be achieved while at the same time still providing suitable mechanical flexibility.

It is preferred that the binder, and preferably also the polymer shell, has a relatively large impedance in view of the electric responsiveness of the LC as well as a suitable dielectric constant close to that of the LC material to limit charging at the interfaces. It is observed that the dielectric constant of the binder is sufficiently high to ensure that an electric field is efficiently applied across the LC medium in the capsules. Any charge or ionic content in these materials is preferably minimized to keep conductivity very low. In this respect it was found that the properties of the provided binder, preferably PVA, can be improved by purification, in particular by removing or decreasing the amount of impurities and charged contaminants. For example, the binder, in particular PVA, may be dissolved and washed in deionized water or alcohol, and it may be treated by dialysis or soxhlet purification.

Furthermore, the refractive indices of the LC material, the polymeric capsule shell and the binder are favourably and preferably matched or aligned in view of optimum performance in the respective applications. In particular, the refractive indices of the LC material and the binder are coordinated. In particular, the refractive index of the binder, and possibly also that of the capsule polymer, can be set or adjusted in view of the extraordinary refractive index (nₑ) of the LC, the ordinary refractive index (nₒ) of the LC, or the average refractive index (n_{avg}) of the LC. In particular, the refractive index of the binder, and also of the shell polymer, can be matched closely to nₑ, nₒ or n_{avg} of the LC material.

In an embodiment the nanocapsules are dispersed in the binder, wherein the capsules in the binder exhibit a random orientation relative to each other. Regardless of any possible absence or presence of alignment or orientation of the LC material within each individual capsule, this random orientation of the capsules with respect to each other can result in the LC material as a whole giving an observed average refractive index (n_{avg}). Considering the nano-size of the capsules and their favourable potential to act as only very weak scatterers of light, in this embodiment the application of an electric field, wherein the electric field forces (re)alignment of the LC material, can modulate the phase shift, or retardation, of the transmitted, or reflected, light, without however changing the apparent scattering, if at all present. In such a case, and in particular when the size of the capsules is significantly smaller than the wavelength of light, the refractive index of the binder, and preferably also the polymeric capsule shell, can e.g. suitably and advantageously be adjusted or matched with respect to n_{avg} of the LC material. The nanocapsules can thus behave as efficient nanoscale phase modulators.

Given the nanosize of the capsules and in the absence of an electric field, light scattering may be substantially suppressed, preferably completely suppressed, in particular for sizes smaller than 400 nm. Furthermore, scattering and refraction may be controlled by matching or adjusting the refractive indices of the LC material and of the polymeric material(s).

When the capsules and the respective LC directors are randomly oriented in the binder, in an embodiment the phase shift can be polarization-independent for normally incident light.

In another embodiment the capsules are aligned or oriented in the binder.

The composite systems according to the invention advantageously allow for a high degree of adaptability and for setting and adjusting several degrees of freedom, especially in view of tuning the electro-optical properties and functionality. For example the layer or film thickness can be set, adapted or varied while being able to independently vary the density of the nano-sized LC material in the film, wherein furthermore the size of the nanocapsules, i.e. the amount of LC material in each individual capsule can be preset and thus also adjusted. Furthermore, the LC medium can be chosen to have specific properties, e.g. suitably high values of Δε and Δn.

In a preferred embodiment the amount of LC in the composition, in the nanocapsules and in the composite is suitably maximized to achieve favourably high electro-optical performance.

According to the invention a composite can favourably be provided, with relative production ease and high processibility, that can make good transmittance, low operating voltages, improved VHR and a good dark state possible. Surprisingly a robust, effective and efficient system is obtainable, which is applicable to a single substrate without any alignment layer or without surface rubbing and which can exhibit relative insensitivity to layer thickness deviations or to external forces such as touching, also in terms of light leakage. Moreover, a wide viewing angle can be obtainable without providing an alignment layer or an additional retardation layer.

Preferably and favourably the nanocapsules and composite systems as provided show sufficient processibility such that aggregation during concentration and filtration of the capsules, mixing with the binder, film formation and optional drying of the film is kept at a minimum.

The nanocapsules and the composites according to the invention are useful in displays and other optical and electro-optical applications.

In particular, the nanocapsules containing the LC medium, preferably mixed with the binder, are suitable for efficient control and modulation of light. They may be used, for example, in optical filters, tunable polarizers and lenses, and phase plates. As phase modulators they may be useful for photonic devices, optical communications and information processing, and three-dimensional displays. A further use is in smart windows or privacy windows which are switchable.

The invention thus advantageously provides light-modulation elements and electro-optical modulators. These elements and modulators comprise the nanocapsules according to the invention, wherein preferably the capsules are mixed and dispersed in the binder.

Moreover, there is provided an electro-optical device, in particular an electro-optical display, which makes advantageous use of the nanocapsules and/or the composite system as described above and below. In the device a plurality of the nanocapsules are provided.

Many of the mesogenic compounds or mixtures thereof described above and below are commercially available. All of these compounds are either known or can be prepared by methods which are known *per se,* as described in the literature (for example in the standard works such as Houben-Weyl, Methoden der Organischen Chemie [Methods of Organic Chemistry], Georg-Thieme-Verlag, Stuttgart), to be precise under reaction conditions which are known and suitable for said reactions. Use may also be made here of variants which are known *per se,* but are not mentioned here in greater detail.

The media according to the invention are prepared in a manner conventional *per se.* In general, the components are dissolved in one another, preferably at elevated temperature. By means of suitable additives, the liquid-crystalline phases of the present invention can be modified in such a way that they can be used in liquid-crystal display elements. Additives of this type are known to the person skilled in the art and are described in detail in the literature (H. Kelker/ R. Hatz, Handbook of Liquid Crystals, Verlag Chemie, Weinheim, 1980). For example, pleochroic dyes can be added for the production of coloured guest-host systems or substances can be added in order to modify the dielectric anisotropy, the viscosity and/or the alignment of the nematic phases.

The term "alkyl" according to the present invention preferably encompasses straight-chain and branched alkyl groups having 1-7 carbon atoms, particularly the straight-chain groups methyl, ethyl, propyl, butyl, pentyl, hexyl and heptyl. Groups having 2-5 carbon atoms are generally preferred.

An alkoxy can be straight-chain or branched, and it preferably is straight-chain and has 1, 2, 3, 4, 5, 6 or 7 carbon atoms, and accordingly is preferably methoxy, ethoxy, propoxy, butoxy, pentoxy, hexoxy or heptoxy.

The term "alkenyl" according to the present invention preferably encompasses straight-chain and branched alkenyl groups having 2-7 carbon atoms, in particular the straight-chain groups. Particularly preferred alkenyl groups are C₂-C₇-1E-alkenyl, C₄-C₇-3E-alkenyl, C₅-C₇-4E-alkenyl, C₆-C₇-5E-alkenyl and C₇-6E-alkenyl, in particular C₂-C₇-1E-alkenyl, C₄-C₇-3E-alkenyl and C₅-C₇-4E-alkenyl. Examples of preferred alkenyl groups are vinyl, 1E-propenyl, 1E-butenyl, 1E-pentenyl, 1E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl and 6-heptenyl. Groups having up to 5 carbon atoms are generally preferred.

Fluorinated alkyl or alkoxy preferably comprises CF₃, OCF₃, CFH₂, OCFH₂, CF₂H, OCF₂H, C₂F₅, OC₂F₅, CFHCF₃, CFHCF₂H, CFHCFH₂, CH₂CF₃, CH₂CF₂H, CH₂CFH₂, CF₂CF₂H, CF₂CFH₂, OCFHCF₃, OCFHCF₂H, OCFHCFH₂, OCH₂CF₃, OCH₂CF₂H, OCH₂CFH₂, OCF₂CF₂H, OCF₂CFH₂, C₃F₇ or OC₃F₇, in particular CF₃, OCF₃, CF₂H, OCF₂H, C2Fs, OC₂F₅, CFHCF₃, CFHCF₂H, CFHCFH₂, CF₂CF₂H, CF₂CFH₂, OCFHCF₃, OCFHCF₂H, OCFHCFH₂, OCF₂CF₂H, OCF₂CFH₂, C₃F₇ or OC₃F₇, particularly preferably OCF₃ or OCF₂H. Fluoroalkyl in a preferred embodiment encompasses straight-chain groups with terminal fluorine, i.e. fluoromethyl, 2-fluoroethyl, 3-fluoropropyl, 4-fluorobutyl, 5-fluoropentyl, 6-fluorohexyl and 7-fluoroheptyl. Other positions of fluorine are not precluded, however.

Oxaalkyl preferably encompasses straight-chain groups of the formula CₙH₂ₙ₊₁-O-(CH₂)ₘ, where n and m are each, independently of one another, from 1 to 6. Preferably, n = 1 and m is 1 to 6.

Oxaalkyl is preferably straight-chain 2-oxapropyl (= methoxymethyl), 2-(= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, or 2-, 3-, 4-, 5-, 6-, 7-, 8- or 9-oxadecyl.

Halogen is preferably F or CI, in particular F.

If one of the above mentioned groups is an alkyl group in which one CH₂ group has been replaced by -CH=CH-, this can be straight-chain or branched. It is preferably straight-chain and has 2 to 10 carbon atoms. Accordingly, it is in particular vinyl, prop-1- or prop-2-enyl, but-1-, -2- or but-3-enyl, pent-1-, -2-, -3- or pent-4-enyl, hex-1-, -2-, -3-, -4- or hex-5-enyl, hept-1-, -2-, -3-, -4-, -5- or hept-6-enyl, oct-1-, -2-, -3-, -4-, -5-, -6- or oct-7-enyl, non-1-, -2-, -3-, -4-, -5-, -6-, -7- or non-8-enyl, dec-1-, -2-, -3-, -4-, -5-, -6-, -7-, -8- or dec-9-enyl.

If one of the above mentioned groups is an alkyl group in which one CH₂ group has been replaced by -O- and one has been replaced by -CO-, these are preferably adjacent. These thus contain an acyloxy group -CO-O- or an oxycarbonyl group -O-CO-. These are preferably straight-chain and have 2 to 6 carbon atoms.

They are accordingly in particular acetyloxy, propionyloxy, butyryloxy, pentanoyloxy, hexanoyloxy, acetyloxymethyl, propionyloxymethyl, butyryloxymethyl, pentanoyloxymethyl, 2-acetyloxyethyl, 2-propionyloxyethyl, 2-butyryloxyethyl, 3-acetyloxypropyl, 3-propionyloxypropyl, 4-acetyloxybutyl, methoxycarbonyl, ethoxycarbonyl, propoxycarbonyl, butoxycarbonyl, pentoxycarbonyl, methoxycarbonylmethyl, ethoxycarbonylmethyl, propoxycarbonylmethyl, butoxycarbonylmethyl, 2-(methoxycarbonyl)ethyl, 2-(ethoxycarbonyl)ethyl, 2-(propoxycarbonyl)ethyl, 3-(methoxycarbonyl)propyl, 3-(ethoxycarbonyl)propyl or 4-(methoxycarbonyl)butyl.

If one of the above mentioned groups is an alkyl group in which one CH₂ group has been replaced by unsubstituted or substituted -CH=CH- and an adjacent CH₂ group has been replaced by CO, CO-O or O-CO, this can be straight-chain or branched. It is preferably straight-chain and has 4 to 13 carbon atoms. Accordingly, it is in particular acryloyloxymethyl, 2-acryloyloxyethyl, 3-acryloyloxypropyl, 4-acryloyloxybutyl, 5-acryloyloxypentyl, 6-acryloyloxyhexyl, 7-acryloyloxyheptyl, 8-acryloyloxyoctyl, 9-acryloyloxynonyl, 10-acryloyloxydecyl, methacryloyloxymethyl, 2-methacryloyloxyethyl, 3-methacryloyloxypropyl, 4-methacryloyloxybutyl, 5-methacryloyloxypentyl, 6-methacryloyloxyhexyl, 7-methacryloyloxyheptyl, 8-methacryloyloxyoctyl or 9-methacryloyloxynonyl.

If one of the above mentioned groups is an alkyl or alkenyl group which is monosubstituted by CN or CF₃, this group is preferably straight-chain. The substitution by CN or CF₃ is in any position.

If one of the above mentioned groups is an alkyl or alkenyl group which is at least monosubstituted by halogen, this group is preferably straight-chain and halogen is preferably F or CI, more preferably F. In the case of polysubstitution, halogen is preferably F. The resulting groups also include perfluorinated groups. In the case of monosubstitution, the fluoro or chloro substituent can be in any desired position, but is preferably in the ω-position.

Compounds containing branched groups may occasionally be of importance owing to better solubility in some conventional liquid-crystalline base materials. However, they are particularly suitable as chiral dopants if they are optically active.

Branched groups of this type generally contain not more than one chain branch. Preferred branched groups are isopropyl, 2-butyl (= 1-methylpropyl), isobutyl (= 2-methylpropyl), 2-methylbutyl, isopentyl (= 3-methylbutyl), 2-methylpentyl, 3-methylpentyl, 2-ethylhexyl, 2-propylpentyl, isopropoxy, 2-methylpropoxy, 2-methylbutoxy, 3-methylbutoxy, 2-methylpentoxy, 3-methylpentoxy, 2-ethylhexoxy, 1-methylhexoxy or 1-methylheptoxy.

If one of the above mentioned groups is an alkyl group in which two or more CH₂ groups have been replaced by -O- and/or -CO-O-, this can be straight-chain or branched. It is preferably branched and has 3 to 12 carbon atoms. Accordingly, it is in particular biscarboxymethyl, 2,2-bis-carboxyethyl, 3,3-biscarboxypropyl, 4,4-biscarboxybutyl, 5,5-biscarboxypentyl, 6,6-biscarboxyhexyl, 7,7-biscarboxyheptyl, 8,8-biscarboxyoctyl, 9,9-biscarboxynonyl, 10,10-biscarboxydecyl, bis(methoxycarbonyl)methyl, 2,2-bis(methoxycarbonyl)ethyl, 3,3-bis(methoxycarbonyl)propyl, 4,4-bis-(methoxycarbonyl)butyl, 5,5-bis(methoxycarbonyl)pentyl, 6,6-bis(methoxycarbonyl)hexyl, 7,7-bis(methoxycarbonyl)heptyl, 8,8-bis(methoxycarbonyl)-octyl, bis(ethoxycarbonyl)methyl, 2,2-bis(ethoxycarbonyl)ethyl, 3,3-bis-(ethoxycarbonyl)propyl, 4,4-bis(ethoxycarbonyl)butyl or 5,5-bis(ethoxycarbonyl)pentyl.

The LC medium according to the present invention preferably has a nematic phase range between -10°C and +70°C. The LC medium even more preferably has a nematic phase range between -20°C and +80°C. It is most preferred when the LC medium according to the present invention has a nematic phase range between -20°C and +90°C.

The LC medium according to the present invention preferably has a birefringence of Δn ≥ 0.15, more preferably ≥ 0.20, and most preferably ≥ 0.25.

The LC medium according to the present invention preferably has a dielectric anisotropy Δε ≥ +10, more preferably ≥ +15, and most preferably ≥ +20.

The LC medium according to the present invention preferably and favourably exhibits a high reliability and a high electric resistivity, also known as specific resistivity (SR). The SR value of an LC medium according to the invention is preferably ≥ 1x10¹³ W cm, very preferably ≥ 1x10¹⁴ W cm. Unless described otherwise, the measurement of the SR is carried out as described in G. Weber et al., Liquid Crystals 5, 1381 (1989).

The LC medium according to the present invention also preferably and favourably exhibits a high voltage holding ratio (VHR), see S. Matsumoto et al., Liquid Crystals 5, 1320 (1989); K. Niwa et al., Proc. SID Conference, San Francisco, June 1984, p. 304 (1984); T. Jacob and U. Finkenzeller in "Merck Liquid Crystals - Physical Properties of Liquid Crystals", 1997. The VHR of an LC medium according to the invention is preferably ≥ 90 %, very preferably ≥ 95 %. Unless described otherwise, the measurement of the VHR is carried out as described in T. Jacob, U. Finkenzeller in "Merck Liquid Crystals - Physical Properties of Liquid Crystals", 1997.

Throughout this application, unless explicitly stated otherwise, all concentrations are given in weight percent and relate to the respective complete mixture, however excluding water solvent or water phase as indicated above.

All temperatures are given in degrees centigrade (Celsius, °C) and all differences of temperatures in degrees centigrade. All physical properties and physicochemical or electro-optical parameters are determined by generally known methods, in particular according to "Merck Liquid Crystals, Physical Properties of Liquid Crystals", Status Nov. 1997, Merck KGaA, Germany and are given for a temperature of 20 °C, unless explicitly stated otherwise.

Above and below, Δn denotes the optical anisotropy, wherein Δn = nₑ - nₒ, and Δε denotes the dielectric anisotropy, wherein Δε = ε_{∥} - ε_{⊥}. The dielectric anisotropy Δε is determined at 20°C and 1 kHz. The optical anisotropy Δn is determined at 20°C and a wavelength of 589.3 nm.

The Δε and Δn values and the rotational viscosity (γ₁) of the compounds according to the invention are obtained by linear extrapolation from liquid-crystalline mixtures consisting of 5% to 10% of the respective compound according to the invention and 90% to 95% of the commercially available liquid-crystal mixtures ZLI-2857 or ZLI-4792 (both mixtures from Merck KGaA).

Besides the usual and well known abbreviations, the following abbreviations are used: C: crystalline phase; N: nematic phase; Sm: smectic phase; I: isotropic phase. The numbers between these symbols show the transition temperatures of the substance concerned.

In the present invention and especially in the following examples, the structures of the mesogenic compounds are indicated by means of abbreviations, also called acronyms. In these acronyms, the chemical formulae are abbreviated as follows using Tables A to C below. All groups CₙH₂ₙ₊₁, CₘH₂ₘ₊₁ and CₗH₂ₗ₊₁ or CₙH₂ₙ₋₁, CₘH₂ₘ₋₁ and CₗH₂ₗ₋₁ denote straight-chain alkyl or alkenyl, preferably 1-E-alkenyl, each having n, m and I C atoms respectively. Table A lists the codes used for the ring elements of the core structures of the compounds, while Table B shows the linking groups. Table C gives the meanings of the codes for the left-hand or right-hand end groups. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 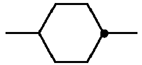 | | |
| **P** | 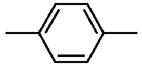 | | |
| **D** | 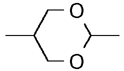 | **DI** | 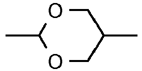 |
| **A** | 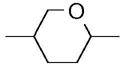 | **AI** | 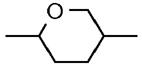 |
| **G** | 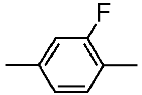 | **GI** | 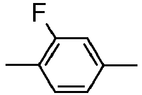 |
| **U** | 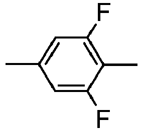 | **UI** | 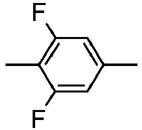 |
| **Y** | 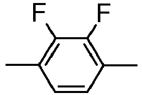 | | |
| **M** | 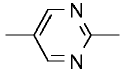 | **MI** | 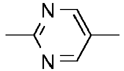 |
| **N** | 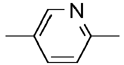 | **NI** | 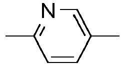 |
| **Np** | 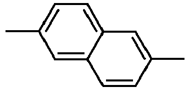 | **dH** | 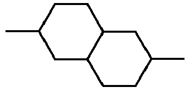 |
| **N3f** | 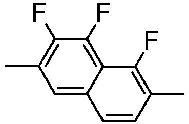 | **N3fI** | 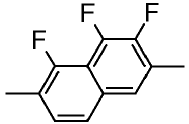 |
| **tH** | 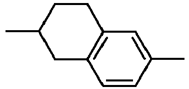 | **tHI** | 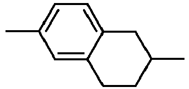 |
| **tH2f** | 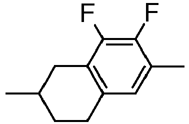 | **tH2fI** | 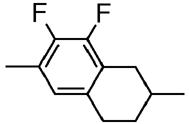 |
| **K** | 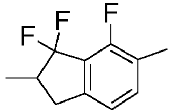 | **KI** | 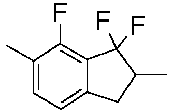 |
| **L** | 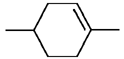 | **LI** | 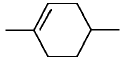 |
| **F** | 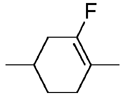 | **FI** | 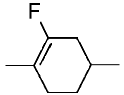 |
| **Nf** | 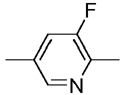 | **NfI** | 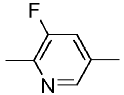 |

**Table B: Linking groups**

| | | | |
|---|---|---|---|
| **E** | -CH₂CH₂- | **Z** | -CO-O- |
| **V** | -CH=CH- | **ZI** | -O-CO- |
| **X** | -CF=CH- | **O** | -CH₂-O- |
| **XI** | -CH=CF- | **OI** | -O-CH₂- |
| **B** | -CF=CF- | **Q** | -CF₂-O- |
| **T** | -C≡C- | **QI** | -O-CF₂- |
| **W** | -CF₂CF₂- | | |

**Table C: End groups**

| **Left-hand side** | **Right-hand side** | | |
|---|---|---|---|
| | **Used alone** | | |
| **-n-** | CₙH₂ₙ₊₁- | **-n** | --CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CnH₂ₙ₊₁-CH=CH- | **-nV** | -CₙH₂ₙ-CH=CH₂ |
| **-Vn-** | CH₂=CH-CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N=C- | **-N** | -C=N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O- | **-OM** | -OCFH₂ |
| **-DO-** | CF₂HO- | **-OD** | -OCF₂H |
| **-TO-** | CF₃O- | **-OT** | -OCF₃ |
| **-FXO-** | CF₂=CH-O- | **-OXF** | -O-CH=CF₂ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N=C-C=C- | **-AN** | -C≡C-C≡N |

**Used together with one another and with others**

| | | | |
|---|---|---|---|
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

wherein n and m each denote integers, and the three dots "..." are place-holders for other abbreviations from this table.

The following table shows illustrative structures together with their respective abbreviations. These are shown in order to illustrate the meaning of the rules for the abbreviations. They furthermore represent compounds which may be preferably used.

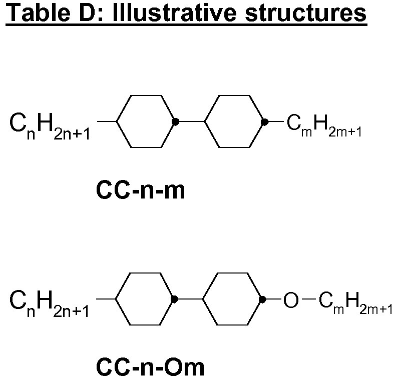

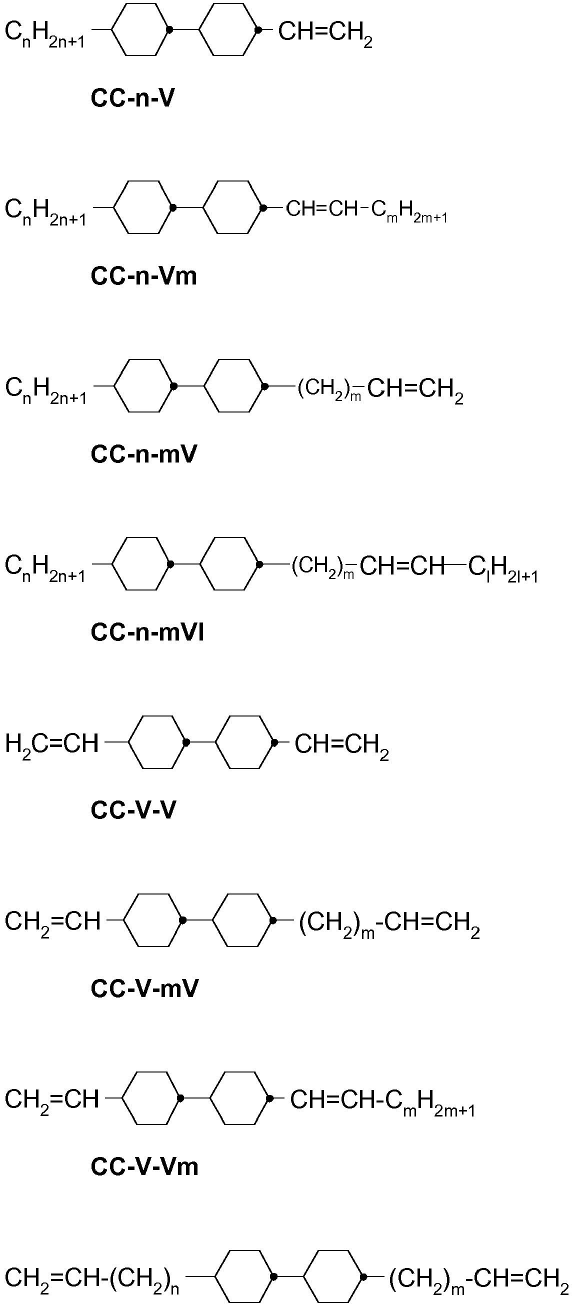

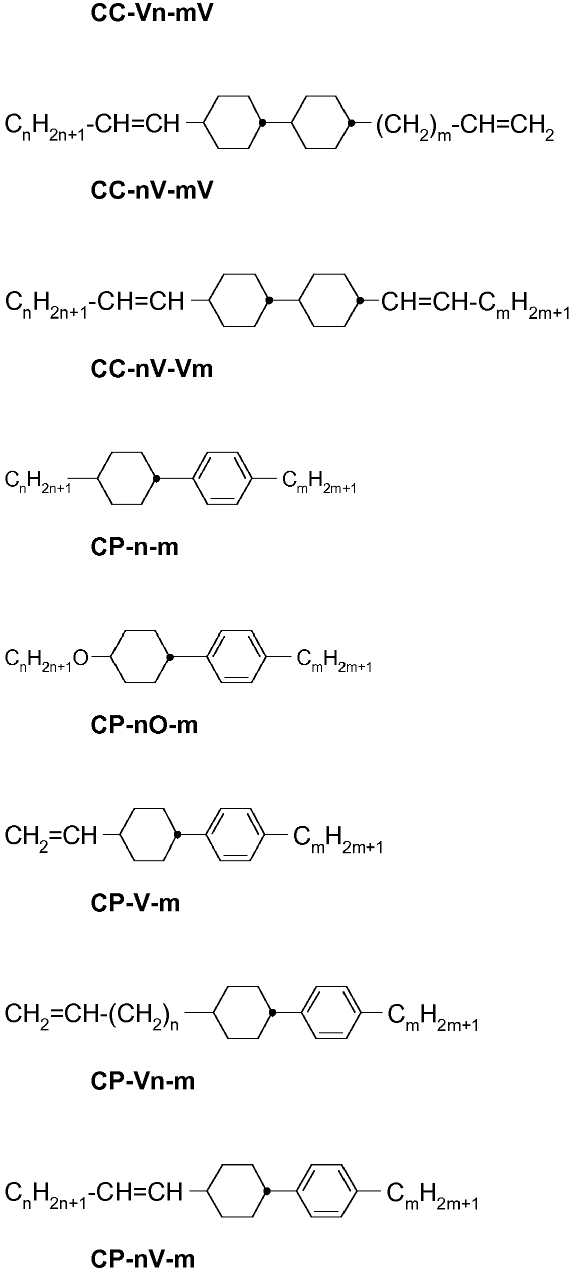

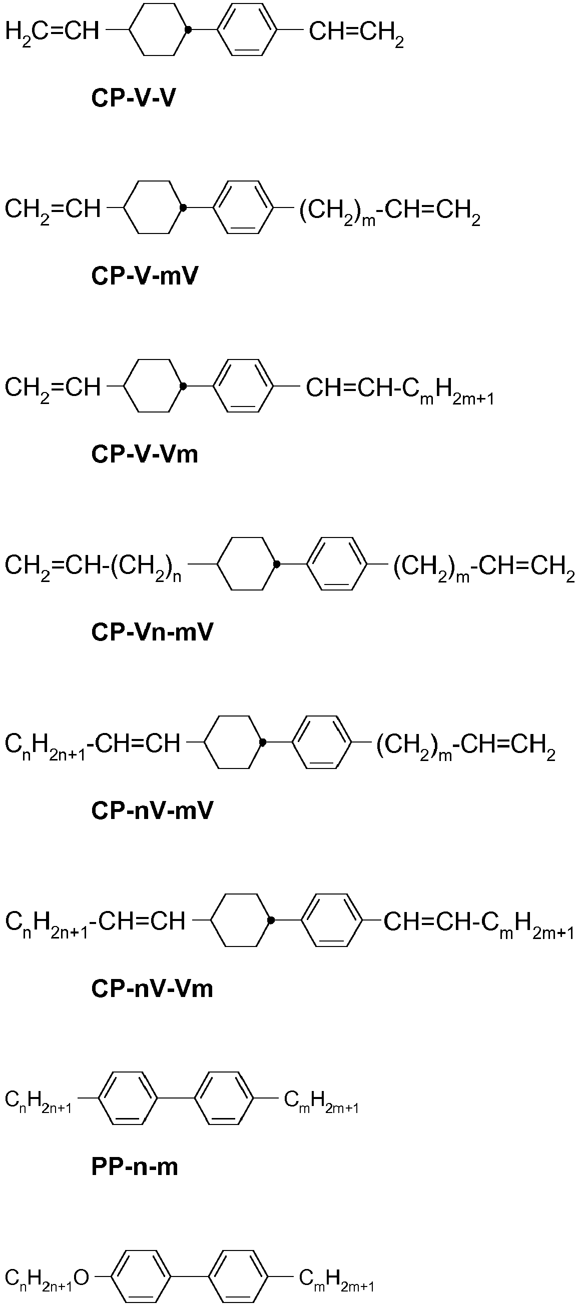

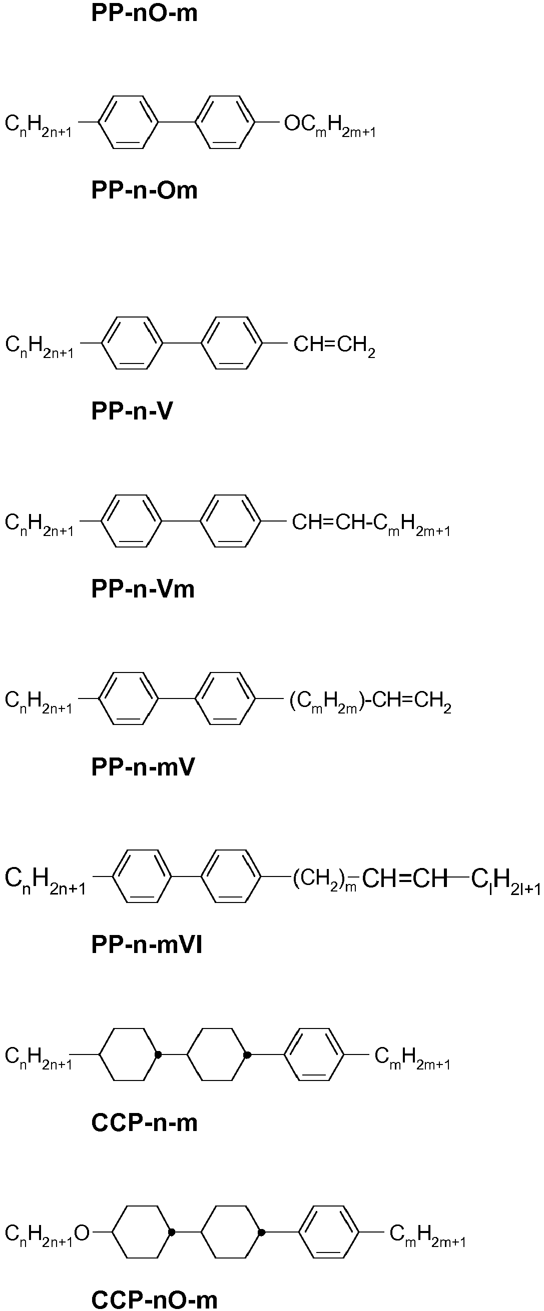

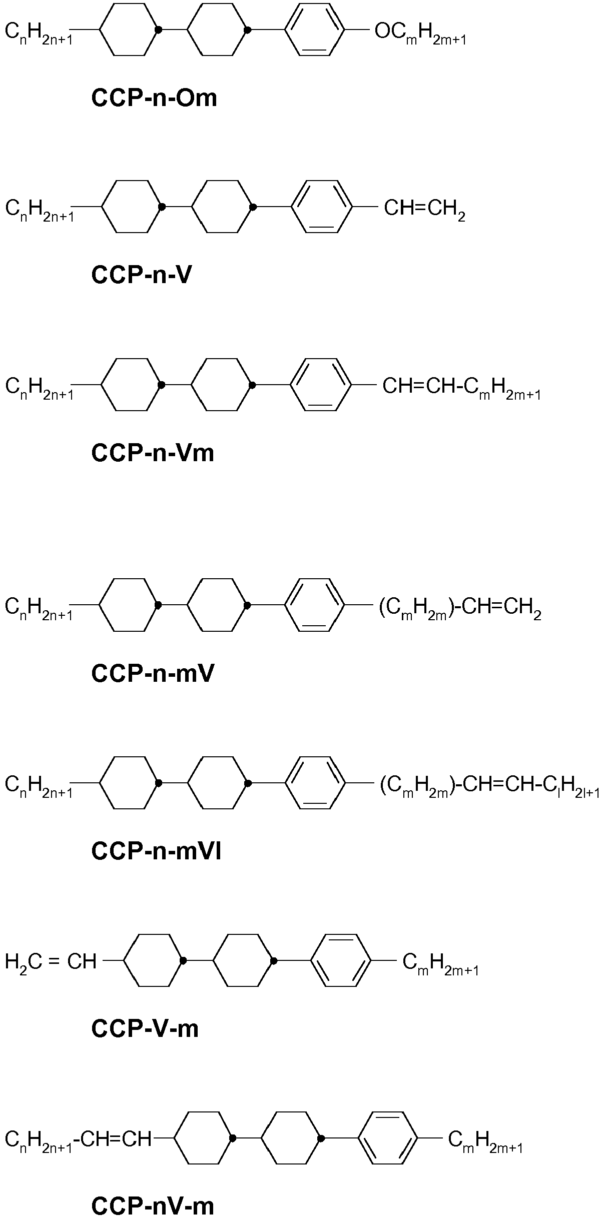

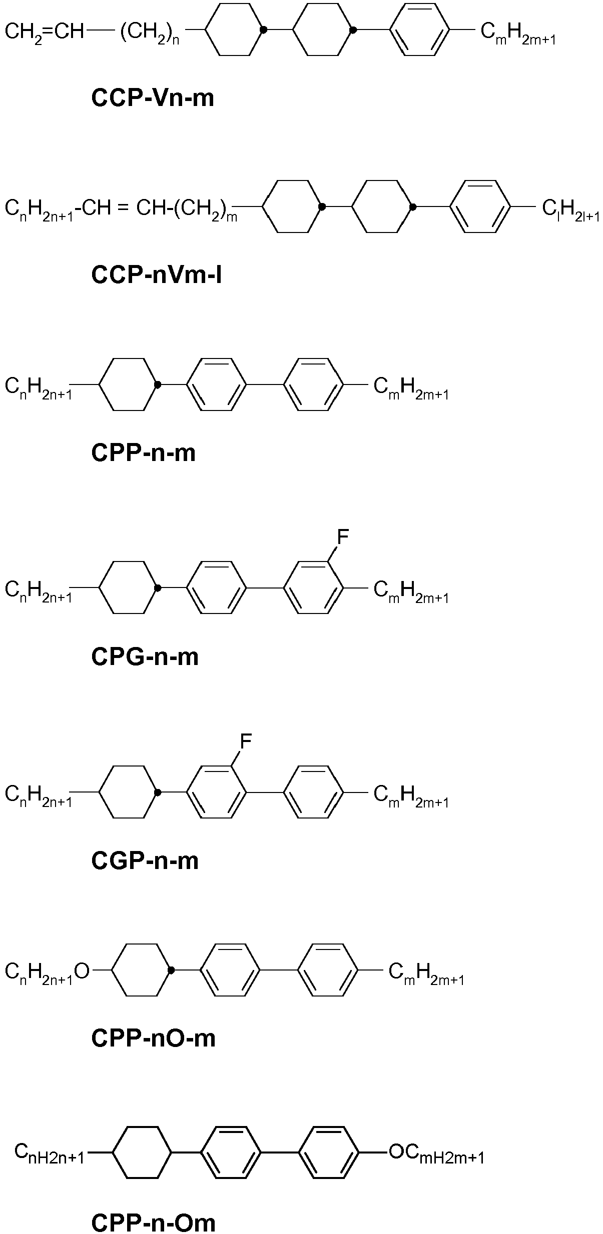

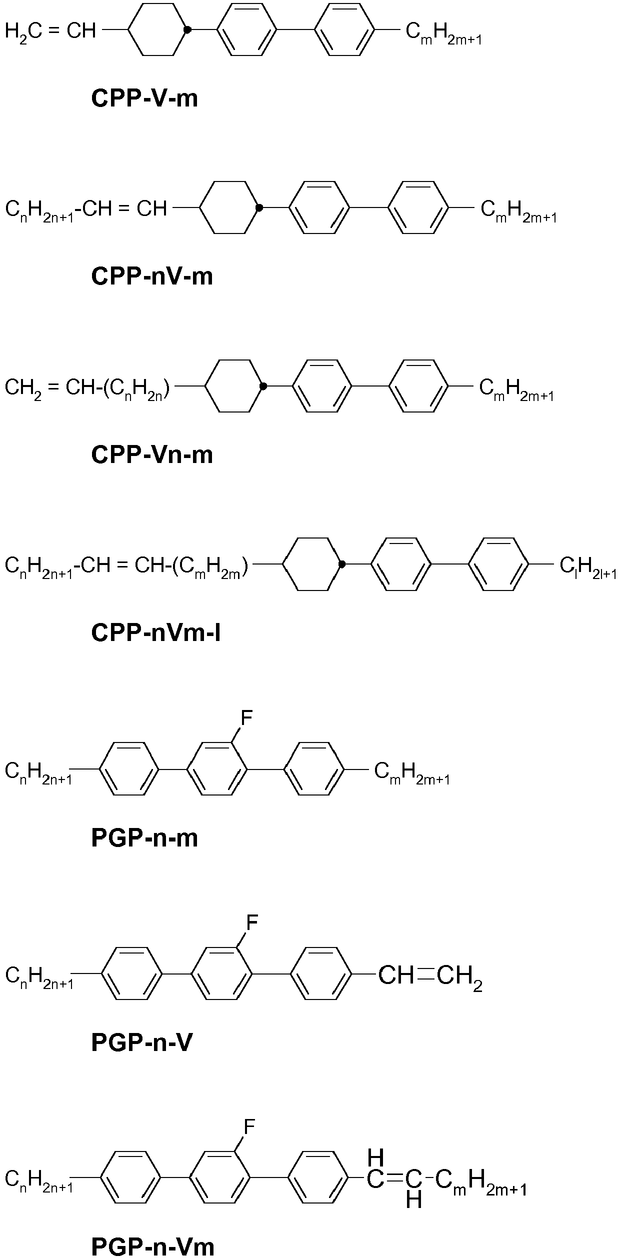

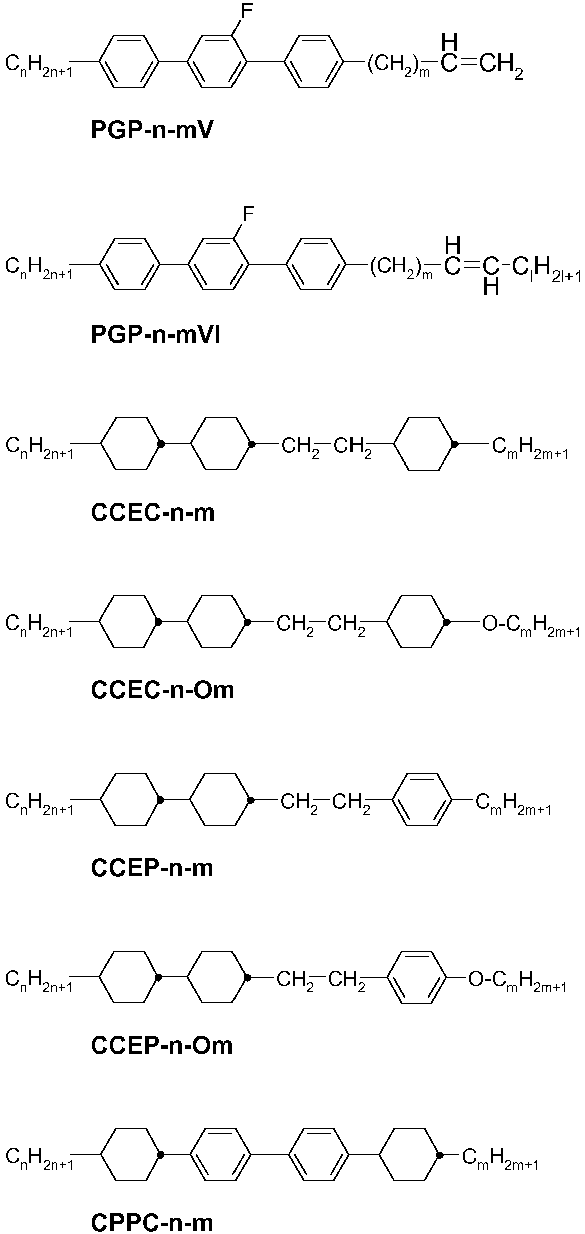

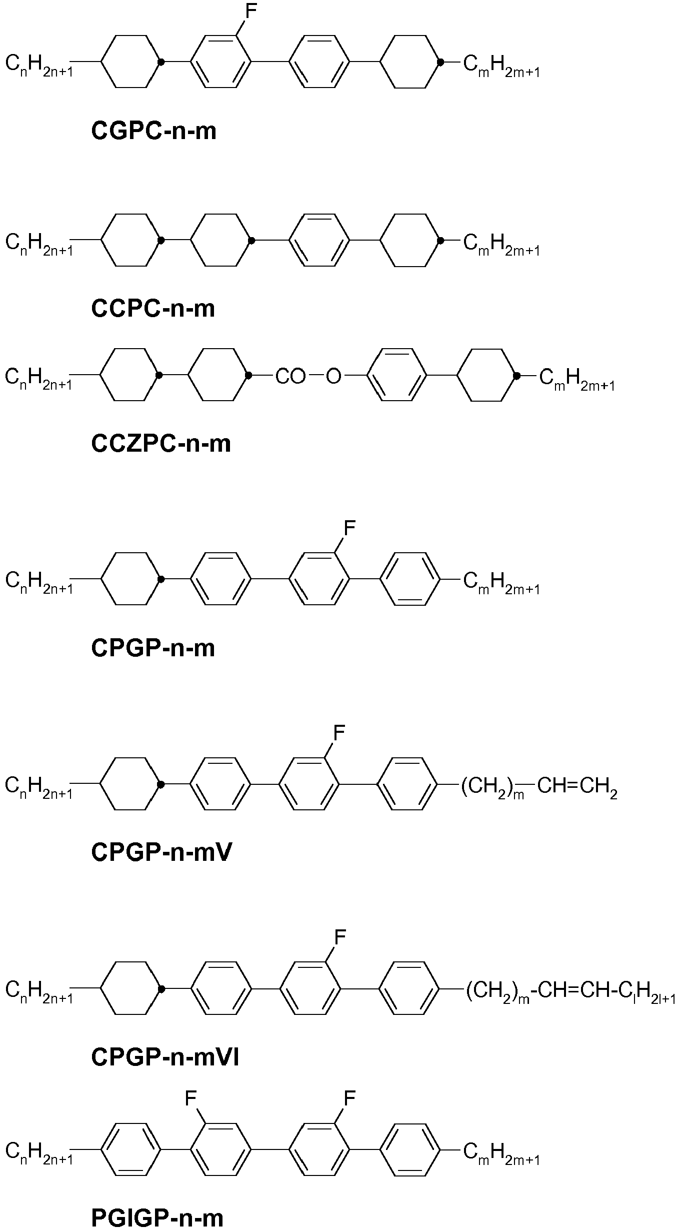

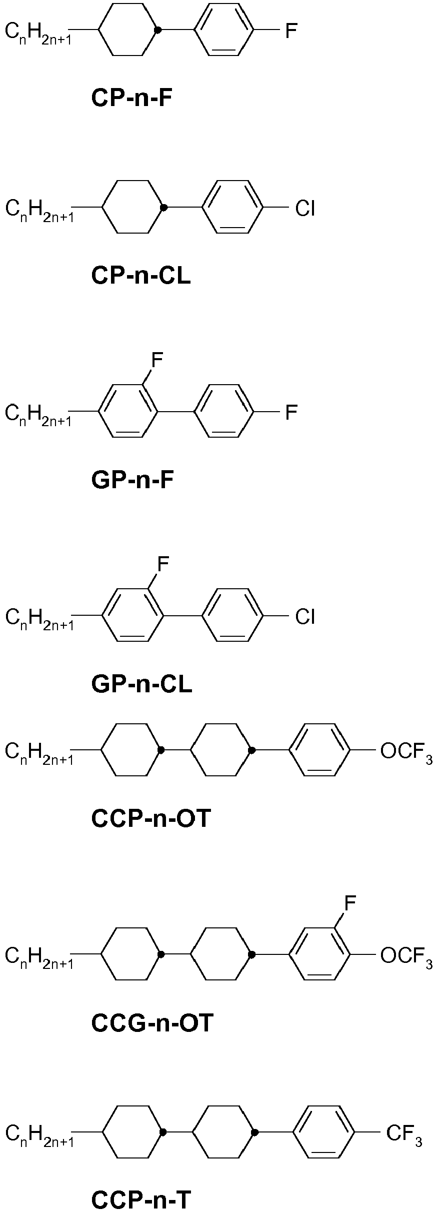

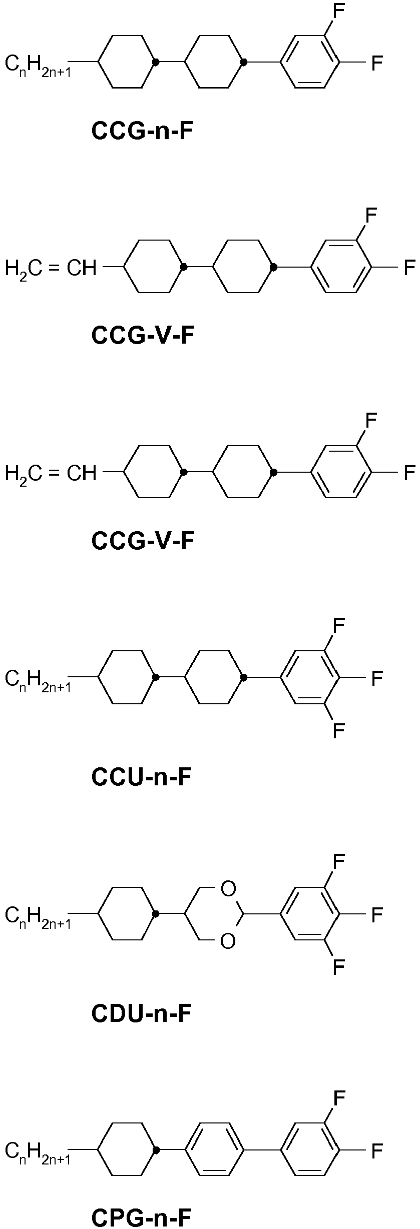

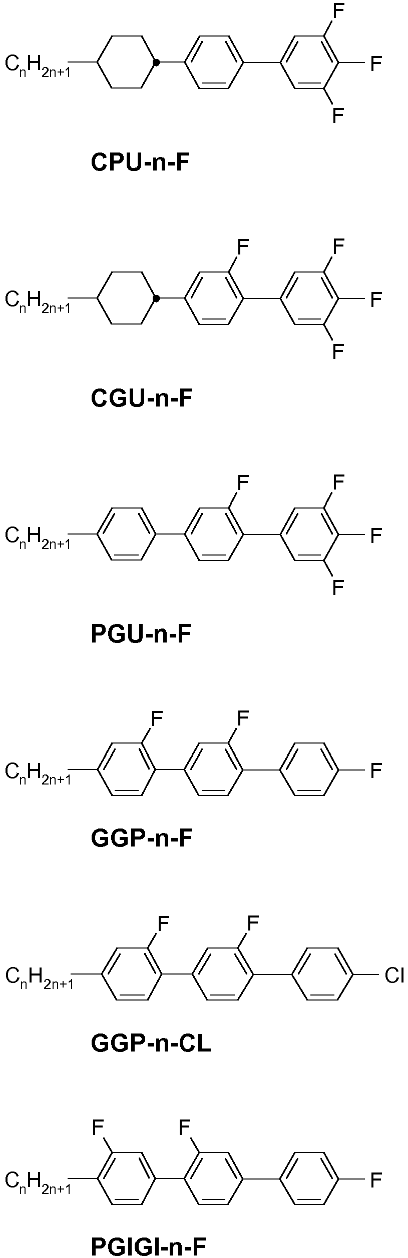

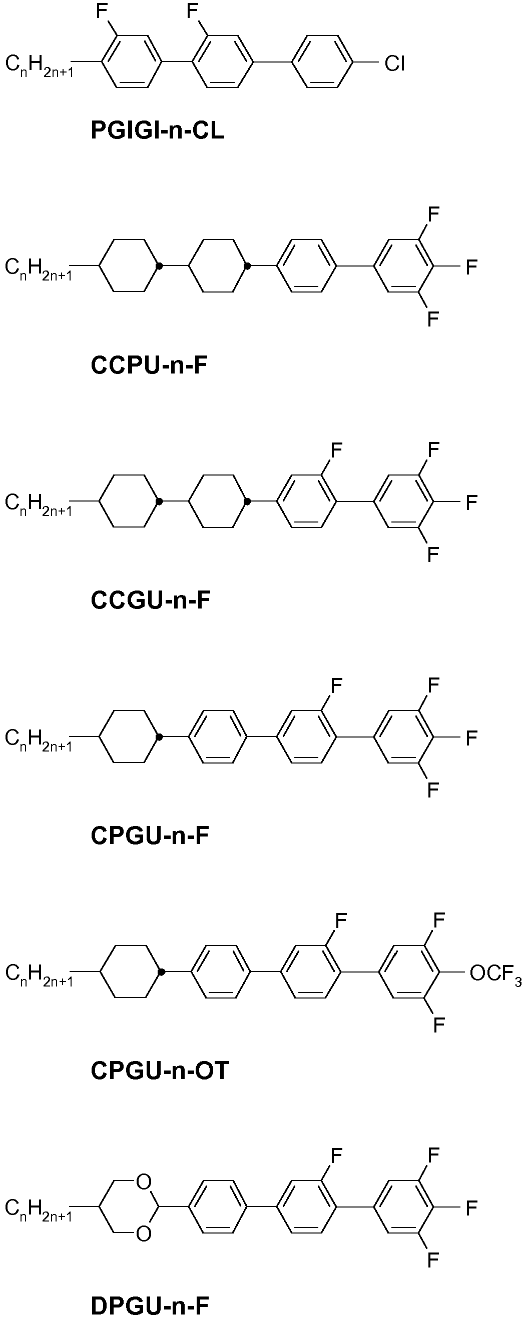

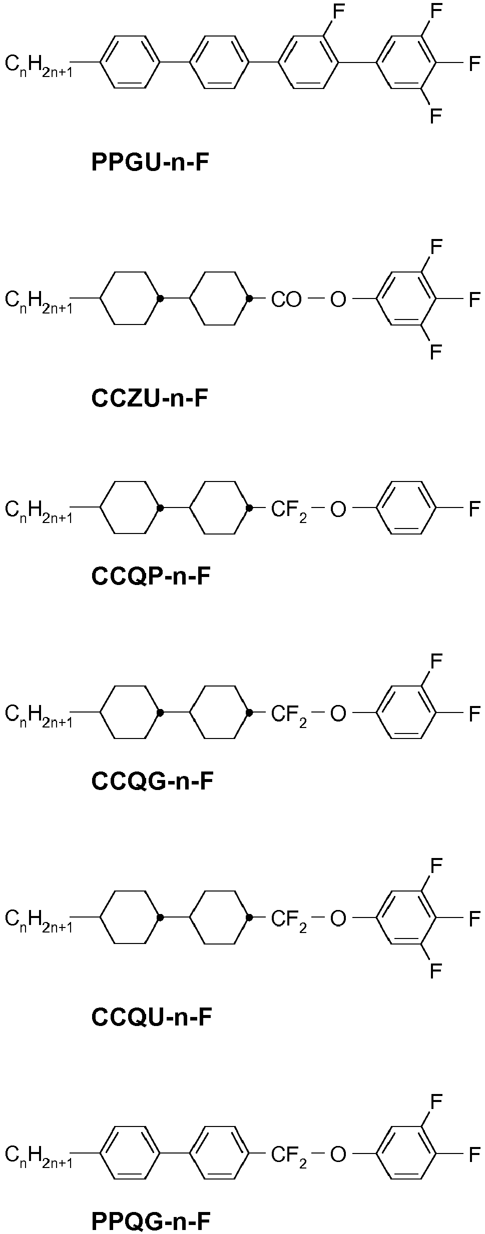

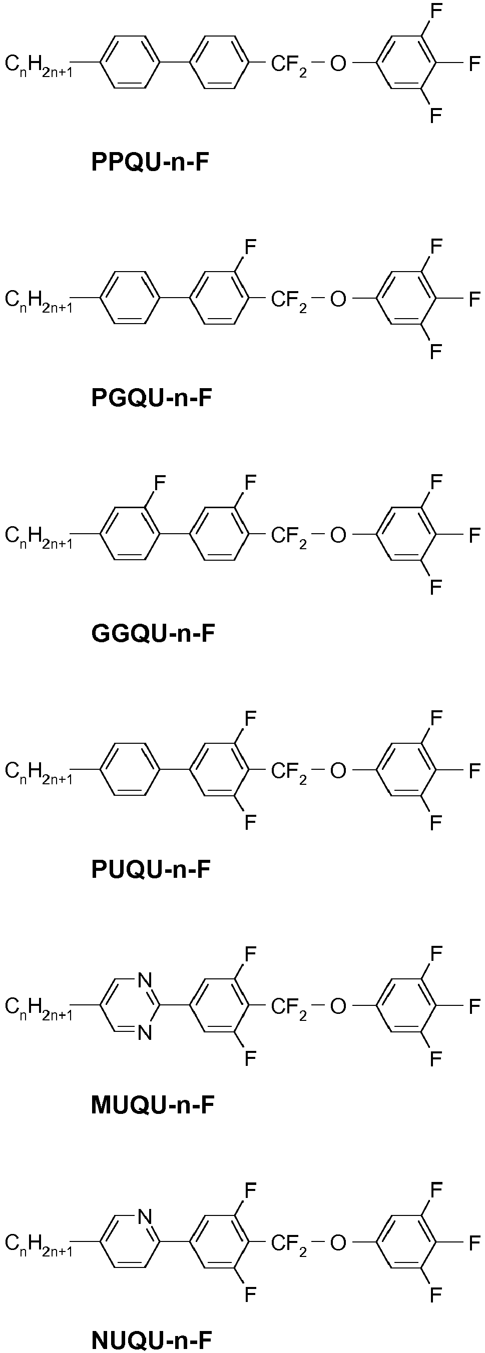

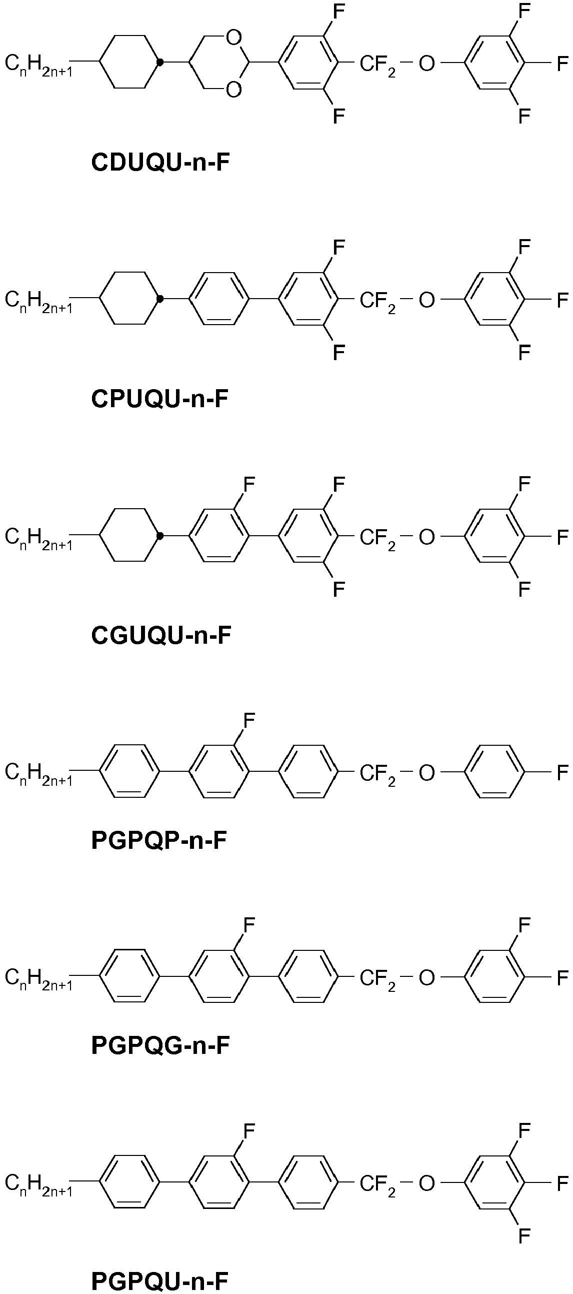

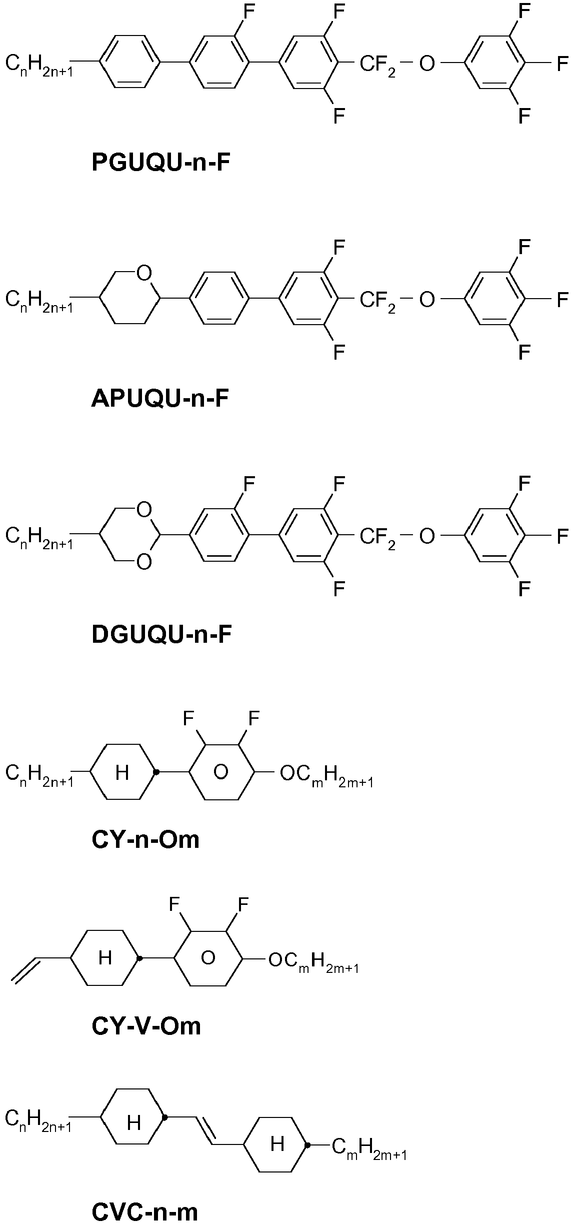

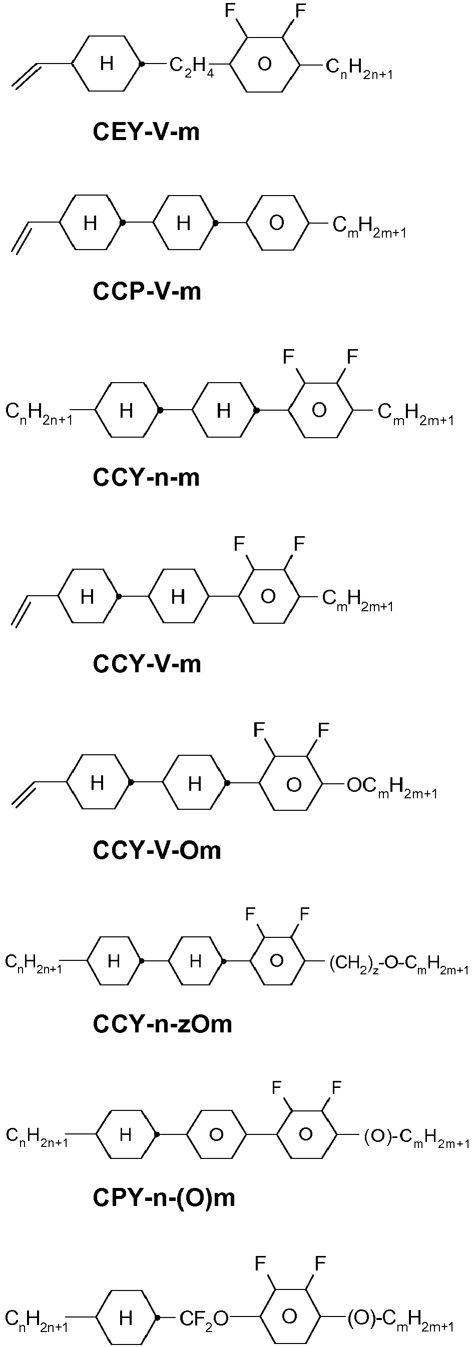

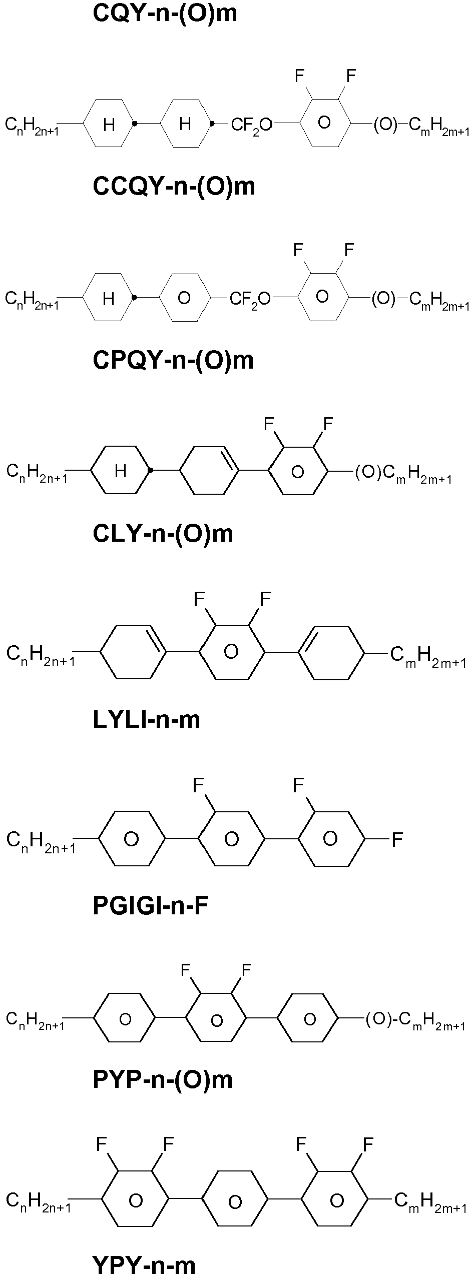

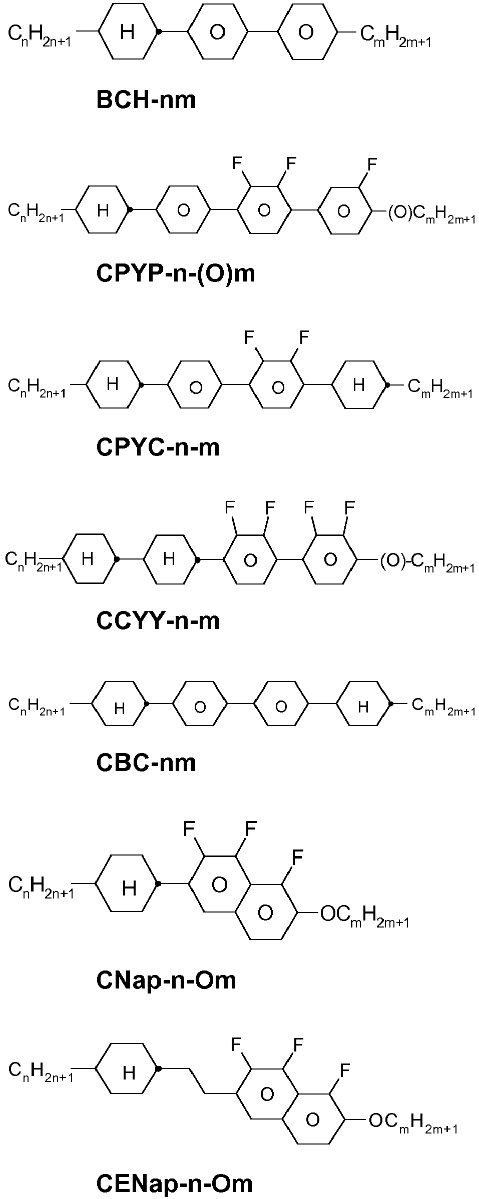

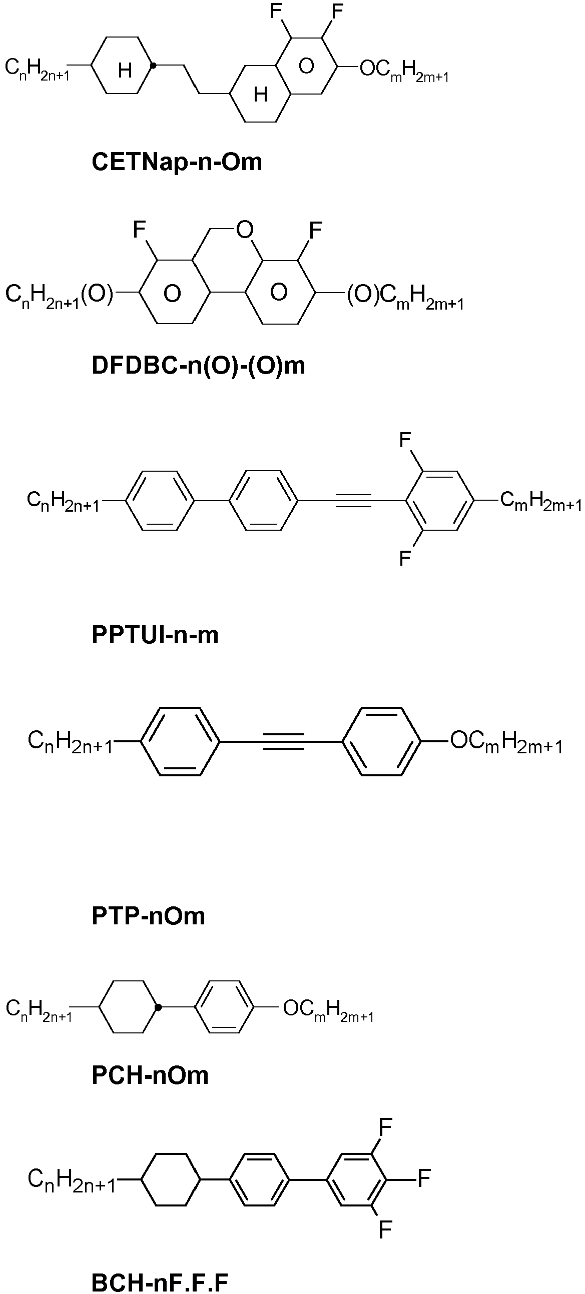

wherein n, m and I preferably, independently of one another, denote 1 to 7.

The following table shows illustrative compounds which can be used as additional stabilizers in the mesogenic media according to the present invention.

**Table E**

| Table E shows possible stabilizers which can be added to the LC media according to the invention, wherein n denotes an integer from 1 to 12, preferably 1, 2, 3, 4, 5, 6, 7 or 8, terminal methyl groups are not shown. | |
|---|---|
| 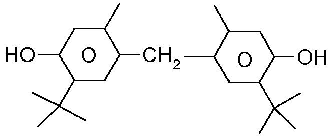 | 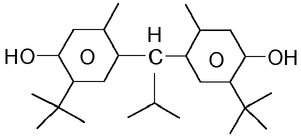 |
| 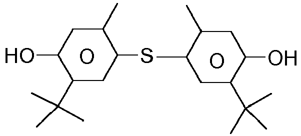 | 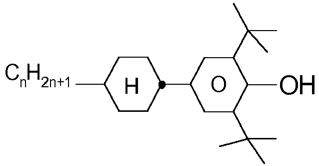 |
| 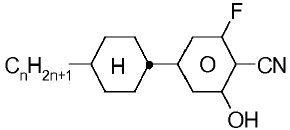 | 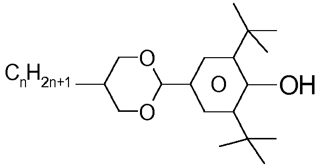 |
| 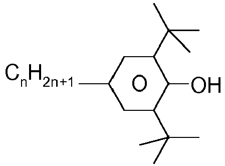 | 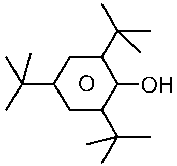 |
| 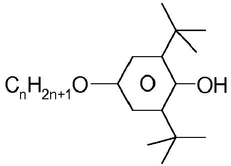 | 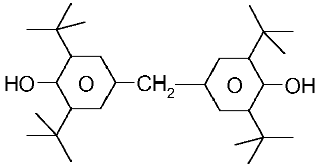 |
| 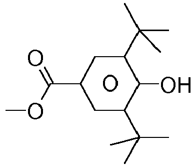 | 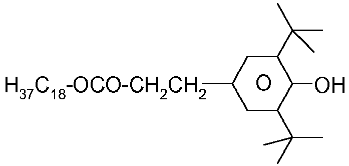 |
| 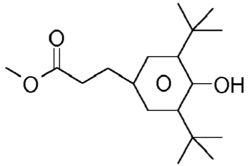 | 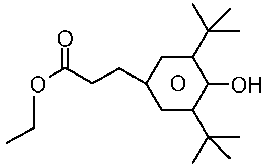 |
| 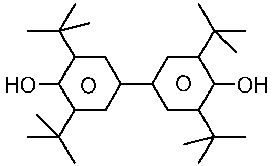 | 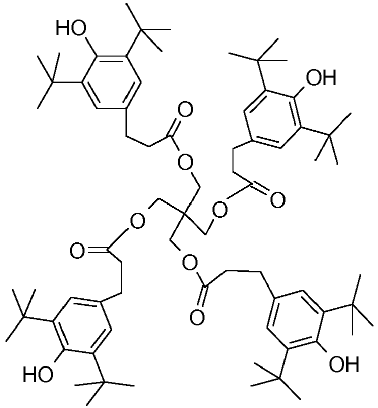 |
| 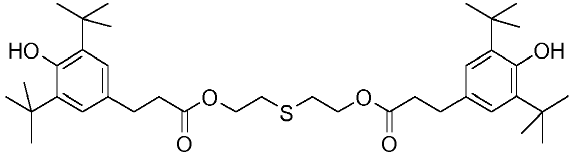 | |
| 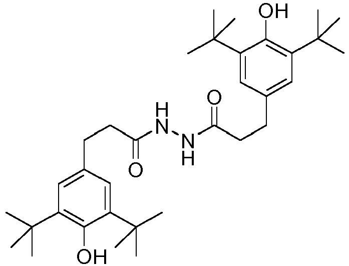 | 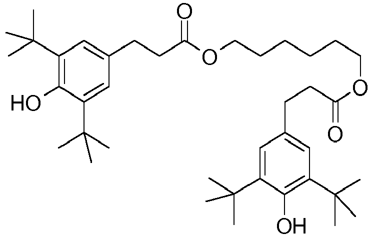 |
| 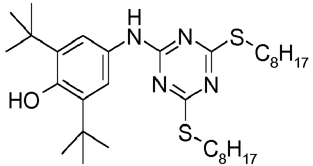 | 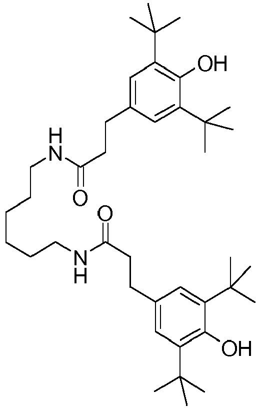 |
| 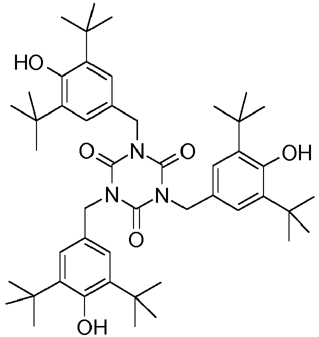 | 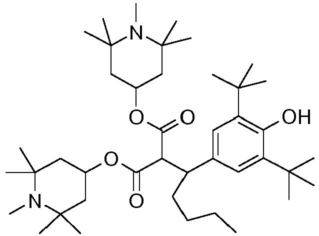 |
| 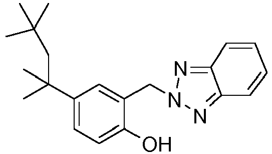 | 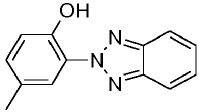 |
| 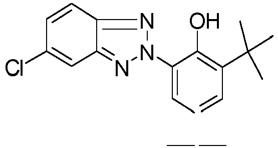 | 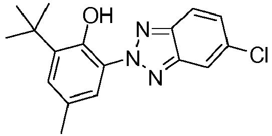 |
| 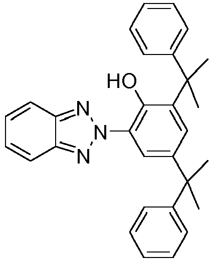 | 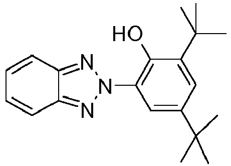 |
| 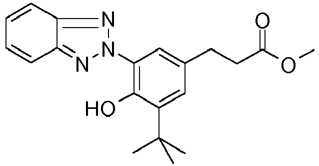 | 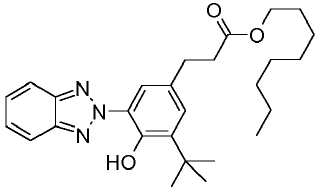 |
| 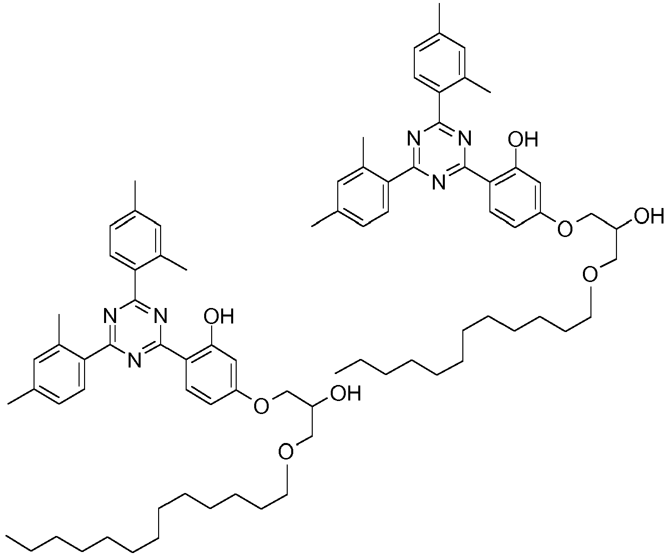 | |
| 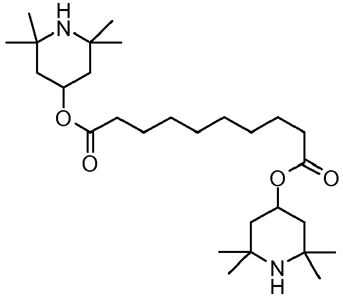 | 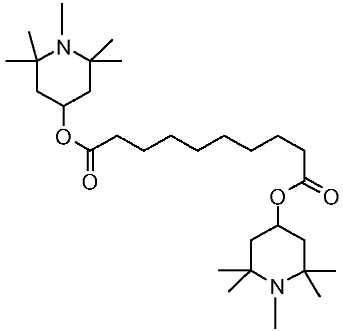 |
| 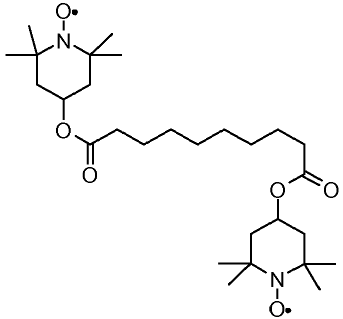 | 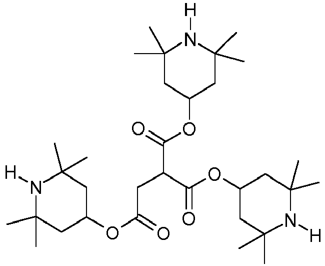 |
| 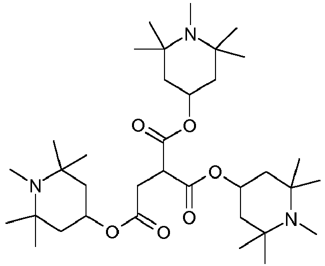 | 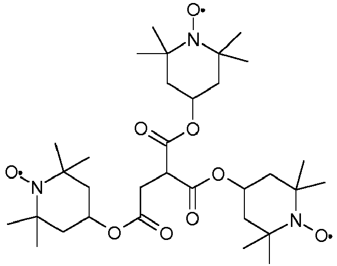 |
| 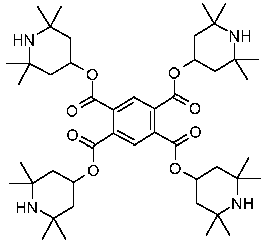 | 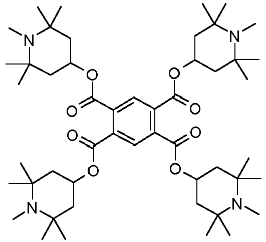 |
| 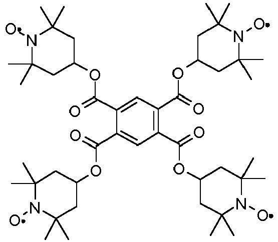 | |

The LC media preferably comprise 0 to 10% by weight, in particular 1 ppm to 5% by weight, particularly preferably 1 ppm to 1% by weight, of stabilizers.

Table F below shows illustrative compounds which can preferably be used as chiral dopants in the mesogenic media according to the present invention.

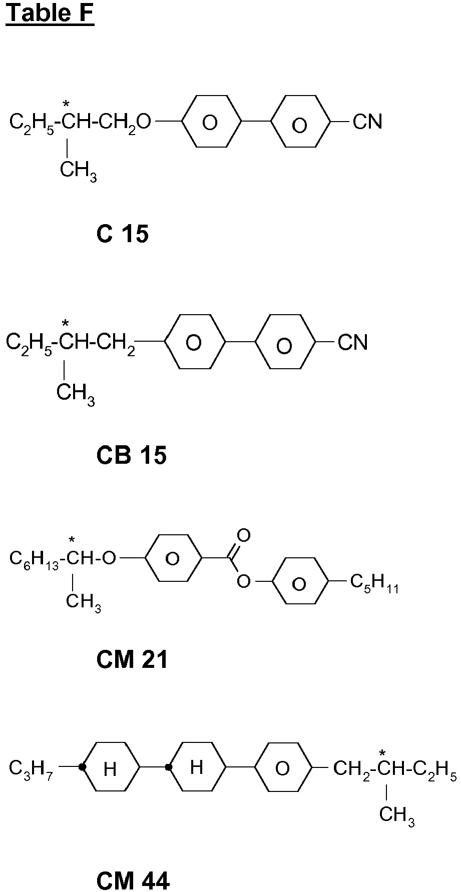

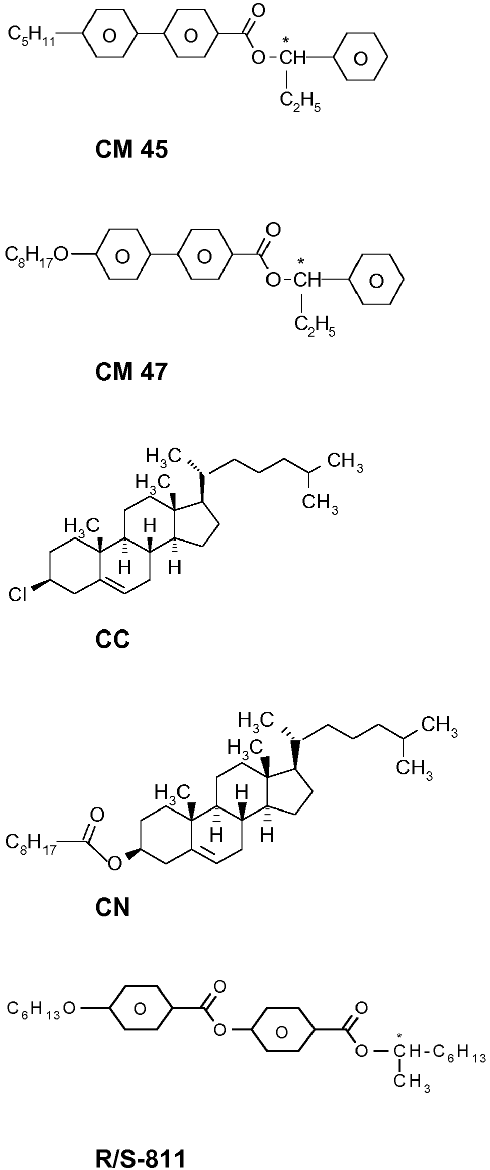

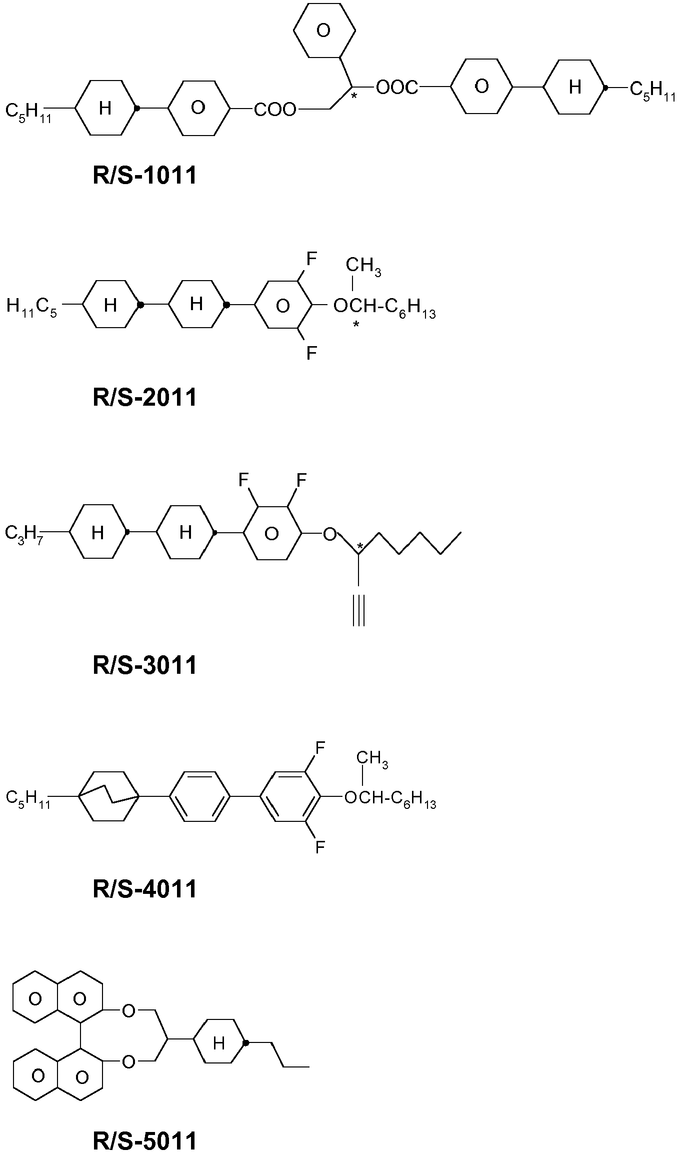

In a preferred embodiment of the present invention, the mesogenic media comprise one or more compounds selected from the compounds shown in Table F.

The mesogenic media according to the present invention preferably comprise two or more, preferably four or more, compounds selected from the compounds shown in the above tables D to F.

The LC media according to the present invention preferably comprise three or more, more preferably five or more compounds shown in Table D.

The following examples are merely illustrative of the present invention and they should not be considered as limiting the scope of the invention in any way. The examples and modifications or other equivalents thereof will become apparent to those skilled in the art in the light of the present disclosure.

### Examples

In the Examples,
- Vₒ: denotes threshold voltage, capacitive [V] at 20°C,
- nₑ: denotes extraordinary refractive index at 20°C and 589 nm,
- nₒ: denotes ordinary refractive index at 20°C and 589 nm,
- Δn: denotes optical anisotropy at 20°C and 589 nm,
- ε_{∥}: denotes dielectric permittivity parallel to the director at 20°C and 1 kHz,
- ε_{⊥}: denotes dielectric permittivity perpendicular to the director at 20°C and 1 kHz,
- Δε: denotes dielectric anisotropy at 20°C and 1 kHz,
- cl.p., T(N,I): denotes clearing point [°C],
- γ₁: denotes rotational viscosity measured at 20°C [mPa·s], determined by the rotation method in a magnetic field,
- K₁: denotes elastic constant, "splay" deformation at 20°C [pN],
- K₂: denotes elastic constant, "twist" deformation at 20°C [pN],
- K₃: denotes elastic constant, "bend" deformation at 20°C [pN],

The term "threshold voltage" for the present invention relates to the capacitive threshold (V₀), unless explicitly indicated otherwise. In the Examples, as is generally usual, the optical threshold can also be indicated for 10% relative contrast (V₁₀).

### Reference Example 1

A liquid-crystal mixture B-1 is prepared and characterized with respect to its general physical properties, having the composition and properties as indicated in the following table.

**Base Mixture B-1**

| | | | |
|---|---|---|---|
| CPGP-5-2 | 5.00% | Clearing point [°C]: | 102.0 |
| CPGP-5-3 | 5.00% | Δn [589 nm, 20°C]: | 0.249 |
| PGUQU-3-F | 6.00% | nₑ [589 nm, 20°C]: | 1.761 |
| PGUQU-5-F | 8.00% | Δε [1 kHz, 20°C]: | 14.2 |
| PGU-3-F | 8.00% | ε_{∥} [1 kHz, 20°C]: | 18.3 |
| PUQU-3-F | 17.00% | K₁ [pN, 20°C]: | 16.8 |
| PCH-3O1 | 10.00% | K₃ [pN, 20°C]: | 16.8 |
| PGIGI-3-F | 6.00% | γ₁ [mPa·s, 20°C]: | 282 |
| PPTUI-3-2 | 10.00% | V₀ [20°C, V]: | 1.13 |
| PPTUI-3-4 | 15.00% | | |
| PTP-1O2 | 5.00% | | |
| PTP-2O1 | 5.00% | | |
| | Σ 100.00% | | |

### Reference Example 2

A liquid-crystal mixture B-2 is prepared and characterized with respect to its general physical properties, having the composition and properties as indicated in the following table.

**Base Mixture B-2**

| | | | |
|---|---|---|---|
| CPGP-5-2 | 3.00% | Clearing point [°C]: | 118.5 |
| DGUQU-4-F | 4.00% | Δn [589 nm, 20°C]: | 0.274 |
| PGUQU-3-F | 8.00% | nₑ [589 nm, 20°C]: | 1.783 |
| PGUQU-4-F | 10.00% | Δε [1 kHz, 20°C]: | 15.3 |
| PGUQU-5-F | 10.00% | ε_{∥} [1 kHz, 20°C]: | 19.0 |
| PCH-3O1 | 15.00% | K₁ [pN, 20°C]: | |
| PPTUI-3-2 | 15.00% | K₃ [pN, 20°C]: | |
| PPTUI-3-4 | 25.00% | γ₁ [mPa·s, 20°C]: | |
| PTP-1O2 | 5.00% | V₀ [20°C, V]: | |
| PTP-2O1 | 5.00% | | |
| | Σ 100.00% | | |

### Reference Example 3

A liquid-crystal mixture B-3 is prepared and characterized with respect to its general physical properties, having the composition and properties as indicated in the following table.

**Base Mixture B-3**

| | | | |
|---|---|---|---|
| APUQU-3-F | 8.00% | Clearing point [°C]: | 128 |
| BCH-3.F.F.F | 15.00% | Δn [589 nm, 20°C]: | 0.206 |
| CCGU-3-F | 8.00% | nₑ [589 nm, 20°C]: | 1.711 |
| CPGP-5-2 | 4.00% | Δε [1 kHz, 20°C]: | 42.7 |
| CPGP-5-3 | 4.00% | ε_{∥} [1 kHz, 20°C]: | 48.2 |
| CPGU-3-OT | 8.00% | K₁ [pN, 20°C]: | |
| DPGU-4-F | 4.00% | K₃ [pN, 20°C]: | |
| PGU-2-F | 10.00% | γ₁ [mPa.s, 20°C]: | |
| PGU-3-F | 11.00% | V₀ [20°C, V]: | |
| PGUQU-3-F | 8.00% | | |
| PGUQU-4-F | 10.00% | | |
| PGUQU-5-F | 10.00% | | |
| | Σ 100.00% | | |

### Reference Example 4

A liquid-crystal mixture B-4 is prepared and characterized with respect to its general physical properties, having the composition and properties as indicated in the following table.

**Base Mixture B-4**

| | | | |
|---|---|---|---|
| CPGP-5-2 | 5.00% | Clearing point [°C]: | 134.1 |
| CPGP-5-3 | 5.00% | Δn [589 nm, 20°C]: | 0.206 |
| DPGU-4-F | 8.00% | nₑ [589 nm, 20°C]: | 1.751 |
| PGUQU-3-F | 8.00% | Δε [1 kHz, 20°C]: | 7.2 |
| PGUQU-5-F | 4.00% | ε_{∥} [1 kHz, 20°C]: | 10.9 |
| PGP-1-2V | 14.00% | K₁ [pN, 20°C]: | |
| PGP-2-2V | 14.00% | K₃ [pN, 20°C]: | |
| PGP-2-3 | 6.00% | γ₁ [mPa·s, 20°C]: | |
| PGP-3-2V | 13.00% | V₀ [20°C, V]: | |
| PCH-3O1 | 18.00% | | |
| PGIGI-3-F | 5.00% | | |
| | Σ 100.00% | | |

### Reference Example 5

A liquid-crystal mixture B-5 is prepared and characterized with respect to its general physical properties, having the composition and properties as indicated in the following table.

**Base Mixture B-5**

| | | | |
|---|---|---|---|
| PGU-3-F | 10.00% | Clearing point [°C]: | 107.0 |
| PUQU-3-F | 13.00% | Δn [589 nm, 20°C]: | 0.301 |
| PGUQU-3-F | 6.00% | nₑ [589 nm, 20°C]: | 1.818 |
| PCH-3O1 | 7.00% | Δε [1 kHz, 20°C]: | 9.6 |
| PTP-1O2 | 7.00% | ε_{∥} [1 kHz, 20°C]: | 13.2 |
| PTP-2O1 | 5.00% | K₁ [pN, 20°C]: | |
| PPTUI-3-2 | 36.00% | K₃ [pN, 20°C]: | |
| PTUI-3-4 | 16.00% | γ₁ [mPa·s, 20°C]: | |
| | Σ 100.00% | V₀ [20°C, V]: | |

### Reference Example 6

A liquid-crystal mixture B-6 is prepared and characterized with respect to its general physical properties, having the composition and properties as indicated in the following table.

**Base Mixture B-6**

| | | | |
|---|---|---|---|
| CPGP-5-2 | 5.00% | Clearing point [°C]: | 128.9 |
| CPGP-5-3 | 5.00% | Δn [589 nm, 20°C]: | 0.212 |
| DPGU-4-F | 4.00% | nₑ [589 nm, 20°C]: | 1.723 |
| PGUQU-3-F | 8.00% | Δε [1 kHz, 20°C]: | 6.2 |
| PGUQU-5-F | 6.00% | ε_{∥} [1 kHz, 20°C]: | 9.6 |
| PGP-1-2V | 14.00% | K₁ [pN, 20°C]: | |
| PGP-2-2V | 13.00% | K₃ [pN, 20°C]: | |
| PGP-2-3 | 6.00% | γ₁ [mPa·s, 20°C]: | |
| PGP-3-2V | 9.00% | V₀ [20°C, V]: | |
| CC-3-V | 22.00% | | |
| PGIGI-3-F | 8.00% | | |
| | Σ 100.00% | | |

### Reference Example 7 (not according to the invention)

A liquid-crystal mixture B-7 is prepared and characterized with respect to its general physical properties, having the composition and properties as indicated in the following table.

**Base Mixture B-7**

| | | | |
|---|---|---|---|
| PY-3-O2 | 8.00% | Clearing point [°C]: | 88.0 |
| PY-5-O2 | 8.00% | Δn [589 nm, 20°C]: | 0.205 |
| PGIGI-3-F | 8.00% | nₑ [589 nm, 20°C]: | 1.708 |
| PP-1-2V | 4.00% | Δε [1 kHz, 20°C]: | -3.2 |
| PP-1-2V1 | 6.00% | ε_{∥} [1 kHz, 20°C]: | |
| BCH-32 | 6.00% | K₁ [pN, 20°C]: | |
| CPY-2-O2 | 9.00% | K₃ [pN, 20°C]: | |
| CPY-3-O2 | 9.00% | γ₁ [mPa·s, 20°C]: | 147 |
| PYP-2-3 | 10.00% | V₀ [20°C, V]: | 2.30 |
| PGIY-2-1 | 8.00% | | |
| PGIY-3-1 | 8.00% | | |
| PGIY-2-O4 | 8.00% | | |
| PGIY-3-O4 | 8.00% | | |
| | Σ 100.00% | | |

### Reference Example 8

A liquid-crystal mixture B-8 is prepared and characterized with respect to its general physical properties, having the composition and properties as indicated in the following table.

**Base Mixture B-8**

| | | | |
|---|---|---|---|
| DGUQU-4-F | 3.00% | Clearing point [°C]: | 85.5 |
| DPGU-4-F | 2.00% | Δn [589 nm, 20°C]: | 0.208 |
| PGUQU-3-F | 8.00% | nₑ [589 nm, 20°C]: | 1.705 |
| PGUQU-4-F | 9.00% | Δε [1 kHz, 20°C]: | 24.0 |
| PGUQU-5-F | 10.00% | ε_{∥} [1 kHz, 20°C]: | 28.4 |
| PGU-3-F | 5.00% | K₁ [pN, 20°C]: | |
| PPTUI-3-2 | 11.00% | K₃ [pN, 20°C]: | |
| PPTUI-3-4 | 15.00% | γ₁ [mPa·s, 20°C]: | |
| PUQU-3-F | 13.00% | V₀ [20°C, V]: | |
| CC-3-O1 | 15.00% | | |
| PCH-3O1 | 9.00% | | |
| | Σ 100.00% | | |

### Example 1

### Preparation of Nanocapsules

LC mixture B-1 (2.66 g), hexadecane (0.66 g) and methyl methacrylate (3.30 g) are weighed into a 250 ml tall beaker.

Brij L23 (0.83 g) is weighed into a 250 ml conical flask and water (100 ml) is added. This mixture is then sonicated for 5 to 10 minutes.

The Brij aqueous surfactant solution is poured directly into the beaker containing the organics. The mixture is turrax mixed for 5 minutes at 10,000 rpm. Once turrax mixing is complete, the crude emulsion is passed through a high-pressure homogenizer at 30,000 psi four times.

The mixture is charged into a flask and fitted with a condenser, and after adding AIBN (35 mg) is heated to 70°C for three hours. The reaction mixture is cooled, filtered, and then size analysis of the material is carried out on a Zetasizer (Malvern Zetasizer Nano ZS) instrument.

The obtained capsules have an average size of 85 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is redispersed in 1 ml of the supernatant and sampled for testing.

The obtained nanocapsules exhibit favourable physical and electro-optical characteristics and show suitable switching behaviour in response to an applied voltage.

### Preparation of a 30% solid content PVA binder

The PVA (molecular weight M_{w} of PVA: 31k; 88% hydrolysed) is first washed to remove ions in a Soxhlet apparatus for 3 days.

46.66 g of ion-free water are added to a 150 ml bottle, a large magnetic stirrer bar is added and the bottle is placed on a 50°C stirrer hotplate and allowed to come to temperature. 20.00 g of the solid washed 31k PVA are weighed into a beaker. A vortex is created in the bottle and gradually the 31k PVA is added over approximately 5 minutes, stopping to allow the floating PVA to disperse into the mixture. The hotplate is turned up to 90°C and stirring is continued for 2-3 hours. The bottle is placed in oven at 80°C for 20 hours. The mixture is filtered whilst still warm through a 50 µm cloth filter under an air pressure of 0.5 bar. The filter is replaced with a Millipore 5 µm SVPP filter and the filtration is repeated.

The solid content of the filtered binder is measured 3 times and the average is calculated by weighing an empty DSC pan using a DSC microbalance, adding approximately 40 mg of the binder mixture to the DSC pan and recording the mass, placing the pan on a 60°C hotplate for 1 hour followed by 110°C hotplate for 10 min, removing the pan from the hotplate and allowing to cool, recording the mass of the dry pan, and calculating the solid content.

### Preparation of Composite System

The obtained nanocapsule sample is initially checked by microscopy for unwanted clumping or lumping, and also after film forming. The solid content of the concentrated nanocapsule suspension is measured, wherein the solid content of the sample is measured 3 times and the average is calculated. The sample is weighed in an empty DSC pan using the DSC microbalance. Approximately 40 mg of the sample is added to the DSC pan and the mass is recorded. The pan is placed on a 60°C hotplate for 1 hour followed by 110°C hotplate for 10 min. The pan is removed from the hotplate and allowed to cool. The mass of the dry pan is recorded, and the solid content is calculated.

The prepared PVA is added to the concentrated nanocapsule sample, wherein the approximately 30% washed 31k PVA mixture is added in a 2.5 ml vial, and then the nanocapsules are added to the vial. Ion-free water is added to give a total solids content of 20% of an approximately 0.5 g mixture. The mixture is stirred using a vortex stirrer and leaving the mixture on a roller overnight to allow the PVA to disperse.

### Film Preparation on Substrate

The substrate used is IPS (in-plane switching) glass having ITO coated interdigitated electrodes with an electrode width of 4 µm and a gap of 8 µm. The substrate is placed in a rack and plastic box for washing. Deionised water is added and the sample is placed in a sonicator for 10 minutes. The substrate is removed from the water and blotted with a paper towel to remove the excess water. Washing is repeated with acetone, 2-propanol (IPA) and finally water for ion-chromatography. The substrate is then dried using a compressed air gun. The substrate is treated with UV-ozone for 10 minutes.

The composite system comprising the nanocapsules and the binder is then coated on the substrate. 40 µL of mixture are coated as a film using a coating machine (K Control Coater, RK PrintCoat Instruments, bar coating with k bar 1, coating speed of 7). The sample is dried at 60 °C for 10 minutes on a hotplate, under a lid to prevent draughts and stop contaminants falling onto the film. The appearance of the film is recorded. Prepared films are stored in a dry box between measurements.

Film thickness is measured by removing the film from above the electrical contacts with a razor blade. The film thickness is measured in the region of the middle electrode using a profilometer (Dektak XT surface profiler, Bruker) with a stylus force of 5 mg and a scan length of 3000 nm and a time of 30 s. The desired film thickness of 4.0-5.5 microns is observed.

### Measurement of Electro-optical Properties

The appearance of the film is checked by eye for uniformity and defects. Two electrodes are soldered to the glass. Voltage-transmission curves are measured using the dynamic scattering mode (DSM).

Images of the dark and light state are also recorded using a microscope at the required voltages for 10% and 90% transmission.

Switching speeds are measured at 40°C and 25°C at 150 Hz modulation frequency, and also at 10 Hz as appropriate.

The measured electro-optical parameters for the prepared film comprising the nanocapsules and the binder are given in the following Table.

**Electro-optical parameters**

| | |
|---|---|
| Capsule content | 3.8% |
| V₁₀ | 20 V |
| Max. transmission | 1.54% |

### Example 2

LC mixture B-1 (2.0 g), ethylene dimethacrylate (0.60 g), 2-hydroxy ethylmethacrylate (0.07 g), methyl methacrylate (0.15 g) and hexadecane (0.10 g) are weighed into a 250 ml tall beaker.

This mixture is treated and investigated as described above in Example 1.

The obtained capsules have an average size of 124 nm, as determined by DLS (Zetasizer) analysis.

The obtained nanocapsules exhibit favourable physical and electro-optical characteristics and show suitable switching behaviour in response to an applied voltage.

A composite system and a film comprising the obtained capsules and the binder are prepared as described above in Example 1.

The measured electro-optical parameters for the prepared film comprising the nanocapsules and the binder are given in the following Table.

**Electro-optical parameters**

| | |
|---|---|
| Max. transmission | 19.16% |
| V₁₀ | 17 V |
| Capsule content | 14.4% |

### Example 3

LC mixture B-1 (2.0 g), ethylene dimethacrylate (0.66 g), hydroxy ethylmethacrylate (0.08 g), methyl methacrylate (0.16 g) and 2-isopropoxy ethanol (0.10 g) are weighed into a 250 ml tall beaker.

This mixture is treated and investigated as described above in Example 1.

The obtained capsules have an average size of 204 nm, as determined by DLS (Zetasizer) analysis.

The obtained nanocapsules exhibit favourable physical and electro-optical characteristics and show suitable switching behaviour in response to an applied voltage.

A composite system and a film comprising the obtained capsules and the binder are prepared as described above in Example 1.

The measured electro-optical parameters for the prepared film comprising the nanocapsules and the binder are given in the following Table.

**Electro-optical parameters**

| | |
|---|---|
| Capsule content | 39.9% |
| V₁₀ | 55 V |
| Max. transmission | 21.6% |
| tₒₙ (ms) | 0.27 |
| t_{off} (ms) | 0.89 |

### Example 4

LC mixture B-1 (1.0g), hexanediol diacrylate (0.03 g), hydroxy ethylmethacrylate (0.03 g), isobornyl methacrylate (0.110 g) and 2-ethylhexyl acrylate (0.250 g) are weighed into a 250 ml tall beaker.

This mixture is treated and investigated as described above in Example 1.

The obtained capsules have an average size of 114 nm, as determined by DLS (Zetasizer) analysis.

The obtained nanocapsules exhibit favourable physical and electro-optical characteristics and show suitable switching behaviour in response to an applied voltage.

A composite system and a film comprising the obtained capsules and the binder are prepared as described above in Example 1.

The measured electro-optical parameters for the prepared film comprising the nanocapsules and the binder are given in the following Table.

**Electro-optical parameters**

| | |
|---|---|
| Capsule content | 2.10% |
| V₁₀ | 15 V |
| Max. transmission | 1.25% |

### Example 5

LC mixture B-2 (2.0 g), ethylene dimethacrylate (0.66 g), 2-hydroxy ethylmethacrylate (0.075 g), methyl methacrylate (0.175 g) and hexadecane (0.10 g) are weighed into a 250 ml tall beaker.

This mixture is treated and investigated as described above in Example 1.

The obtained capsules have an average size of 148 nm, as determined by DLS (Zetasizer) analysis.

The obtained nanocapsules exhibit favourable physical and electro-optical characteristics and show suitable switching behaviour in response to an applied voltage.

A composite system and a film comprising the obtained capsules and the binder are prepared as described above in Example 1.

The measured electro-optical parameters for the prepared film comprising the nanocapsules and the binder are given in the following Table.

**Electro-optical parameters**

| | |
|---|---|
| Capsule content | 9.8% |
| V₁₀ | 35 V |
| Max transmission | 1.25% |
| tₒₙ (ms) | 3.8 |
| t_{off} (ms) | 4.5 |

### Example 6

LC mixture B-3 (1.0 g), ethylene dimethacrylate (0.34 g), 2-hydroxy ethylmethacrylate (0.07 g) and hexadecane (0.25 g) are weighed into a 250 ml tall beaker.

This mixture is treated and investigated as described above in Example 1.

The obtained capsules have an average size of 145 nm, as determined by DLS (Zetasizer) analysis.

The obtained nanocapsules exhibit favourable physical and electro-optical characteristics and show suitable switching behaviour in response to an applied voltage.

A composite system and a film comprising the obtained capsules and the binder are prepared as described above in Example 1.

The measured electro-optical parameters for the prepared film comprising the nanocapsules and the binder are given in the following Table.

**Electro-optical parameters**

| | |
|---|---|
| Capsule content | 6.28% |
| V₁₀ | 15 V |
| Max. transmission | 3.6% |
| tₒₙ (ms) | 3.8 |
| t_{off} (ms) | 4.5 |

### Example 7

LC mixture B-4 is treated as described above in Example 2 to prepare nanocapsules, a composite system with binder and a coated film.

### Example 8

LC mixture B-5 is treated as described above in Example 2 to prepare nanocapsules, a composite system with binder and a coated film.

### Example 9

LC mixture B-6 is treated as described above in Example 2 to prepare nanocapsules, a composite system with binder and a coated film.

### Example 10 (not according to the invention)

LC mixture B-7 is treated as described above in Example 2 to prepare nanocapsules, a composite system with binder and a coated film.

### Example 11

LC mixture B-1 (2.00 g), 1,4-pentanediol (102 mg), ethylene dimethacrylate (658 mg), 2-hydroxyethyl methacrylate (77 mg) and methyl methacrylate (162 mg) are weighed into a 250 ml tall beaker.

Brij L23 (100 mg) is weighed into a 250 ml conical flask and water (100 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (20 mg) is heated to 70°C for four hours. The reaction mixture is cooled, filtered, and then size analysis of the material is carried out by Zetasizer instrument.

The obtained capsules have an average size of 180 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1. The prepared film has a thickness of 4.6 µm.

The measured electro-optical parameter V₅₀, i.e. the mid-grey voltage for 50% relative contrast, is 55 V.

The prepared sample shows favourable performance at 24°C, 40°C and 60°C, exhibiting suitable temperature dependence and stability.

### Example 12

LC mixture B-1 (1.00 g), 1,4-pentanediol (175 mg), ethylene dimethacrylate (300 mg), 2-hydroxyethyl methacrylate (40 mg) and methyl methacrylate (100 mg) are weighed into a 250 ml tall beaker.

Brij L23 (50 mg) is weighed into a 250 ml conical flask and water (150 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for ten minutes.

The mixture is charged into a flask and fitted with a condenser, and after adding 2,2'-azobis(2-amidinopropane) dihydrochloride (10 mg) is heated to 70°C for four hours. The reaction mixture is cooled, filtered, and then size analysis of the material is carried out by Zetasizer instrument.

The obtained capsules have an average size of 175 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1. The sample shows in particular favourable temperature dependence.

### Example 13

LC mixture B-8 (1.99 g), hexadecane (101 mg), ethylene dimethacrylate (657 mg), 2-hydroxyethyl methacrylate (74 mg) and methyl methacrylate (170 mg) are weighed into a 250 ml tall beaker.

Brij L23 (300 mg) is weighed into a 250 ml conical flask and water (100 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (AAPH) (20 mg) is heated to 70°C for four hours. The reaction mixture is cooled, filtered, and then size analysis of the material is carried out by Zetasizer instrument.

The obtained capsules have an average size of 132 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.
The obtained nanocapsules exhibit favourable physical and electro-optical characteristics and show suitable switching behaviour in response to an applied voltage.

A composite system and a film comprising the obtained capsules and the binder are prepared analogous to Example 1. The prepared film has a thickness of 4.2 µm.

The measured electro-optical parameter V₅₀ is 33 V, and the measured electro-optical parameter V₉₀ is 66 V.

### Example 14

LC mixture B-1 (1.00 g), hexadecane (175 mg), ethylene glycol dimethacrylate (300 mg), 2-hydroxyethyl methacrylate (40 mg) and methyl methacrylate (100 mg) are weighed into a 250 ml tall beaker.

Brij L23 (50 mg) is weighed into a 250 ml conical flask and water (100 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (AAPH) (10 mg) is heated to 70°C for four hours. The reaction mixture is cooled, filtered, and then size analysis of the material is carried out by Zetasizer instrument.

The obtained capsules have an average size of 199 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1. The prepared film has a thickness of 5.3 µm.

The measured electro-optical parameter V₅₀ is 19 V, and the measured electro-optical parameter V₉₀ is 42 V.

### Example 15

LC mixture B-1 is treated as described above in Example 14 to prepare nanocapsules, a composite system with binder and a coated film, where instead of hexadecane 1,4-pentanediol is used.

### Example 16

LC mixture B-8 is treated analogous to B-1 as described above in Example 14.

### Example 17

LC mixture B-8 (2.01 g), hexadecane (97 mg), ethylene dimethacrylate (645 mg), 2-hydroxyethyl methacrylate (166 mg), 1,1,1,3,3,3-hexafluoroisopropyl acrylate (23mg) and methyl methacrylate (67 mg) are weighed into a 250 ml tall beaker.

Brij L23 (150 mg) is weighed into a 250 ml conical flask and water (100 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (AAPH) (20 mg) is heated to 70°C for four hours. The reaction mixture is cooled, filtered, and then size analysis of the material is carried out by Zetasizer instrument.

The obtained capsules have an average size of 176 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1. The prepared film has a thickness of 4.2 µm.

The measured electro-optical parameter V₅₀ is 48 V, and the measured electro-optical parameter V₉₀ is 82 V.

### Example 18

LC mixture B-8 (0.99 g), hexadecane (251 mg), stearylmethacrylate (74 mg) and 1,1-dihydroperfluoropropyl acrylate (118 mg) are weighed into a 250 ml tall beaker.

Brij L23 (301 mg) is weighed into a 250 ml conical flask and water (100 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is ultra-sonicated on a Branson sonifier W450 at 50% amplitude for a total of six minutes.

The mixture is charged into a flask and fitted with a condenser, and after adding 2,2'-azobis(2-amidinopropane) dihydrochloride (AAPH) (10 mg) is heated to 70°C for four hours. The reaction mixture is cooled, filtered, and then size analysis of the material is carried out by Zetasizer instrument.

The obtained capsules have an average size of 191 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1.

### Example 19

LC mixture B-8 (2.01 g), 2,2,3,3,3-pentafluoropropylacrylate (117 mg), ethylene dimethacrylate (663 mg), 2-hydroxyethyl methacrylate (81 mg) and methyl methacrylate (167 mg) are weighed into a 250 ml tall beaker.

Brij L23 (100 mg) is weighed into a 250 ml conical flask and water (100 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (AAPH) (20 mg) is heated to 70°C for four hours. The reaction mixture is cooled, filtered, and then size analysis of the material is carried out by Zetasizer instrument.

The obtained capsules have an average size of 191 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1. The prepared film has a thickness of 5.2 µm.

The measured electro-optical parameter V₅₀ is 80 V, and the measured electro-optical parameter V₉₀ is 132 V.

### Example 20

LC mixture B-8 (2.00 g), 2,2,3,3,4,4,4-heptafluorobutylacrylate (117 mg), ethylene dimethacrylate (659 mg), 2-hydroxyethyl methacrylate (79 mg) and methyl methacrylate (170 mg) are weighed into a 250 ml tall beaker.

Brij L23 (100 mg) is weighed into a 250 ml conical flask and water (100 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (AAPH) (20 mg) is heated to 70°C for four hours. The reaction mixture is cooled, filtered, and then size analysis of the material is carried out by Zetasizer instrument.

The obtained capsules have an average size of 147 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1. The prepared film has a thickness of 4.9 µm.

The measured electro-optical parameter V₅₀ is 77.5 V, and the measured electro-optical parameter V₉₀ is 130 V.

### Example 21

LC mixture B-8 (2.01 g), 1H,1H,2H,2H-perfluorodecylacrylate (113 mg), ethylene dimethacrylate (657 mg), 2-hydroxyethyl methacrylate (75 mg) and methyl methacrylate (171 mg) are weighed into a 250 ml tall beaker.

Brij L23 (100 mg) is weighed into a 250 ml conical flask and water (100 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (AAPH) (20 mg) is heated to 70°C for four hours. The reaction mixture is cooled, filtered, and then size analysis of the material is carried out by Zetasizer instrument.

The obtained capsules have an average size of 188 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1. The prepared film has a thickness of 5.3 µm.

The measured electro-optical parameter V₅₀ is 75 V, and the measured electro-optical parameter V₉₀ is 115 V.

### Example 22

LC mixture B-8 (1.00 g), pentadecafluorooctanol (111 mg), ethylene dimethacrylate (340 mg) and 2-hydroxyethyl methacrylate (73 mg) are weighed into a 250 ml tall beaker.

Brij L23 (75 mg) is weighed into a 250 ml conical flask and water (70 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (AAPH) (20 mg) is heated to 70°C for four hours. The reaction mixture is cooled, filtered, and then size analysis of the material is carried out by Zetasizer instrument.

The obtained capsules have an average size of 191 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1. The prepared film has a thickness of 3.7 µm.

The measured electro-optical parameter V₅₀ is 23 V, and the measured electro-optical parameter V₉₀ is 53 V.

### Example 23

LC mixture B-8 (1.01 g), 3-tris(trimethylsiloxy) silylpropylmethacrylate (250 mg), ethylene dimethacrylate (300 mg), 2-hydroxyethyl methacrylate (40 mg) and methyl methacrylate (100 mg) are weighed into a 250 ml tall beaker.

Brij L23 (100 mg) is weighed into a 250 ml conical flask and water (75 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (AAPH) (20 mg) is heated to 70°C for four hours. The reaction mixture is cooled, filtered, and then size analysis of the material is carried out by Zetasizer instrument.

The obtained capsules have an average size of 124 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1.

### Example 24

LC mixture B-8 (2.00 g), trimethylsilyl trifluoroacetate (100 mg), ethylene dimethacrylate (660 mg), 2-hydroxyethyl methacrylate (71 mg) and methyl methacrylate (172 mg) are weighed into a 250 ml tall beaker.

Brij L23 (300 mg) is weighed into a 250 ml conical flask and water (100 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (AAPH) (20 mg) is heated to 70°C for four hours. The reaction mixture is cooled, filtered, and then size analysis of the material is carried out by Zetasizer instrument.

The obtained capsules have an average size of 271 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1.

### Example 25

LC mixture B-8 (2.00 g), tris(trimethylsiloxy)silylpropylmethacrylate (101 mg), ethylene dimethacrylate (659 mg), 2-hydroxyethyl methacrylate (78 mg) and methyl methacrylate (165 mg) are weighed into a 250 ml tall beaker.

Brij L23 (100 mg) is weighed into a 250 ml conical flask and water (100 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (AAPH) (20 mg) is heated to 70°C for four hours. The reaction mixture is cooled, filtered, and then size analysis of the material is carried out by Zetasizer instrument.

The obtained capsules have an average size of 214 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1. The prepared film has a thickness of 4.5 µm.

The measured electro-optical parameter V₅₀ is 57.5 V, and the measured electro-optical parameter V₉₀ is 95 V.

### Example 26

LC mixture B-8 (1.00 g), stearylmethacrylate (101 mg), ethylene dimethacrylate (201 mg), 2-hydroxyethyl methacrylate (42 mg) and methyl methacrylate (105 mg) are weighed into a 250 ml tall beaker.

Brij L23 (50 mg) is weighed into a 250 ml conical flask and water (150 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (AAPH) (10 mg) is heated to 70°C for four hours. The reaction mixture is cooled, filtered, and then size analysis of the material is carried out by Zetasizer instrument.

The obtained capsules have an average size of 208 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1. The prepared film has a thickness of 3.1 µm.

The measured electro-optical parameter V₅₀ is 25 V, and the measured electro-optical parameter V₉₀ is 45.5 V.

### Example 27

LC mixture B-8 (1.00 g), methyl octanoate (73 mg), ethylene dimethacrylate (291 mg), 2-hydroxyethyl methacrylate (46 mg) and methyl methacrylate (98 mg) are weighed into a 250 ml tall beaker.

Brij L23 (50 mg) is weighed into a 250 ml conical flask and water (150 g) is added. This mixture is then sonicated for 5 to 10 minutes.

The Brij aqueous surfactant solution is poured directly into the beaker containing the organics. The mixture is turrax mixed for 10 minutes at 10,000 rpm. Once turrax mixing is complete, the crude emulsion is circulated through a high-pressure homogenizer at 30,000 psi for eight minutes.

The mixture is charged into a flask and fitted with a condenser, and after adding 2,2'-azobis(2-amidinopropane) dihydrochloride (AAPH) (10 mg) is heated to 70°C for four hours. The reaction mixture is cooled, filtered, and then size analysis of the material is carried out by Zetasizer instrument.

The obtained capsules have an average size of 189 nm, as determined by dynamic light scattering (DLS) analysis (Zetasizer).

One part of the obtained sample is further used as is.

Another part of the sample is concentrated before further use. This is carried out by centrifuge. A centrifuge tube is filled with the mixture and centrifuged at 6,500 rpm for 10 minutes, the supernatant is collected and put in a new tube and centrifuged at 15,000 rpm for 20 minutes. The resulting pellet is re-dispersed in 1 ml of the supernatant and sampled for testing.

The obtained nanocapsules exhibit favourable physical and electro-optical characteristics and show suitable switching behaviour in response to an applied voltage.

A composite system and a film comprising the obtained capsules and the binder are prepared analogous to Example 1. The prepared film has a thickness of 4.3 µm.

The measured electro-optical parameter V₅₀ is 33 V, and the measured electro-optical parameter V₉₀ is 64 V.

## Claims

1. A composition for nanoencapsulation, comprising
(i) a mesogenic medium which comprises one or more compounds of formula I
R-A-Y-A'-R' I
wherein
R and R' denote, independently of one another, a group selected from F, CF₃, OCF₃, CN, and straight-chain or branched alkyl or alkoxy having 1 to 15 carbon atoms or straight-chain or branched alkenyl having 2 to 15 carbon atoms which is unsubstituted, monosubstituted by CN or CF₃ or mono- or polysubstituted by halogen and wherein one or more CH₂ groups may be, in each case independently of one another, replaced by -O-, -S-, -CO-, -COO-, -OCO-, -OCOO- or -C≡C- in such a manner that oxygen atoms are not linked directly to one another,
A and A' denote, independently of one another, a group selected from -Cyc-, -Phe-, -Cyc-Cyc-, -Cyc-Phe-, -Phe-Phe-, -Cyc-Cyc-Cyc-, -Cyc-Cyc-Phe-, -Cyc-Phe-Cyc-, -Cyc-Phe-Phe-, -Phe-Cyc-Phe-, -Phe-Phe-Phe- and the respective mirror images thereof,
wherein Cyc is trans-1,4-cyclohexylene, in which one or two non-adjacent CH₂ groups may be replaced by O, and wherein Phe is 1,4-phenylene, in which one or two non-adjacent CH groups may be replaced by N and which may be substituted by one or two F, and
Y denotes single bond, -COO-, -CH₂CH₂-, -CF₂CF₂-, -CH₂O-, -CF₂O-, -CH=CH-, -CF=CF- or -C≡C-,
(ii) one or more polymerizable compounds, and
(iii) one or more surfactants,
**characterized in that** one or more compounds of formula I are selected from the compounds of formulae Ia, Ib and Ic 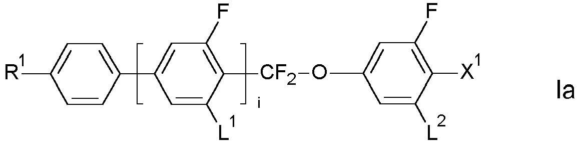 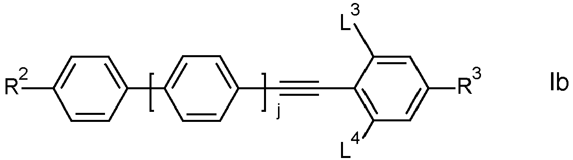 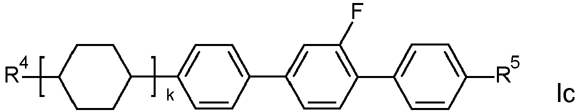 wherein
R¹, R², R³, R⁴ and R⁵ denote, independently of one another, straight-chain or branched alkyl or alkoxy having 1 to 15 carbon atoms or straight-chain or branched alkenyl having 2 to 15 carbon atoms which is unsubstituted, monosubstituted by CN or CF₃ or mono- or polysubstituted by halogen and wherein one or more CH₂ groups may be, in each case independently of one another, replaced by -O-, -S-, -CO-, -COO-, -OCO-, -OCOO- or -C≡C- in such a manner that oxygen atoms are not linked directly to one another,
X¹ denotes F, CF₃, OCF₃ or CN,
L¹, L², L³ and L⁴ are, independently of one another, H or F,
i is 1 or 2, and
j and k are, independently of one another, 0 or 1.

2. The composition according to claim 1, which further comprises one or more organic solvents.

3. The composition according to claim 1 or 2, wherein the one or more polymerizable compounds (ii) as set forth in claim 1 comprise polymerizable groups selected from one, two or more acrylate, methacrylate and vinyl acetate groups.

4. The composition according to one or more of claims 1 to 3, wherein the one or more surfactants (iii) as set forth in claim 1 are selected from nonionic surfactants.

5. The composition according to one or more of claims 1 to 4, wherein the one or more surfactants are provided as aqueous surfactant(s).

6. The composition according to one or more of claims 1 to 5, wherein the composition is dispersed in an aqueous phase.

7. The composition according to one or more of claims 1 to 6, which is provided as nanodroplets dispersed in an aqueous phase.

8. Use of the composition according to one or more of claims 1 to 7 for the preparation of nanocapsules.

9. Nanocapsules, which respectively comprise
a polymeric shell, and
a core containing a mesogenic medium which comprises one or more compounds of formula I as set forth in claim 1 .

10. Nanocapsules obtained by or obtainable from polymerization of the composition according to one or more of claims 1 to 7.

11. The nanocapsules according to claim 9 or 10, wherein the mesogenic medium further comprises one or more chiral dopants and/or one or more pleochroic dyes.

12. A method for preparing nanocapsules, wherein the method comprises
(a) providing an aqueous mixture which comprises the composition according to one or more of claims 1 to 5,
(b) agitating the provided aqueous mixture to obtain nanodroplets comprising the composition according to one or more of claims 1 to 5 dispersed in an aqueous phase,
(c) subsequent to step (b) polymerizing the one or more polymerizable compounds as set forth in claim 1 or 3 to obtain nanocapsules each comprising a polymeric shell and a core which contains the mesogenic medium as set forth in claim 1 or 5,
and optionally
(d) depleting, removing or exchanging the aqueous phase.

13. The method according to claim 12, wherein step (b) is carried out using a high-pressure homogenizer.

14. Nanocapsules obtained by or obtainable from carrying out the method according to claim 12 or 13.

15. The nanocapsules according to one or more of claims 9 to 11 and 14, wherein the average size of the nanocapsules is not greater than 400 nm, preferably not greater than 250 nm.

16. The nanocapsules according to one or more of claims 9 to 11, 14 and 15, which are dried or dispersed in an aqueous phase.

17. A composite system, comprising
the nanocapsules according to one or more of claims 9 to 11 and 14 to 16, and
one or more binders.

18. The composite system according to claim 17, wherein the one or more binders comprise polyvinyl alcohol.

19. Use of the nanocapsules according to one or more of claims 9 to 11 and 14 to 16 or the composite system according to claim 17 or 18 in a light-modulation element or an ectro-optical device.

20. An electro-optical device, comprising the nanocapsules according to one or more of claims 9 to 11 and 14 to 16 or the composite system according to claim 17 or 18.

## Patentansprüche

1. Zusammensetzung zur Nanoverkapselung, enthaltend
(i) ein mesogenes Medium, das eine oder mehrere Verbindungen der Formel I
R-A-Y-A'-R' I
enthält, bei der
R und R' unabhängig voneinander eine Gruppe bedeuten, die ausgewählt ist aus F, CF₃, OCF₃, CN und geradkettigem oder verzweigtem Alkyl oder Alkoxy mit 1 bis 15 Kohlenstoffatomen oder geradkettigem oder verzweigtem Alkenyl mit 2 bis 15 Kohlenstoffatomen, das unsubstituiert, einfach durch CN oder CF₃ substituiert oder ein- oder mehrfach durch Halogen substituiert ist und bei dem eine oder mehrere CH₂-Gruppen jeweils unabhängig voneinander so durch -O-, -S-, -CO-, -COO-, -OCO-, -OCOO- oder -C≡C- ersetzt sein können, dass Sauerstoffatome nicht direkt miteinander verknüpft sind,
A und A' unabhängig voneinander eine Gruppe bedeuten, die ausgewählt ist aus -Cyc-, -Phe-, -Cyc-Cyc-, -Cyc-Phe-, -Phe-Phe-, -Cyc-Cyc-Cyc-, -Cyc-Cyc-Phe-, -Cyc-Phe-Cyc-, -Cyc-Phe-Phe-, -Phe-Cyc-Phe-, -Phe-Phe-Phe- und den jeweiligen Spiegelbildern davon,
bei denen Cyc trans-1,4-Cyclohexylen ist, worin eine oder zwei nicht benachbarte CH₂-Gruppen durch O ersetzt sein können,
und bei denen Phe 1,4-Phenylen ist, worin eine oder zwei nicht benachbarte CH-Gruppen durch N ersetzt sein können und das durch ein oder zwei F substituiert sein kann, und
Y Einfachbindung, -COO-, -CH₂CH₂-, -CF₂CF₂-, -CH₂O-, -CF₂O-, -CH=CH-, -CF=CF- oder -C≡C- bedeutet,
(ii) eine oder mehrere polymerisierbare Verbindungen, und
(iii) ein oder mehrere Tenside,
**dadurch gekennzeichnet, dass** eine oder mehrere Verbindungen der Formel I ausgewählt sind aus den Verbindungen der Formeln Ia, Ib und Ic 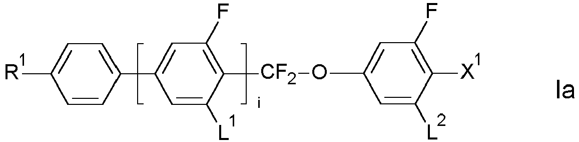 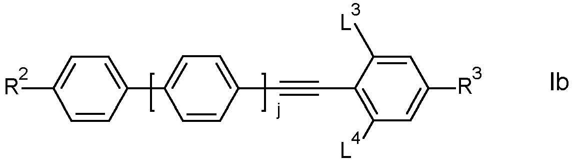 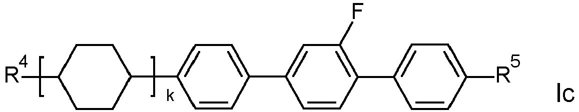 bei denen
R¹, R², R³, R⁴ und R⁵ unabhängig voneinander geradkettiges oder verzweigtes Alkyl oder Alkoxy mit 1 bis 15 Kohlenstoffatomen oder geradkettiges oder verzweigtes Alkenyl mit 2 bis15 Kohlenstoffatomen bedeuten, das unsubstituiert, einfach durch CN oder CF₃ substituiert oder ein- oder mehrfach durch Halogen substituiert ist und bei dem eine oder mehrere CH₂-Gruppen jeweils unabhängig voneinander so durch -O-, -S-, -CO-, -COO-, -OCO-, -OCOO- oder -C≡C- ersetzt sein können, dass Sauerstoffatome nicht direkt miteinander verknüpft sind,
X¹ F, CF₃, OCF₃ oder N bedeutet,
L¹, L², L³ und L⁴ unabhängig voneinander H oder F sind,
i 1 oder 2 ist, und
j und k unabhängig voneinander 0 oder 1 sind.

2. Zusammensetzung nach Anspruch 1, die ferner ein oder mehrere organische Lösungsmittel enthält.

3. Zusammensetzung nach Anspruch 1 oder 2, bei der die eine oder mehreren polymerisierbaren Verbindungen (ii) wie in Anspruch 1 dargelegt polymerisierbare Gruppen enthalten, die ausgewählt sind aus einer, zwei oder mehr Acrylat-, Methacrylat- und Vinylacetatgruppen.

4. Zusammensetzung nach einem oder mehreren der Ansprüche 1 bis 3, bei der das eine oder die mehreren Tenside (iii) wie in Anspruch 1 dargelegt aus nonionischen Tensiden ausgewählt sind.

5. Zusammensetzung nach einem oder mehreren der Ansprüche 1 bis 4, bei der das eine oder die mehreren Tenside als wässrige(s) Tensid(e) bereitgestellt werden.

6. Zusammensetzung nach einem oder mehreren der Ansprüche 1 bis 5, bei der die Zusammensetzung in einer wässrigen Phase dispergiert ist.

7. Zusammensetzung nach einem oder mehreren der Ansprüche 1 bis 6, die als in einer wässrigen Phase dispergierte Nanotröpfchen bereitgestellt wird.

8. Verwendung der Zusammensetzung nach einem oder mehreren der Ansprüche 1 bis 7 für die Herstellung von Nanokapseln.

9. Nanotröpfchen, die jeweils
eine polymere Schale und
einen Kern enthaltend ein mesogenes Medium, das eine oder mehrere Verbindungen der Formel I wie in Anspruch 1 dargelegt enthält, enthalten.

10. Nanokapseln, die erhalten wurden oder erhältlich sind aus der Polymerisation der Zusammensetzung nach einem oder mehreren der Ansprüche 1 bis 7.

11. Nanokapseln nach Anspruch 9 oder 10, bei denen das mesogene Medium ferner einen oder mehrere chirale Dotierstoffe und/oder einen oder mehrere pleochroitische Farbstoffe enthält.

12. Verfahren zur Herstellung von Nanokapseln, bei dem das Verfahren
(a) Bereitstellen eines wässrigen Gemisches, das die Zusammensetzung nach einem oder mehreren der Ansprüche 1 bis 5 enthält,
(b) Rühren des bereitgestellten wässrigen Gemisches, um Nanotröpfchen, welche die Zusammensetzung nach einem oder mehreren der Ansprüche 1 bis 5 enthalten, in einer wässrigen Phase dispergiert zu erhalten,
(c) anschließend an Schritt (b) Polymerisieren der einen oder mehreren polymerisierbaren Verbindungen wie in Anspruch 1 oder 3 dargelegt, um Nanokapseln zu erhalten, die jeweils eine polymere Schale und einen Kern, der das mesogene Medium wie in Anspruch 1 oder 5 dargelegt enthält, enthalten,
und gegebenenfalls
(d) Abreichern, Entfernen oder Austauschen der wässrigen Phase
umfasst.

13. Verfahren nach Anspruch 12, bei dem Schritt (b) unter Verwendung eines Hochdruckhomogenisators durchgeführt wird.

14. Nanokapseln, die erhalten wurden oder erhältlich sind aus der Durchführung des Verfahrens nach Anspruch 12 oder 13.

15. Nanokapseln nach einem oder mehreren der Ansprüche 9 bis 11 und 14, bei denen durchschnittliche Größe der Nanokapseln nicht größer als 400 nm, vorzugsweise nicht größer als 250 nm ist.

16. Nanokapseln nach einem oder mehreren der Ansprüche 9 bis 11, 14 und 15, die getrocknet oder in einer wässrigen Phase dispergiert sind.

17. Verbundsystem, umfassend
die Nanokapseln nach einem oder mehreren der Ansprüche 9 bis 11 und 14 bis 16, und
ein oder mehrere Bindemittel.

18. Verbundsystem nach Anspruch 17, bei dem das eine oder die mehreren Bindemittel Polyvinylalkohol umfassen.

19. Verwendung der Nanokapseln nach einem oder mehreren der Ansprüche 9 bis 11 und 14 bis 16 oder des Verbundsystems nach Anspruch 17 oder 18 in einem Lichtmodulationselement oder einer elektrooptischen Vorrichtung.

20. Elektrooptische Vorrichtung, enthaltend die Nanokapseln nach einem oder mehreren der Ansprüche 9 bis 11 und 14 bis 16 oder das Verbundsystem nach Anspruch 17 oder 18.

## Revendications

1. Composition pour la nanoencapsulation, comprenant
(i) un milieu mésogène qui comprend un ou plusieurs composé(s) de la formule I
R-A-Y-A'-R' I
dans laquelle
R et R' représentent, de manière indépendante l'un de l'autre, un groupe qui est sélectionné parmi F, CF₃, OCF₃, CN, et alkyle ou alcoxy en chaîne droite ou ramifié qui comporte de 1 à 15 atome(s) de carbone ou alkényle en chaîne droite ou ramifié qui comporte de 2 à 15 atomes de carbone, lequel est non substitué, monosubstitué par CN ou par CF₃ ou mono- ou polysubstitué par halogène et où un ou plusieurs groupe(s) CH₂ peut/peuvent, dans chaque cas de manière indépendante les uns des autres, être remplacé(s) par -O-, -S-, -CO-, -COO-, -OCO-, -OCOO- ou -C≡C- de telle sorte que des atomes d'oxygène ne soient pas liés directement les uns aux autres,
A et A' représentent, de manière indépendante l'un de l'autre, un groupe qui est sélectionné parmi -Cyc-, -Phe-, -Cyc-Cyc-, -Cyc-Phe-, -Phe-Phe-, -Cyc-Cyc-Cyc-, -Cyc-Cyc-Phe-, -Cyc-Phe-Cyc-, -Cyc-Phe-Phe-, -Phe-Cyc-Phe-, -Phe-Phe-Phe- et leurs images miroir respectives,
où Cyc est trans-1,4-cyclohexylène, où un ou deux groupe(s) CH₂ non adjacents peut/peuvent être remplacé(s) par O, et où Phe est 1,4-phénylène, où un ou deux groupe(s) CH non adjacents peut/peuvent être remplacé(s) par N et lequel peut être substitué par un ou deux F, et
Y représente une liaison simple, -COO-, -CH₂CH₂-, -CF₂CF₂-, -CH₂O-, -CF₂O-, -CH=CH-, -CF=CF- ou -C≡C-,
(ii) un ou plusieurs composé(s) polymérisable(s), et
(iii) un ou plusieurs agent(s) tensioactif(s),
**caractérisée en ce qu'**un ou plusieurs composé(s) de la formule I est/sont sélectionné(s) parmi les composés des formules Ia, Ib et Ic 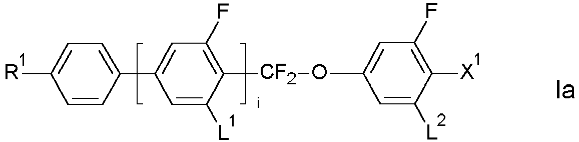 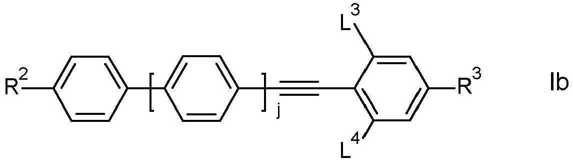 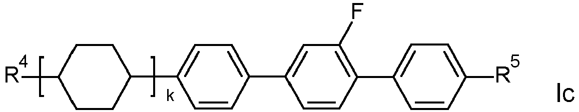 dans lesquelles
R¹, R², R³, R⁴ et R⁵ représentent, de manière indépendante les uns des autres, alkyle ou alcoxy en chaîne droite ou ramifié qui comporte de 1 à 15 atome(s) de carbone ou alkényle en chaîne droite ou ramifié qui comporte de 2 à 15 atomes de carbone, lequel est non substitué, mono-substitué par CN ou par CF₃ ou mono- ou polysubstitué par halogène et où un ou plusieurs groupes C(H)₂ peut/peuvent être, dans chaque cas de manière indépendante les uns des autres, remplacé(s) par -O-, -S-, -CO-, -COO-, -OCO-, -OCOO- ou -C≡C- de telle sorte que des atomes d'oxygène ne soient pas liés directement les uns aux autres,
X¹ représente F, CF₃, OCF₃ ou CN,
L¹, L², L³ et L⁴ sont, de manière indépendante les uns des autres, H ou F,
i est 1 ou 2, et
j et k sont, de manière indépendante l'un de l'autre, 0 ou 1.

2. Composition selon la revendication 1, laquelle comprend en outre un ou plusieurs solvant(s) organique(s).

3. Composition selon la revendication 1 ou 2, dans laquelle les un ou plusieurs composés polymérisables (ii) tels que mis en exergue selon la revendication 1 comprennent des groupes polymérisables qui sont sélectionnés parmi un, deux ou plus des groupes acrylate, méthacrylate et acétate de vinyle.

4. Composition selon une ou plusieurs des revendications 1 à 3, dans laquelle les un ou plusieurs agents tensioactifs (iii) tels que mis en exergue selon la revendication 1 sont sélectionnés parmi les agents tensioactifs non ioniques.

5. Composition selon une ou plusieurs des revendications 1 à 4, dans laquelle les un ou plusieurs agents tensioactifs sont fournis en tant qu'agent(s) tensioactif(s) aqueux.

6. Composition selon une ou plusieurs des revendications 1 à 5, dans laquelle la composition est dispersée dans une phase aqueuse.

7. Composition selon une ou plusieurs des revendications 1 à 6, laquelle est fournie en tant que nanogouttelettes qui sont dispersées dans une phase aqueuse.

8. Utilisation de la composition selon une ou plusieurs des revendications 1 à 7 pour la préparation de nanocapsules.

9. Nanocapsules, lesquelles comprennent respectivement :
une enveloppe polymérique, et
un noyau qui contient un milieu mésogène qui comprend un ou plusieurs composé(s) de la formule I tels que mis en exergue selon la revendication 1.

10. Nanocapsules obtenues par ou pouvant être obtenues à partir de la polymérisation de la composition selon une ou plusieurs des revendications 1 à 7.

11. Nanocapsules selon la revendication 9 ou 10, dans lesquelles le milieu mésogène comprend en outre un ou plusieurs dopant(s) chiral/chiraux et/ou un ou plusieurs colorant(s) pléochroïque(s).

12. Procédé pour préparer des nanocapsules, dans lequel le procédé comprend
(a) la fourniture d'un mélange aqueux qui comprend la composition selon une ou plusieurs des revendications 1 à 5,
(b) l'agitation du mélange aqueux fourni de manière à obtenir des nanogouttelettes qui comprennent la composition selon une ou plusieurs des revendications 1 à 5 dispersée dans une phase aqueuse,
(c) subséquemment à l'étape (b), la polymérisation des un ou plusieurs composés polymérisables tels que mis en exergue selon la revendication 1 ou 3 de manière à obtenir des nanocapsules dont chacune comprend une enveloppe polymérique et un noyau qui contient le milieu mésogéne tel que mis en exergue selon la revendication 1 ou 5,
et en option
(d) l'épuisement, l'enlèvement ou l'échange de la phase aqueuse.

13. Procédé selon la revendication 12, dans lequel l'étape (b) est mise en œuvre en utilisant un homogéniseur haute pression.

14. Nanocapsules obtenues par ou pouvant être obtenues à partir de la mise en œuvre du procédé selon la revendication 12 ou 13.

15. Nanocapsules selon une ou plusieurs des revendications 9 à 11 et 14, dans lesquelles la taille moyenne des nanocapsules n'est pas supérieure à 400 nm, de préférence, elle n'est pas supérieure à 250 nm.

16. Nanocapsules selon une ou plusieurs des revendications 9 à 11, 14 et 15, lesquelles sont séchées ou dispersées dans une phase aqueuse.

17. Système composite, comprenant
les nanocapsules selon une ou plusieurs des revendications 9 à 11 et 14 à 16, et
un ou plusieurs agent(s) de liaison.

18. Système composite selon la revendication 17, dans lequel les un ou plusieurs agents de liaison comprennent de l'alcool polyvinylique.

19. Utilisation des nanocapsules selon une ou plusieurs des revendications 9 à 11 et 14 à 16 ou du système composite selon la revendication 17 ou 18 dans un élément de modulation de la lumière ou dans un dispositif électro-optique.

20. Dispositif électro-optique, comprenant les nanocapsules selon une ou plusieurs des revendications 9 à 11 et 14 à 16 ou le système composite selon la revendication 17 ou 18.
